(19) Europäisches Patentamt
European Patent Office
Office européen des brevets

(11) EP 4 101 529 A1

(12) **EUROPÄISCHE PATENTANMELDUNG**

(43) Veröffentlichungstag:
**14.12.2022 Patentblatt 2022/50**

(21) Anmeldenummer: **21179043.1**

(22) Anmeldetag: **11.06.2021**

(51) Internationale Patentklassifikation (IPC):
***B01J 13/14*** *(2006.01)* ***B01J 13/22*** *(2006.01)*
***C11D 3/50*** *(2006.01)*

(52) Gemeinsame Patentklassifikation (CPC):
**B01J 13/14; B01J 13/22; C11D 3/505**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Henkel AG & Co. KGaA**
**40589 Düsseldorf (DE)**

(72) Erfinder:
- **BAUER, Andreas**
  **41564 Kaarst (DE)**
- **SCHIEDEL, Marc.Steffen**
  **40789 Monheim (DE)**
- **GERICK, Andreas**
  **41812 Erkelenz (DE)**
- **MATERNE, Manuela**
  **41564 Kaarst (DE)**
- **SMYREK, Hubert**
  **47804 Krefeld (DE)**
- **GIESEN, Christian**
  **41334 Nettetal (DE)**
- **MEIER, Claudia**
  **77839 Lichtenau (DE)**
- **HILDEBRAND, Jeanette**
  **77815 Bühl (DE)**
- **BIEDENBACH, Michael**
  **77704 Oberkirch (DE)**
- **KIND, Christian**
  **76532 Baden-Baden (DE)**

(74) Vertreter: **Viering, Jentschura & Partner mbB**
**Patent- und Rechtsanwälte**
**Hamborner Straße 53**
**40472 Düsseldorf (DE)**

(54) **MITTEL ENTHALTEND FARBNEUTRALE ABBAUBARE MIKROKAPSELN MIT PARFÜMZUSAMMENSETZUNG**

(57) Die Erfindung betrifft gemäß einem ersten Aspekt ein Mittel ausgewählt aus Wasch- und Reinigungsmitteln sowie kosmetischen Mitteln, enthaltend bioabbaubare Mikrokapseln umfassend ein Kernmaterial und eine Schale, wobei die Schale aus mindestens einer Barriereschicht und einer Stabilitätsschicht besteht, wobei die Barriereschicht das Kernmaterial umgibt, wobei die Stabilitätsschicht mindestens ein Biopolymer umfasst, und auf der äußeren Oberfläche der Barriereschicht angeordnet ist, wobei am Übergang von Barriereschicht zu Stabilitätsschicht ein Emulsionsstabilisator angeordnet ist und wobei das Kernmaterial mindestens eine Parfümzusammensetzung wie hierin beschrieben umfasst. Ferner betrifft die Erfindung die Verwendung dieser Mittel.

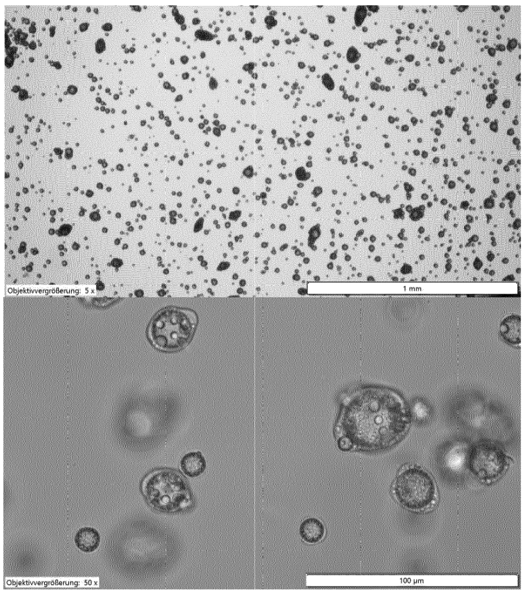


Fig 1A

EP 4 101 529 A1

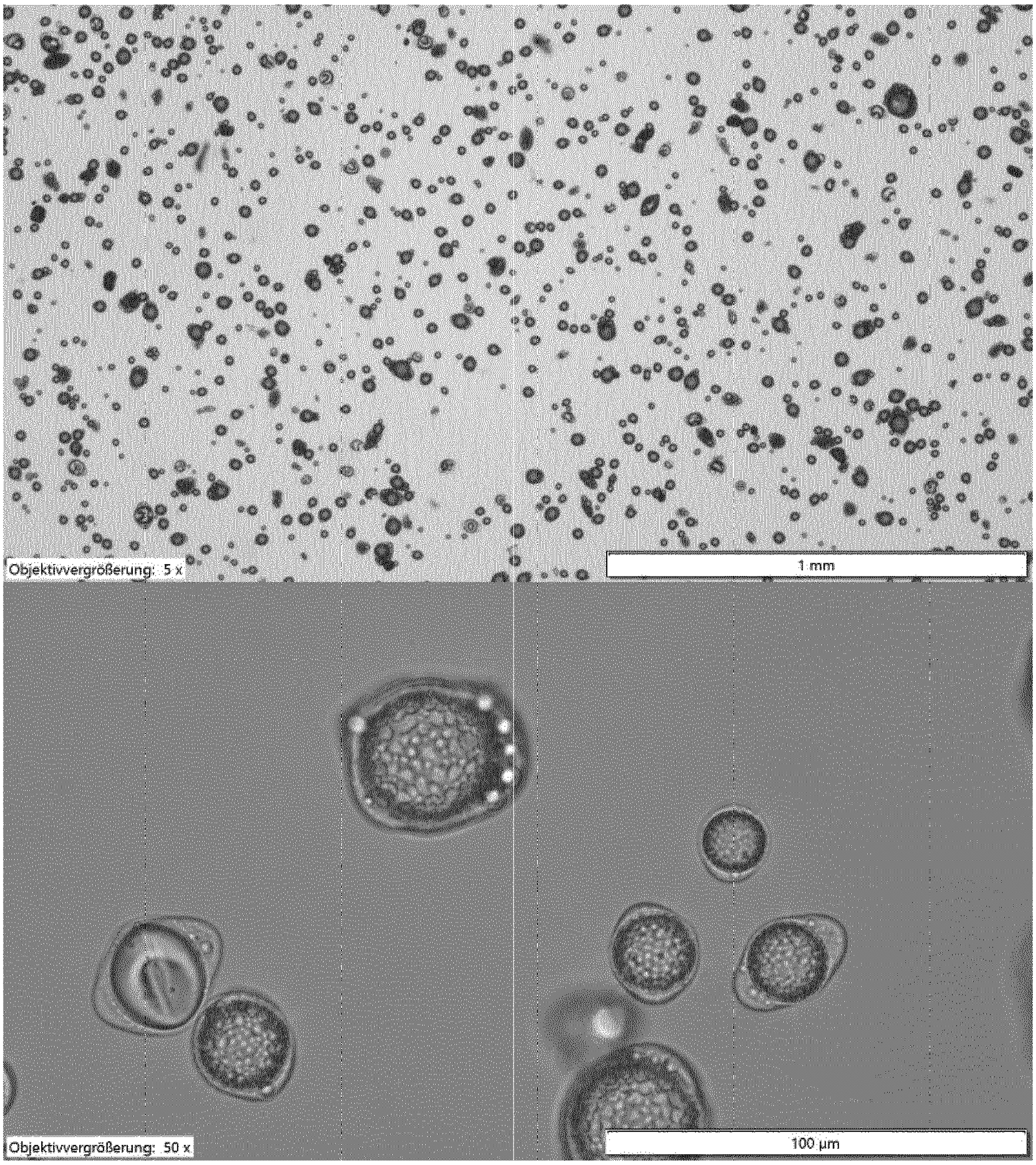


Fig 1B



(Forts. nächste Seite)

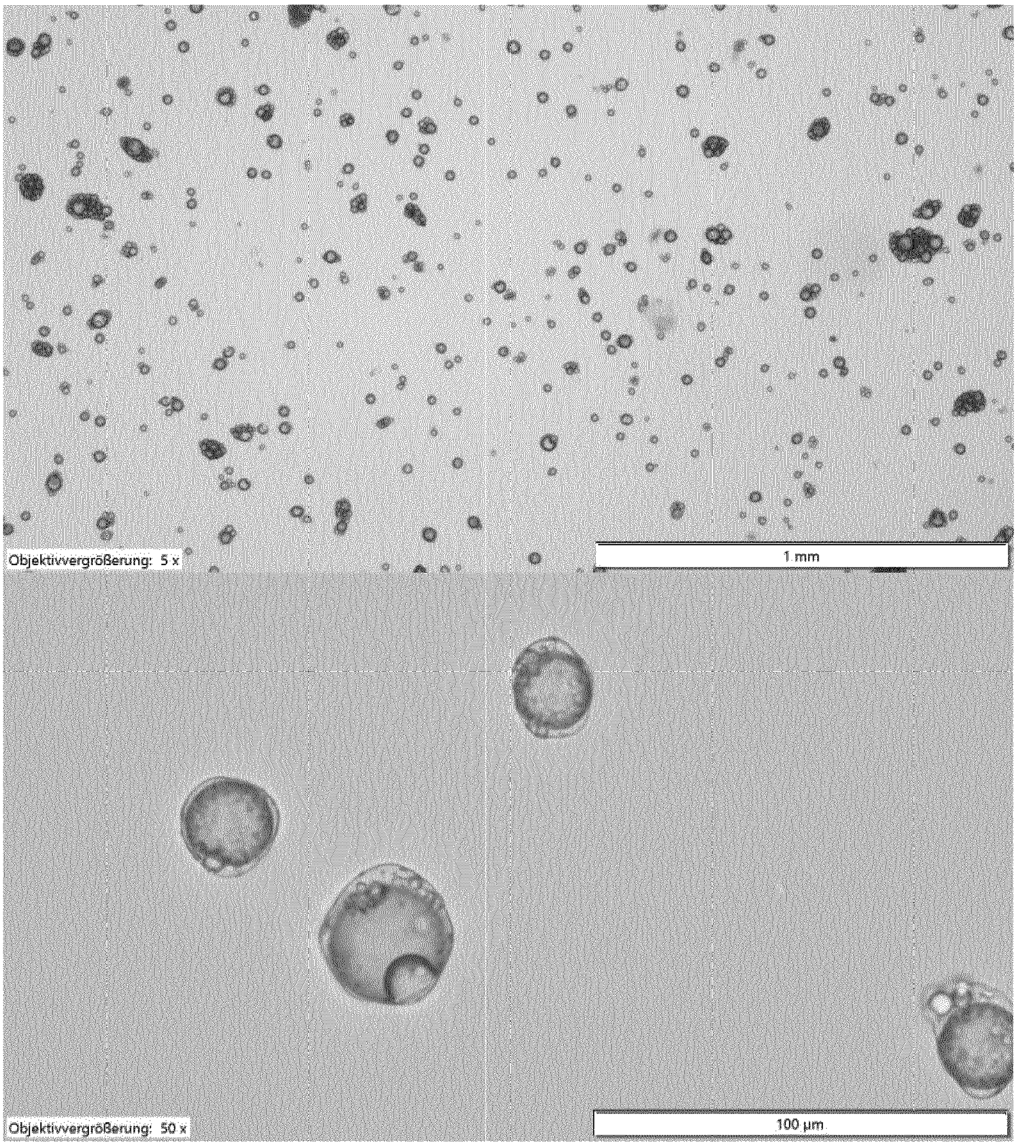


Fig 1C



(Forts. nächste Seite)

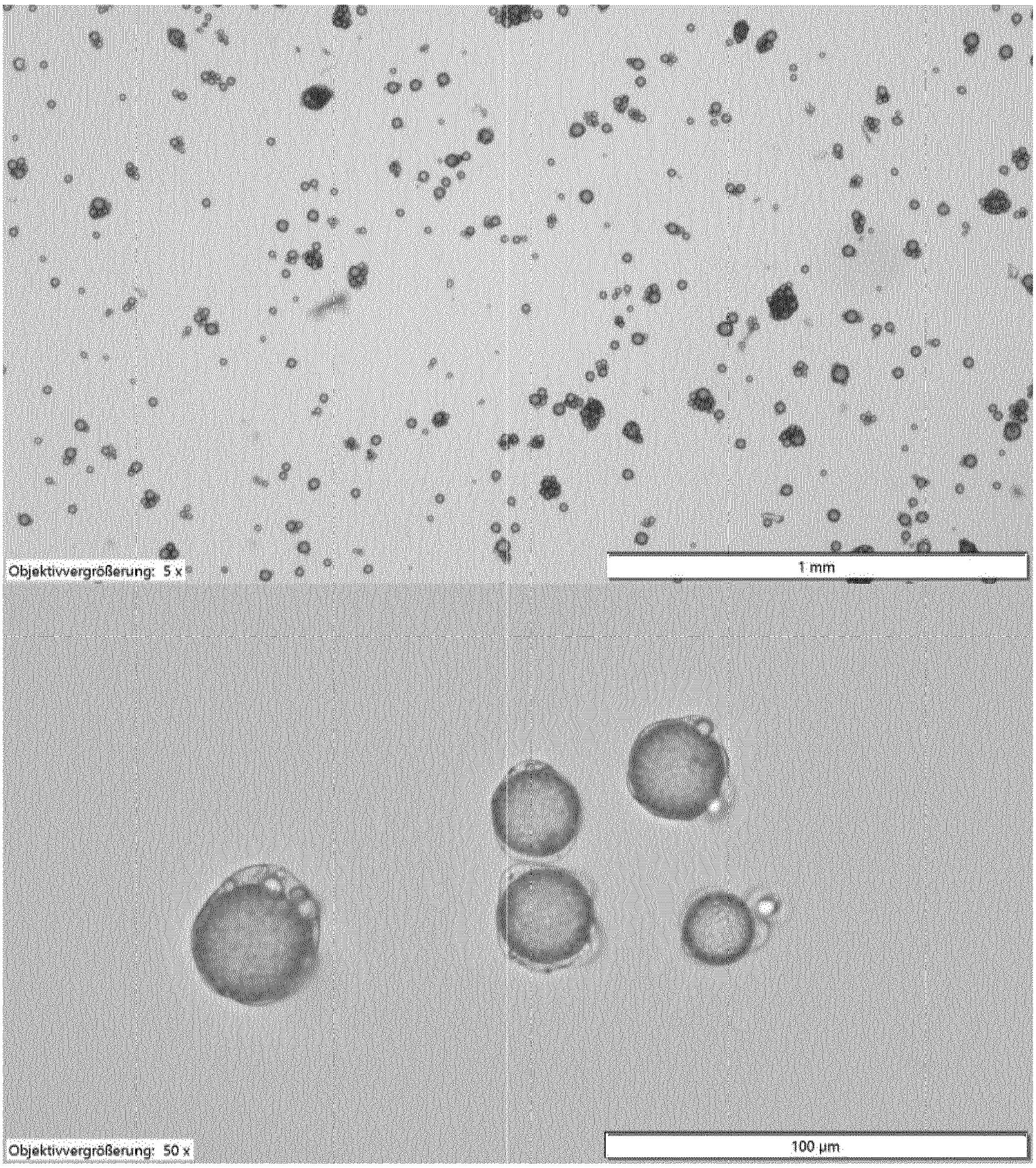


Fig 1D



(Forts. nächste Seite)

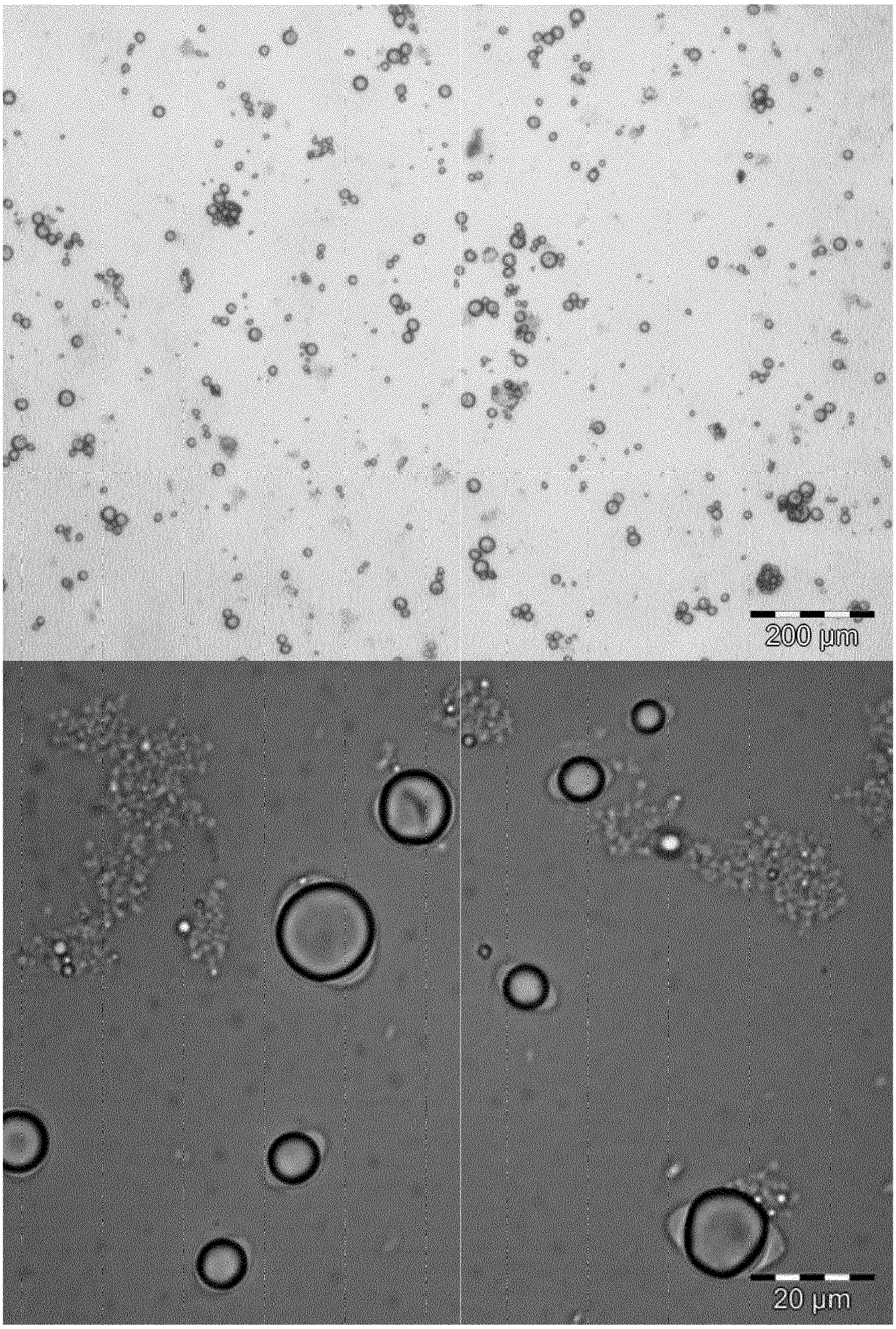


Fig 1E



(Forts. nächste Seite)

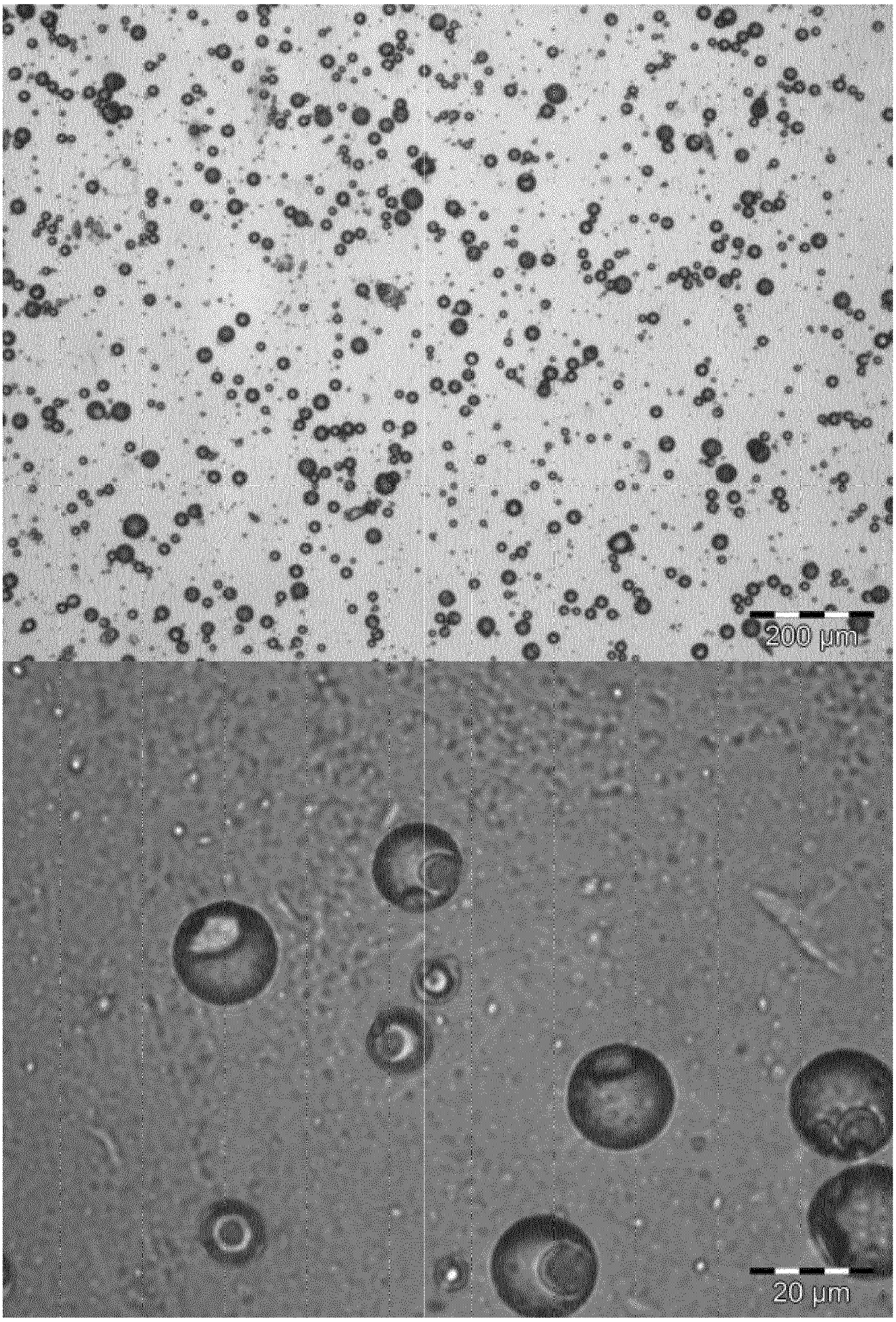


Fig 1F



(Forts. nächste Seite)

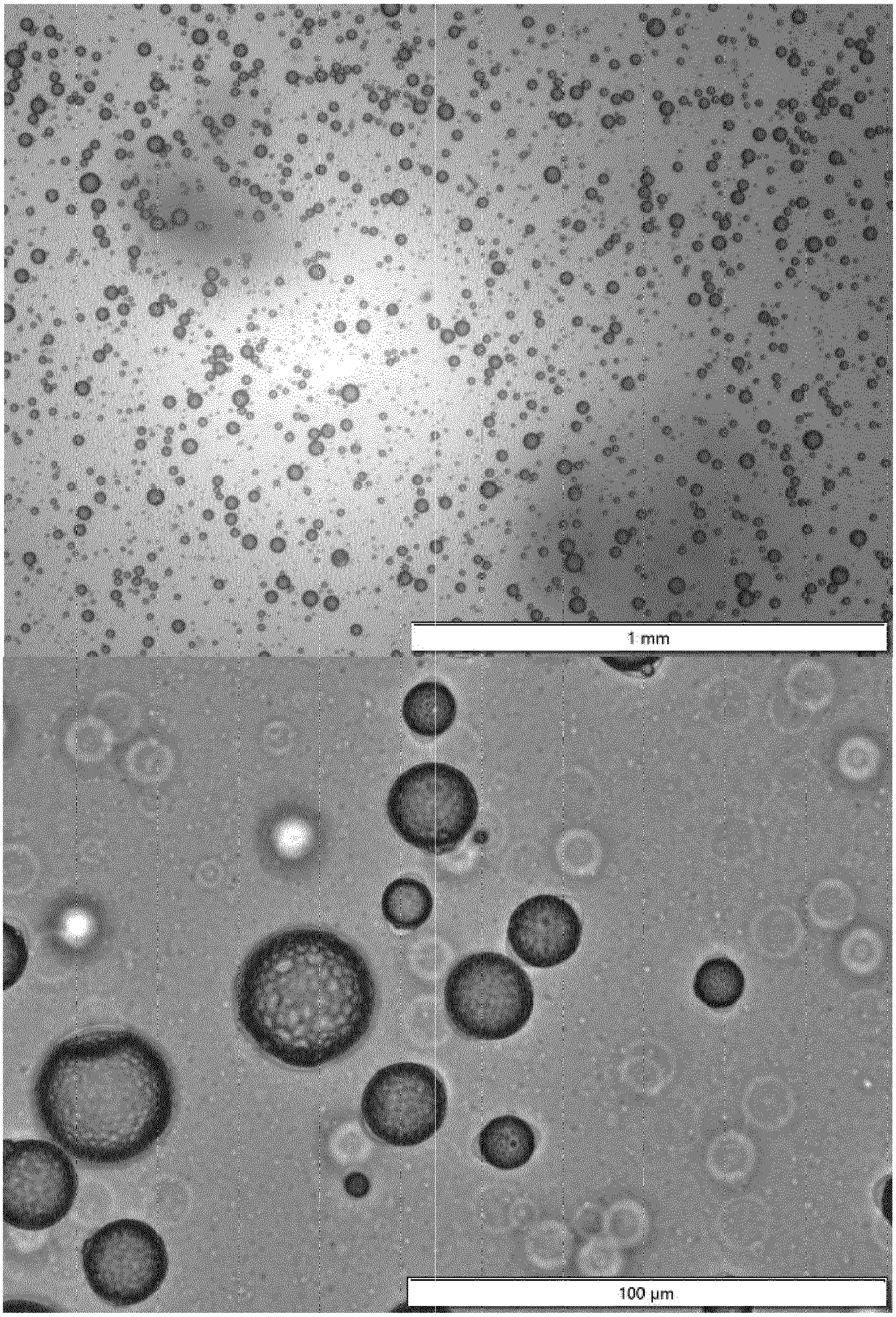


Fig 1G

## Beschreibung

### Gebiet der Erfindung

Die Erfindung betrifft Wasch- und Reinigungsmittel sowie Kosmetika welche bioabbaubare Mikrokapseln mit umweltverträglichen Wandmaterialien und darin verkapselten Parfümzusammensetzungen enthalten.

### Hintergrund der Erfindung

Die Mikroverkapselung ist eine vielseitig nutzbare Technologie. Sie bietet Lösungen für zahlreiche Innovationen - von der Papierindustrie bis hin zu Haushaltsprodukten erhöht die Mikroverkapselung die Funktionalität unterschiedlichster aktiver Substanzen. Verkapselte Aktivstoffe können wirtschaftlicher eingesetzt werden und verbessern die Nachhaltigkeit und Umweltverträglichkeit vieler Produkte.

Allerdings sind die polymeren Wandmaterialien der Mikrokapseln selbst in sehr unterschiedlichem Grad umweltverträglich. In Selbstdurchschreibepapier werden schon lange auf dem Naturprodukt Gelatine basierende und somit vollständig bioabbaubare Mikrokapselwände eingesetzt. Ein schon in den 1950er Jahren entwickeltes Verfahren zur Gelatineverkapselung ist in US 2,800,457 offenbart. Seitdem wurde eine Vielzahl an Variationen in Bezug auf Materialien und Verfahrensschritte beschrieben. Außerdem werden bioabbaubare bzw. enzymatisch abbaubare Mikrokapselwände eingesetzt, um den enzymatischen Abbau als Verfahren zur Freisetzung des Kernmaterials zu verwenden. Solche Mikrokapseln sind beispielsweise in WO 2009/126742 A1 oder WO 2015/014628 A1 beschrieben.

Solche Mikrokapseln sind jedoch für viele industrielle Anwendungen und Haushaltsprodukte nicht geeignet. Denn Naturstoff-basierte Mikrokapseln erfüllen die für z.B. Wasch- und Reinigungsmittel, Klebstoffsystemen, Lacke und Dispersionen geforderte Diffusionsdichtigkeit, die chemische Resistenz und die Temperaturbeständigkeit und auch die geforderte Beladung mit Kernmaterial nicht.

In diesen sogenannten Hochanforderungsgebieten werden klassisch organische Polymere wie Melamin-Formaldehyd-Polymere (siehe z.B. EP 2 689 835 A1, WO 2018/114056 A1, WO 2014/016395 A1, WO 2011/075425 A1 oder WO 2011/120772 A1); Polyacrylate (siehe z.B. WO 2014/032920 A1, WO 2010/79466 A2); Polyamide; Polyurethan oder Polyharnstoffe (siehe z.B. WO 2014/036082 A2 oder WO 2017/143174 A1) eingesetzt. Die aus solchen organischen Polymeren aufgebauten Kapseln verfügen über die benötigte Diffusionsdichtigkeit, Stabilität und chemische Resistenz. Diese organischen Polymere sind allerdings nur in sehr geringen Maße enzymatisch bzw. biologisch abbaubar.

Im Stand der Technik sind verschiedene Ansätze beschrieben, bei denen Biopolymere als zusätzliche Komponente mit den organischen Polymeren der Mikrokapselschale zur Anwendung in Hochanforderungsgebieten kombiniert werden, allerdings nicht mit der Zielsetzung, bioabbaubare Mikrokapseln zu erzeugen, sondern vorrangig die Freisetzungs-, Stabilitäts-, oder Oberflächeneigenschaften der Mikrokapseln zu verändern. Beispielsweise wird in WO 2014/044840 A1 ein Verfahren zur Herstellung von zweischichtigen Mikrokapseln beschrieben mit einer inneren Polyharnstoff-Schicht und einer äußeren Gelatine-enthaltenden Schicht. Dabei wird die Polyharnstoff-Schicht durch Polyaddition an der Innenseite der durch Koazervation erhaltenden Gelatine-Schicht erzeugt. Die so erhaltenen Kapseln weisen gemäß Beschreibung aufgrund der Polyharnstoffschicht die nötige Stabilität und Dichtigkeit für den Einsatz in Wasch- und Reinigungsmitteln auf und zusätzlich durch die Gelatine eine Klebrigkeit, um sie an Oberflächen anzuheften. Konkrete Stabilitäten und Resistenzen werden nicht erwähnt. Nachteilig an Polyharnstoffkapseln ist jedoch die unvermeidliche Nebenreaktion der Kernmaterialien mit den zur Erzeugung des Harnstoffs verwendeten Diisocyanaten, die dem ölbasierten Kern beigemischt werden müssen.

Andererseits sind im Stand der Technik auch auf Biopolymeren basierende Mikrokapseln beschrieben, die durch Hinzufügung einer Schutzschicht eine verbesserte Dichtigkeit oder Stabilität gegenüber Umwelteinflüssen oder eine gezielte Einstellung eines verzögerten Freisetzungsverhaltens erreichen. Beispielsweise beschreibt die WO 2010/003762 A1 Partikel mit einem Kern-Schale-Schale Aufbau. Im Inneren eines jeden Partikels befindet sich als Kern ein schwer wasserlöslicher oder wasserunlöslicher organischer Wirkstoff. Die den Kern direkt umhüllende Schale enthält ein biologisch abbaubares Polymer und die äußere Schale mindestens ein Metall- oder Halbmetalloxid. Mit diesem Aufbau wird zwar eine bioabbaubare Schale erhalten. Die Mikrokapseln werden dennoch gemäß WO 2010/003762 A1 in Lebensmitteln, Kosmetika oder pharmazeutischen Mitteln eingesetzt, sind für die erfindungsgemäßen Hochanforderungsgebiete jedoch aufgrund mangelnder Dichtheit nicht verwendbar.

In der nicht veröffentlichten PCT/EP2020/085804 werden Mikrokapseln mit einem Mehrschichtaufbau der Schalen beschrieben, die im Wesentlichen bioabbaubar sind und dennoch ausreichende Stabilität und Dichtigkeit aufweisen, um in Hochanforderungsgebieten eingesetzt werden zu können. Dies wird dadurch erreicht, dass eine Stabilitätsschicht den Hauptanteil der Kapselschale ausmacht, die aus natürlich vorkommenden und gut bioabbaubaren Materialien, insbesondere wie Gelatine oder Alginat bzw. aus ubiquitär in der Natur vorhandenen Materialien besteht.

Diese Stabilitätsschicht wird mit einer Barriereschicht kombiniert, die aus bekannten für Mikroverkapselung eingesetzten Materialien, wie Melamin-Formaldehyd oder Meth(acrylat) bestehen kann. Dabei ist es gelungen, die

Barriereschicht in einer bisher nicht darstellbaren geringen Wandstärke auszugestalten und dennoch eine ausreichende Dichtigkeit zu gewährleisten. Damit wird der Anteil der Barriereschicht an der Gesamtwand sehr gering gehalten, so dass die Mikrokapselwand eine Bioabbaubarkeit gemessen nach OECD 301 F von mindestens 40 % aufweist.

## Zusammenfassung der Erfindung

Es wurde gefunden, dass Mikrokapseln mit einem Mehrschichtaufbau der Schale aus gut bioabbaubarer (äußerer) Stabilitätsschicht und dünner (innerer) Barriereschicht durch den Einsatz von Emulsionsstabilisatoren nach Herstellung der inneren Barriereschicht verbessert werden können. Emulsionsstabilisatoren werden zwar regelmäßig zur Stabilisierung der Kernmaterialemulsion eingesetzt, es wurde jedoch überraschenderweise gefunden, dass eine Behandlung der Oberfläche der das Kernmaterial umhüllenden Barriereschicht mit einem Emulsionsstabilisator, insbesondere einem Copolymer enthaltend bestimmte Acrylsäure-Derivate, zu einer verbesserten Abscheidung der Stabilitätsschicht und somit zu einer größeren mittleren Schichtdicke der Stabilitätsschicht führt (siehe Beispiele 2 bis 4). Derartige Mikrokapseln eignen sich besonders für den Einsatz in Wasch- und Reinigungsmitteln sowie kosmetischen Zubereitungen. Es wurde ferner gefunden, dass diese Mikrokapseln sich insbesondere für die Verkapselung der hierin beschriebenen Parfümzusammensetzungen eignen.

Folglich betrifft die Erfindung gemäß einem ersten Aspekt Mittel ausgewählt aus Wasch- und Reinigungsmitteln sowie kosmetischen Zubereitungen, die bioabbaubare Mikrokapseln, umfassend ein Kernmaterial und eine Schale, enthalten, wobei die Schale aus mindestens einer Barriereschicht und einer Stabilitätsschicht besteht, wobei die Barriereschicht das Kernmaterial umgibt, wobei die Stabilitätsschicht mindestens ein Biopolymer umfasst, und auf der äußeren Oberfläche der Barriereschicht angeordnet ist, und wobei am Übergang von Barriereschicht zu Stabilitätsschicht ein Emulsionsstabilisator angeordnet ist, wobei das Kernmaterial mindestens eine Parfümzusammensetzung umfasst, wobei die Parfümzusammensetzung bezogen auf das Gesamtgewicht aller in der Parfümzusammensetzung enthaltenen Riechstoffe umfasst:

a) $\leq$10 Gew.-% an Riechstoffen mit einem CLogP von $\leq$2,5 und einem Siedepunkt von $\geq$200°C;
b) $\geq$15 Gew.-% von mindestens einem Riechstoff mit einem CLogP von $\geq$4,0 und einem Siedepunkt von $\leq$275°C; und
c) $\geq$30 Gew.-% von mindestens einem Riechstoff mit einem Dampfdruck von $\geq$5 Pa bei 20°C.

In verschiedenen Ausführungsformen unterscheiden sich Barriereschicht und Stabilitätsschicht in ihrer chemischen Zusammensetzung bzw. ihrem chemischen Aufbau.

Wenn es sich bei dem Mittel um ein Wasch- oder Reinigungsmittel handelt, enthält dieses vorzugsweise mindestens einen weiteren Bestandteil ausgewählt aus Tensiden, Gerüststoffen, Enzymen und aufziehverstärkenden Mitteln. Wenn es sich bei dem Mittel um ein kosmetisches Mittel handelt, kann dieses ebenfalls mindestens einen weiteren Bestandteil enthalten, der beispielsweise aus Tensiden und hautpflegenden Stoffen ausgewählt sein kann.

Bei dem Emulsionsstabilisator handelt es sich um ein Polymer oder Copolymer, das aus bestimmten Acrylsäure-Derivaten, N-Vinylpyrrolidon; und/oder Styrol aufgebaut ist. In verschiedenen Ausführungsformen besteht das Polymer oder Copolymer aus einem oder mehreren Monomeren, die ausgewählt sind aus:

(1) Acrylsäure-Derivaten der allgemeinen Formel (I)

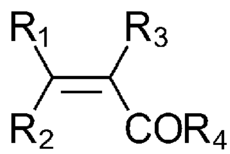

wobei

$R_1$, $R_2$ und $R_3$ ausgewählt sind aus: Wasserstoff und einer Alkylgruppe mit 1 bis 4 Kohlenstoffatomen, wobei $R_1$ und $R_2$ insbesondere Wasserstoff und $R_3$ insbesondere Wasserstoff oder Methyl ist; und

$R_4$ für -OX oder -$NR_5R_6$ steht, wobei X für Wasserstoff, ein Alkalimetall eine Ammonium-Gruppe oder ein gegebenenfalls durch -$SO_3M$ oder -OH substituiertes $C_1$-$C_{18}$ Alkyl steht, wobei M für Wasserstoff, ein Alkalimetall oder Ammonium steht, wobei das gegebenenfalls durch -$SO_3M$ oder-OH substituierte $C_1$-$C_{18}$ Alkyl vorzugsweise Methyl, Ethyl, n-Butyl, 2-Ethylhexyl, 2-Sulfoethyl oder 2-Sulfopropyl ist, wobei $R_5$ und $R_6$ unabhängig voneinander für Wasserstoff oder ein gegebenenfalls durch -$SO_3M$ substituiertes $C_1$-$C_{10}$ Alkyl stehen, wobei mindestens eines von $R_5$ und $R_6$ nicht Wasserstoff ist, wobei vorzugsweise $R_5$ H ist und $R_6$ 2-Methyl-propan-2-yl-1-sulfonsäure;

(2) N-Vinylpyrrolidon; und
(3) Styrol.

Der Emulsionsstabilisator ist bevorzugt ein Acrylat-Copolymer enthaltend 2-Acrylamido-2-methyl-propansulfonsäure (AMPS). Ein geeignetes Copolymer ist beispielsweise unter dem Handelsnamen Dimension PA 140 erhältlich.
In verschiedenen Ausführungsformen ist die Barriereschicht aus einer oder mehreren Komponenten, ausgewählt aus der Gruppe bestehend aus einer aldehydischen Komponente, einem aromatischen Alkohol, einer Aminkomponente, einer Acrylat-Komponente und einer Isocyanat-Komponente aufgebaut, und die Stabilitätsschicht umfasst mindestens ein Biopolymer.
Vorteilhaft ist des Weiteren, dass die verbesserte strukturelle Aufnahme der Stabilitätgeberschicht durch die Barriereschicht durch Zugabe des Emulsionsstabilisators die strukturelle (kovalente) Verbindung aller wandbildenden Komponenten gewährleistet, so dass die einzelnen Schichten untrennbar verbunden und als Monopolymer angesehen werden können.
Aufgrund der Robustheit bzw. Dichtigkeit der bioabbaubaren Kapsel kann diese in einer Vielzahl von Produkten aus dem Bereich der Wasch- und Reinigungsmittel sowie Kosmetika eingesetzt werden. Ein weiterer Vorteil der beschriebenen Mikrokapseln ist die helle Färbung von Dispersionen dieser Mikrokapseln. In verschiedenen Ausführungsformen haben die Dispersionen, enthaltend bioabbaubare Mikrokapseln wie hierin beschrieben, im L*a*b*-Farbraum einen Farbort mit einem L*-Wert von mindestens 50.
Ferner betrifft die Erfindung in einem weiteren Aspekt die Verwendung von Wasch- und Reinigungsmitteln gemäß dem ersten Aspekt in einem Verfahren zur Konditionierung von Textilien oder zur Reinigung von Textilien und/oder harten Oberflächen.
Ferner betrifft die Erfindung in einem weiteren Aspekt die kosmetische Verwendung von Mitteln gemäß dem ersten Aspekt.

## Figuren

**Fig. 1** zeigt eine lichtmikroskopische Aufnahme verschiedener Mikrokapseldispersionen jeweils links in einer 50-fachen und einer 500-fachen Vergrößerung aufgenommen mit einem Olympus BX 50 Mikroskop.

A) erfindungsgemäße Mikrokapseldispersion Slurry 2
B) erfindungsgemäße Mikrokapseldispersion Slurry 3
C) erfindungsgemäße Mikrokapseldispersion Slurry 5
D) erfindungsgemäße Mikrokapseldispersion Slurry 6
E) Referenz-Mikrokapseldispersion MK1
F) Referenz-Mikrokapseldispersion MK2
G) Referenz-Mikrokapseldispersion MK4

**Fig. 2** zeigt zwei mikroskopische Aufnahmen der Mikrokapseldispersionen Slurry 2 und MK1 mit Hilfslinien zur Bestimmung der Dicke der Stabilitätsschicht der Mikrokapseln und Angaben der gemessenen Dicken.

**Fig. 3** zeigt ein Diagramm des Verlaufs des biologischen Abbaus nach OECD 301 F über 60 Tage nach Waschung der erfindungsgemäßen Mikrokapseldispersionen und Referenzen. Slurry 2 und Slurry 3 sowie der Referenz-Mikrokapseldispersion MK1 1. In A) ist der Abbau von Slurry 2 und Slurry 3 sowie zusätzlich als Positivkontrollen der Abbau von Ethylenglycol als auch von Walnussschalen-Mehl dargestellt. In B) Slurry 2 und Slurry 3 mit Vergleich mit der Referenzkapsel MK1 dargestellt.

**Fig. 4** zeigt ein Diagramm der Lagerstabilität verschiedener Mikrokapseldispersionen wie in Beispiel 5 beschrieben. A) Stabilität der Mikrokapseldispersionen Slurry 2 und Slurry 3 bei Lagerung über einen Zeitraum von 4 Wochen im Vergleich mit der Referenzkapsel MK2. B) Stabilität der Mikrokapseldispersion Slurry 2 bei Lagerung über einen Zeitraum von 4 Wochen im Vergleich mit den Referenzkapseln MK1 und MK2. C) Stabilität der Mikrokapseldispersion Slurry 3 bei Lagerung über einen Zeitraum von 4 Wochen im Vergleich mit den Referenzkapseln MK2 und MK4. D) Stabilität der Mikrokapseldispersion Slurry 5 und Slurry 6 im Vergleich mit der Referenzkapsel MK2.

**Fig. 5** zeigt die Diagramm der Entwicklung der L*a*b* der Mikrokapseldispersionen Slurry 3 und 3A über einen Zeitraum von 8 Tagen. A) Zeitliche Entwicklung des L*-Werts. B) Zeitliche Entwicklung des a*-Werts. C) Zeitliche

Entwicklung des b*-Werts.

**Detaillierte Beschreibung der Erfindung**

Definitionen

"Barriereschicht" bezeichnet die Schicht einer Mikrokapselwand, die im Wesentlichen für die Dichtigkeit der Kapselschale verantwortlich ist, d. h. Austritt des Kernmaterials verhindert.

"Biologische Abbaubarkeit" bezeichnet das Vermögen organischer Chemikalien, biologisch, also durch Lebewesen oder deren Enzyme, zersetzt zu werden. Im Idealfall verläuft dieser chemische Metabolismus vollständig bis zur Mineralisierung, kann aber auch bei abbaustabilen Transformationsprodukten stehen bleiben. Allgemein anerkannt sind die Richtlinien zur Prüfung von Chemikalien der OECD, die auch im Rahmen der Chemikalienzulassung verwendet werden. Die Tests der OECD-Testserie 301 (A-F) weisen einen raschen und vollständigen biologischen Abbau (ready biodegradability) unter aeroben Bedingungen nach. Unterschiedliche Testmethoden stehen für gut oder schlecht lösliche sowie für flüchtige Substanzen zur Verfügung. Insbesondere wird im Rahmen der Anmeldung der manometrischer Respirationstest (OECD 301 F) verwendet. Die grundsätzliche biologische Abbaubarkeit (inherent biodegradability) kann über die Messnorm OECD 302 bestimmt werden, beispielsweise den MITI-II-Test (OECD 302 C).

"Bioabbaubar" oder "biologisch abbaubar" im Sinne der vorliegenden Erfindung werden Mikrokapselwände bezeichnet, die eine Bioabbaubarkeit gemessen nach OECD 301 F von mindestens 40 % innerhalb von 60 Tagen aufweisen Ab einem Grenzwert von mindestens 60 % Abbau innerhalb von 60 Tagen gemessen nach OECD 301 F werden Mikrokapselwände vorliegend auch als rasch bioabbaubar bezeichnet.

Ein "Biopolymer" ist ein natürlich vorkommendes Polymer, beispielsweise ein in einer Pflanze, einem Pilz, einem Bakterium oder einem Tier vorkommendes Polymer. Zu den Biopolymeren zählen auch auf natürlich vorkommenden Polymeren basierende modifizierte Polymere. Das Biopolymer kann aus der natürlichen Quelle gewonnen oder künstlich hergestellt worden sein.

"Dichtheit" gegenüber einem Stoff, Gas, einer Flüssigkeit, Strahlung o. Ä., ist eine Eigenschaft von Materialstrukturen. Die Begriffe "Dichtheit" und "Dichtigkeit" werden erfindungsgemäß synonym verwendet. Dichtheit ist ein relativer Begriff und bezieht sich immer auf vorgegebene Rahmenbedingungen.

"Emulsionsstabilisator" sind Hilfsstoffe zur Stabilisierung von Emulsionen. Die Emulsionsstabilisatoren können in geringer Menge der wässrigen oder öligen Phase (von Emulsionen) zugesetzt werden wobei sie in der Grenzfläche phasenorientiert angereichert werden und dabei zum einen die Zerteilung der inneren Phase durch Herabsetzen der Grenzflächenspannung erleichtern und zum anderen die Zerteilungsbeständigkeit der Emulsion erhöhen.

Der Begriff "(Meth)Acrylat" bezeichnet in dieser Erfindung sowohl Methacrylate wie Acrylate.

Unter dem Begriff "Mikrokapseln" werden erfindungsgemäß Partikel verstanden, die einen inneren Raum oder Kern enthalten, der mit einem festen, gelierten, flüssigen oder gasförmigen Medium gefüllt ist und von einer kontinuierlichen Hülle (Schale) aus filmbildenden Polymeren umschlossen (verkapselt) ist. Diese Teilchen besitzen vorzugsweise kleine Abmessungen. Die Begriffe "Mikrokapseln", "Kern-Schale-Kapseln" oder einfach "Kapseln" werden synonym verwendet.

Als "Mikroverkapselung" wird ein Herstellungsverfahren bezeichnet, bei dem kleine und kleinste Portionen fester, flüssiger oder gasförmiger Substanzen mit einer Hülle aus polymeren oder anorganischen Wandmaterialien umgeben werden. Die so erhaltenen Mikrokapseln können einen Durchmesser von einigen Millimetern bis unter 1 $\mu$m haben. Es kann allerdings bevorzugt sein, dass der Durchmesser größer 100 nm oder größer 500 nm ist.

Die erfindungsgemäße Mikrokapsel weist eine mehrschichtige "Schale" auf. Die das Kernmaterial der Mikrokapsel umhüllende Schale wird regelmäßig auch als "Wand" oder "Hülle" bezeichnet.

Die erfindungsgemäßen Mikrokapseln mit einer mehrschichtigen Schale können auch als mehrschalige Mikrokapseln bzw. mehrschaliges Mikrokapseln-System bezeichnet werden, da die einzelnen Schichten auch als individuelle Schalen angesehen werden können. "Mehrschichtig" und "mehrschalig" werden somit synonym verwendet.

"Stabilitätsschicht" bezeichnet die Schicht einer Kapselwand, die im Wesentlichen für die Stabilität der Kapselschale verantwortlich ist, d. h. in der Regel den Hauptteil der Schale ausmacht.

"Wandbildner" sind die Komponenten, die die Mikrokapselwand aufbauen.

Mikrokapseln

Die bioabbaubare Mikrokapseln, die gemäß dem ersten Aspekt der Erfindung in Wasch- und Reinigungsmitteln sowie kosmetischen Mitteln eingesetzt werden, umfassend ein Kernmaterial und eine Schale, wobei die Schale aus mindestens einer Barriereschicht und einer Stabilitätsschicht besteht, wobei die Barriereschicht das Kernmaterial umgibt, wobei die Stabilitätsschicht mindestens ein Biopolymer umfasst, und auf der äußeren Oberfläche der Barriereschicht angeordnet ist, und wobei am Übergang von Barriereschicht zu Stabilitätsschicht ein Emulsionsstabilisator angeordnet

ist. Diese Anordnung kann in einer Zwischenschicht aus Emulsionsstabilisator bestehen, die kontinuierlich oder diskontinuierlich sein und Teile oder die gesamte innere Barriereschicht bedecken kann. Alternativ können auch nur einzelne Moleküle des Emulsionsstabilisators auf der Oberfläche der Barriereschicht derart angeordnet sein, dass sie eine Bindung zwischen Stabilitätsschicht und Barriereschicht vermitteln. Der Emulsionsstabilisator wirkt hier als Vermittleragens.

Wie in Beispiel 4 gezeigt, weisen die erfindungsgemäßen Mikrokapselschalen aufgrund der Anwendung des Emulsionsstabilisators eine deutlich erhöhte Dicke der Stabilitätsschicht auf. Dadurch ist der Anteil an natürlichen Komponenten in der Kapsel weiter erhöht gegenüber zuvor beschriebenen Mehrschichtmikrokapseln.

Gemäß einer Ausführungsform der bioabbaubaren Mikrokapseln wird bei Herstellung der Mikrokapseln, die Oberfläche der Barriereschicht vor Ausbildung der Stabilitätsschicht mit dem Emulsionsstabilisator in Kontakt gebracht. Dadurch ist die Kapazität der Oberfläche zur strukturellen Anbindung der Stabilitätsschicht erhöht. Ohne darauf festgelegt werden zu wollen, gehen die Erfinder davon aus, dass sich der Emulsionsstabilisator an der unpolaren Oberfläche der Barriereschicht, insbesondere einer Melamin-Formaldehyd-Schicht, anlagert und somit den Biopolymeren der Stabilitätsschicht ein Gerüst für die Abscheidung auf der Oberfläche bietet. Dadurch wird nicht nur die mittlere Schichtdicke der mit dem Biopolymer erzeugten Stabilitätsschicht erhöht, sondern zusätzlich der Emulsionsstabilisator an der Grenzfläche zwischen Stabilitätsschicht und Barriereschicht eingebaut. Ausgehend von dieser Theorie kommt grundsätzlich jeder Emulsionsstabilisator als Vermittleragens zur Herstellung der erfindungsgemäßen Mikrokapseln in Frage.

In einer bevorzugten Ausführungsform ist der Emulsionsstabilisator ein Polymer oder Copolymer, bestehend aus einem oder mehreren Monomeren ausgewählt aus:

(1) Acrylsäure-Derivaten der allgemeinen Formel (I)

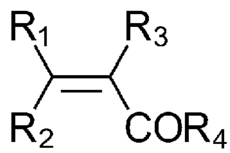

wobei

$R_1$, $R_2$ und $R_3$ ausgewählt sind aus: Wasserstoff und einer Alkylgruppe mit 1 bis 4 Kohlenstoffatomen, wobei $R_1$ und $R_2$ insbesondere Wasserstoff und $R_3$ insbesondere Wasserstoff oder Methyl ist; und

$R_4$ für -OX oder -$NR_5R_6$ steht, wobei X für Wasserstoff, ein Alkalimetall eine Ammonium-Gruppe oder ein gegebenenfalls durch -$SO_3M$ oder -OH substituiertes $C_1$-$C_{18}$ Alkyl steht, wobei M für Wasserstoff, ein Alkalimetall oder Ammonium steht, wobei das gegebenenfalls durch -$SO_3M$ oder-OH substituierte $C_1$-$C_{18}$ Alkyl vorzugsweise Methyl, Ethyl, n-Butyl, 2-Ethylhexyl, 2-Sulfoethyl oder 2-Sulfopropyl ist, wobei $R_5$ und $R_6$ unabhängig voneinander für Wasserstoff oder ein gegebenenfalls durch -$SO_3M$ substituiertes $C_1$-$C_{10}$ Alkyl stehen, wobei mindestens eines von $R_5$ und $R_6$ nicht Wasserstoff ist, wobei vorzugsweise $R_5$ H ist und $R_6$ 2-Methyl-propan-2-yl-1-sulfonsäure;

(2) N-Vinylpyrrolidon; und
(3) Styrol.

Die für $R_1$,$R_2$ und $R_3$ möglichen $C_{1-4}$-Hydroxyalkylgruppen können Ethyl-, n-Propyl-, i-Propyl und n-Butyl sein. In einigen Ausführungsformen der Acrylsäure-Derivate sind $R_1$ und $R_2$ Wasserstoff und $R_3$ Wasserstoff oder Methyl. Je nach Auswahl von $R_3$ handelt es sich um ein Acrylat (Wasserstoff) oder Methacrylat (Methyl).

Die für X möglichen gegebenenfalls durch -OH oder -$SO_3M$ substituierten $C_1$-$C_{18}$ Alkylgruppen, sind vorzugsweise ausgewählt aus Methyl-, Ethyl-, $C_{2-4}$-Hydroxyalkyl-, $C_{2-4}$-Sulfoalkyl- und $C_4$-$C_{18}$ Alkylgruppen.

Die $C_{2-4}$-Hydroxyalkylgruppen können ausgewählt sein aus Ethyl-, n-Propyl-, i-Propyl und n-Butyl. Als unsubstituierte $C_{4-18}$-Alkylgruppen sind beispielsweise die n-Butyl-, sec.-Butyl-, tert.-Butyl-, Pentyl-, Hexyl-, Ethylhexyl-, Octyl-, Decyl-, Dodecyl- oder Stearyl-Gruppen zu nennen. Insbesondere geeignet sind die n-Butyl- und Ethylhexyl. Das Ethylhexyl ist insbesondere 2-Ethylhexyl. Als $C_{2-4}$-Sulfoalkylgruppen sind insbesondere 2-Sulfoethyl und 3-Sulfopropyl zu nennen.

Gemäß einer Ausführungsform der Acrylsäure-Derivate ist $R_4$ -$NR_5R_6$, wobei $R_5$ H ist und $R_6$ 2-Methyl-propan-2-yl-1-sulfonsäure. Dabei sind insbesondere $R_1$, $R_2$ und $R_3$Wasserstoff.

Gemäß einer Ausführungsform ist $R_4$-OX und X ist Wasserstoff. Dabei sind insbesondere $R_1$, $R_2$ und $R_3$ Wasserstoff (Acrylsäure). Alternativ ist dabei $R_3$ Methyl (Methacrylat). Gemäß einer Ausführungsform der Acrylsäure-Derivate ist $R_4$-OX und X ist Methyl. Dabei sind insbesondere $R_1$, $R_2$ und $R_3$Wasserstoff (Methylacrylat). Gemäß einer Ausführungsform ist $R_4$ -OX und X ist 2-Ethylhexyl. Dabei sind insbesondere $R_1$, $R_2$ und $R_3$ Wasserstoff (Ethylhexacrylat).

Gemäß einer Ausführungsform ist $R_4$-OX und X ist n-Butyl. Dabei sind insbesondere $R_1$, $R_2$ und $R_3$ Wasserstoff (n-Butylacrylat). Gemäß einer Ausführungsform der Acrylsäure-Derivate ist $R_4$-OX und X ist 2-Sulfoethyl. Dabei sind insbesondere $R_1$, $R_2$ und $R_3$ Wasserstoff (Sulfoethylacrylat). Gemäß einer Ausführungsform der Acrylsäure-Derivate ist $R_4$ -OX und X ist 3-Sulfopropyl. Dabei sind insbesondere $R_1$, und $R_2$ Wasserstoff und $R_3$ ist Methyl (Sulfopropyl(meth)acrylat).

Die Polymere oder Copolymere, die aus Monomeren der Formel (I) aufgebaut sind, genügen typischerweise der Formel (II):

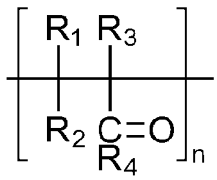

wobei $R^1$-$R^4$ die oben angegebenen Bedeutungen haben und n eine ganze Zahl von mindestens 3 ist. n kann beispielsweise größer als 5, 10, 20, 30, 40, 50, 60, 70, 80, oder 100. n kann beispielsweise kleiner als 10.000, 7.500, 5.000, 2.500, 1000, oder 500 sein. Gemäß einer Ausführungsform liegt n im Bereich von 5 bis 5000. In einer Ausführungsform liegt n im Bereich von 10 bis 1000

Die Gruppe dieser Polymere und Copolymere stellt eine sinnvolle Verallgemeinerung der in Dimension PA 140 vorhandenen Copolymere dar. Der Emulsionsstabilisator ist bevorzugt ein Acrylat-Copolymer, welches mindestens zwei unterschiedliche Monomere der Formel (I) enthält. In verschiedenen Ausführungsformen enthält das Copolymer AMPS, optional in Kombination mit (Meth)Acrylsäure und/oder mindestens einem Alkyl(meth)acrylat. Gemäß einer Ausführungsform enthält das Copolymer AMPS und ein oder mehrere Monomere ausgewählt aus Acrylat, Methacrylat, Methylacrylat, Ethylhexacrylat, n-Butylacrylat, N-Vinylpyrrolidon und Styrol.

Gemäß einer Ausführungsform enthält das Copolymer AMPS, Acrylat, Methylacrylat, und Styrol. Gemäß einer Ausführungsform enthält das Copolymer AMPS, Acrylat, Methylacrylat, und Ethylhexacrylat. Gemäß einer Ausführungsform enthält das Copolymer AMPS, Methylacrylat, N-Vinylpyrrolidon und Styrol. Gemäß einer Ausführungsform enthält das Copolymer AMPS, Acrylat, Methylacrylat, und Ethylhexacrylat. Gemäß einer Ausführungsform enthält das Copolymer AMPS, Methylacrylat, N-Vinylpyrrolidon und Styrol. Gemäß einer Ausführungsform enthält das Copolymer AMPS, Methylacrylat und Styrol. Gemäß einer Ausführungsform enthält das Copolymer AMPS, Methacrylat und Styrol. Gemäß einer Ausführungsform enthält das Copolymer AMPS, Acrylat, Methylacrylat, und n-Butylacrylat.

Gemäß einer Ausführungsform ist der Emulsionsstablisator ein Copolymer wie in EP0562344B1 definiert, das durch Verweis hierin einbezogen ist. Gemäß einer Ausführungsform ist der Emulsionsstablisator ein Copolymer, enthaltend a) AMPS, Sulfoethyl- oder Sulfopropyl(meth)acrylat oder Vinylsulfonsäure, insbesondere mit einem Anteil von 20 bis 90 %; b) einer vinylisch ungesättigten Säure, insbesondere mit einem Anteil von 0 bis 50 %; c) Methyl- oder Ethylacrylat oder -methacrylat, $C_{2-4}$-Hydroxyalkylacrylat oder N-Vinylpyrrolidon, insbesondere mit einem Anteil von 0 bis 70 % und d) Styrol oder $C_{4-18}$-Alkylacrylat oder $C_{4-18}$-Alkylmethacrylat, insbesondere mit einem Anteil von 0,1 bis 10 %.

Gemäß einer Ausführungsform ist der Emulsionsstablisator ein Copolymer, enthaltend a) 2-Acrylamido-2-methylpropansulfonsäure, Sulfoethyl- oder Sulfopropyl(meth)acrylat oder Vinylsulfonsäure, insbesondere mit einem Anteil von 40 bis 75 % b) Acrylsäure oder Methacrylsäure, insbesondere mit einem Anteil von 10 bis 40 % c) Methyl- oder Ethyl-acrylat oder -methacrylat, $C_{2-4}$-Hydroxyalkylacrylat oder N-Vinylpyrrolidon, insbesondere mit einem Anteil von 10 bis 50 % und d) 0,5 bis 5 % Styrol oder $C_{4-18}$-Alkyl-acrylat oder-methacrylat, insbesondere mit einem Anteil von 0,5 bis 5 %.

Gemäß einer Ausführungsform ist der Emulsionsstablisator ein Copolymer, enthaltend a) 40 bis 75 % 2-Acrylamido-2-methylpropansulfonsäure, Sulfoethyl- oder Sulfopropyl(meth)acrylat oder Vinylsulfonsäure, insbesondere mit einem Anteil von 40 bis 75 % b) Acrylsäure oder Methacrylsäure, 10 bis 30 % c) Methyl- oder Ethyl-acrylat oder -methacrylat oder N-Vinylpyrrolidon, insbesondere mit einem Anteil von 10 bis 50 % und d) Styrol oder $C_{4-18}$-Alkyl-acrylat oder-methacrylat, insbesondere mit einem Anteil von 0,5 bis 5 %.

Ein geeignetes Copolymer ist beispielsweise unter dem Handelsnamen Dimension PA 140 (Fa. Solenis) erhältlich.

Die exakte Bestimmung des Anteils des Emulsionsstabilisators an der Stabilisationsschicht ist technisch schwierig. Im Gegensatz zur Anwendung als Schutzkolloid bei derVerkapselung des Kernmaterials wird jedoch davon ausgegangen, dass ein wesentlicher Teil des Emulsionsstabilisators in der Mikrokapselschale verbaut wird.

Der Anteil des eingesetzten Emulsionsstabilisators an den für die Mikroverkapselung eingesetzten Komponenten kann im Bereich von 0,1 bis 15 Gew.-% liegen. Beispielsweise kann der Anteil des eingesetzten Emulsionsstabilisators 0,1 Gew.-%, 0,2 Gew.-%, 0,5 Gew.-%, 1 Gew.-%,2 Gew.-%,3 Gew.-%, 4 Gew.-%, 5 Gew.-%, 6 Gew.-%, 7 Gew.-%, 8 Gew.-%, 9 Gew.-%, 10 Gew.-%, 11 Gew.-%, 12 Gew.-% 13 Gew.-%, 14 Gew.-% oder 15 Gew.-% betragen. Unterhalb einer Konzentration von 0,1 Gew.-% besteht die Gefahr, dass die Oberfläche der Barriereschicht nicht ausreichend mit

dem Emulsionsstabilisator bedeckt ist, um den erfindungsgemäßen Effekt, nämlich die Erhöhung der Abscheidungsmenge der Stabilitätsschicht zu gewährleisten. Oberhalb von 15 Gew.-% kann die hohe Konzentration eines Emulsionsstabilisators die Ausbildungen der Stabilitätsschicht behindern. In einer bevorzugten Ausführungsform wird der Emulsionsstabilisator mit einem Anteil an den für die Mikroverkapselung eingesetzten Komponenten im Bereich von 0,25 Gew.-% bis 5 Gew.-% eingesetzt. In einer besonders bevorzugten Ausführungsform liegt der Anteil des eingesetzten Emulsionsstabilisators im Bereich von 0,5 Gew.-% bis 4 Gew.-% liegt.

Davon ausgehend, dass zumindest ein Teil des Emulsionsstabilisator in die Mikrokapselwand eingebaut wird, liegt gemäß einer Ausführungsform der Anteil des Emulsionsstabilisators bezogen auf das Gesamtgewicht der Mikrokapselwand im Bereich von 0,5 bis 15,0 Gew.-%. Beispielsweise kann der Anteil des eingesetzten Emulsionsstabilisators 0,5 Gew.-%, 1,0 Gew.-%, 1,5 Gew.-%, 2,0 Gew.-%, 2,5 Gew.-%, 3 Gew.-%, 4 Gew.-%, 5 Gew.-%, 6 Gew.-%, 7 Gew.-%, 8 Gew.-%, 9 Gew.-%, 10 Gew.-%, 11 Gew.-%, 12 Gew.-% 13 Gew.-%, 14 Gew.-% oder 15 Gew.-% betragen In einer bevorzugten Ausführungsform liegt der Anteil an den wandbildenden Komponenten der Mikrokapselschale im Bereich von 1 Gew.-% bis 11 Gew.-% eingesetzt. In einer besonders bevorzugten Ausführungsform liegt der Anteil des eingesetzten Emulsionsstabilisators im Bereich von 2 Gew.-% bis 7 Gew.-% liegt.

Die Barriereschicht enthält bevorzugt als Wandbildner eine oder mehrere Komponenten, ausgewählt aus der Gruppe bestehend aus einer aldehydischen Komponente, einem aromatischen Alkohol, einer Aminkomponente, einer Acrylat-Komponente. Herstellungsverfahren zur Erzeugung von Mikrokapseln mit diesen Wandmaterialien sind dem Fachmann bekannt. Zur Herstellung der Barriereschicht kann ein Polymer, ausgewählt aus einem Polykondensationsprodukt einer aldehydischen Komponente mit einem oder mehreren aromatischen Alkoholen, und/oder Aminkomponenten verwendet werden.

Wie in den Ausführungsbeispielen 2 und 3 gezeigt, kann die geringe Wandstärke der Barriereschicht insbesondere mit einer aromatische Alkohole oder m-Aminophenol enthaltenden, Melamin-Formaldehyd-Schicht erreicht werden. Folglich umfasst die Barriereschicht bevorzugt eine aldehydische Komponente, eine Aminkomponente und einen aromatischen Alkohol.

Der Einsatz von Amin-Aldehyd-Verbindungen in der Barriereschicht, insbesondere Melamin-Formaldehyd, hat den Vorteil, dass diese Verbindungen eine hydrophile Oberfläche mit einem hohen Anteil an Hydroxyfunktionalität ausbilden, die damit eine grundsätzliche Kompatibilität mit den auf Wasserstoffbrücken ausgerichteten Komponenten der ersten Schicht (Stabilitätsschicht), wie bioabbaubare Proteine, Polysaccharide, Chitosan, Lignine und Phosphazene aber auch anorganischen Wandmaterialien wie $CaCO_3$ und Polysiloxanen aufweisen. Genauso können Polyacrylate, insbesondere aus den Komponenten Styrol, Vinylverbindungen, Methylmethacrylat, und 1,4-Butandiol-acrylat, Methacrylsäure, durch Initiierung z.B. mit t-Butyl-hydroperoxid in einer radikalisch induzierten Polymerisation (Polyacrylate) als Mikrokapselwand erzeugt werden, die eine hydrophile Oberfläche mit einem hohen Anteil an Hydroxyfunktionalität ausbilden, die deshalb genauso kompatibel mit den erfindungsgemäßen Komponenten der Stabilitätsschicht sind.

In einer bevorzugten Ausführungsform ist somit ein Wandbildner der Barriereschicht eine aldehydische Komponente. Gemäß einer Ausführungsform ist die aldehydische Komponente der Barriereschicht ausgewählt aus der Gruppe bestehend aus Formaldehyd, Glutaraldehyd, Succinaldehyd, Furfural und Glyoxal. Mit all diesen Aldehyden wurden schon erfolgreich Mikrokapseln hergestellt (siehe WO 2013 037 575 A1), so dass davon ausgegangen werden kann, dass damit ähnlich dichte Kapseln wie mit Formaldehyd erhalten werden.

Basierend auf den Beispielen sollte der Anteil der aldehydischen Komponente für die Wandbildung bezogen auf das Gesamtgewicht der Barriereschicht im Bereich von 5 Gew.-% bis 50 Gew.-% liegen. Beispielsweise kann der Anteil der aldehydischen Komponente bei 5 Gew.-%, 6 Gew.-%, 7 Gew.-%, 8 Gew.-%, 9 Gew.-%, 10 Gew.-% oder 15 Gew.-% 20 Gew.-%, 25 Gew.-%, 30 Gew.-%, 35 Gew.-%, 40 Gew.-%, 45 Gew.-% oder 50 Gew.-%, liegen. Es wird davon ausgegangen, dass außerhalb dieser Grenzen keine ausreichend stabile und dichte, dünne Schicht erhalten werden kann. Bevorzugt liegt die Konzentration der aldehydischen Komponente in der Barriereschicht im Bereich von 10 Gew.-% bis 30 Gew.-%. Besonders bevorzugt liegt die Konzentration der aldehydischen Komponente in der Barriereschicht im Bereich von 15 Gew.-% bis 20 Gew.-%.

Als Aminkomponente in der Barriereschicht kommen insbesondere Melamin, Melaminderivate und Harnstoff oder Kombinationen davon in Frage. Geeignete Melaminderivate sind veretherte Melaminderivate sowie methylolierte Melaminderivate. Melamin in der methylolierten Form ist dabei bevorzugt. Die Aminkomponenten können beispielsweise in Form von alkylierten Mono- und Polymethylol-Harnstoff-Vorkondensationsprodukten oder partiell methylolierten Mono- und Polymethylol-1,3,5 triamono- 2,4,6 Triazin-Vorkondensationsprodukten wie Dimension SD® (von Solenis) eingesetzt werden. Gemäß einer Ausführungsform ist die Aminkomponente Melamin. Gemäß einer alternativen Ausführungsform ist die Aminkomponente eine Kombination von Melamin und Harnstoff.

Die aldehydische Komponente und die Aminkomponente können in einem Molverhältnis im Bereich von 1:5 bis 3:1 vorliegen. Beispielsweise kann das Molverhältnis 1:5, 1:4,5, 1:4, 1:3,5, 1:3, 1:2,5, 1:2, 1:1,8, 1:1,6, 1:1,4, 1:1,35, 1;1,3, 1:1,2, 1:1, 1,5:1, 2:1, 2,5:1, oder 3:1 sein. Bevorzugt liegt das Molverhältnis im Bereich von 1:3 bis 2:1. Besonders bevorzugt kann das Molverhältnis der aldehydischen Komponente und der Aminkomponente im Bereich von 1:2 bis 1:1 liegen. Die aldehydische Komponente und die Aminkomponente werden in der Regel im Verhältnis von etwa 1:1,35

eingesetzt. Dieses Molverhältnis erlaubt eine vollständige Reaktion der beiden Reaktionspartner und führt zu einer hohen Dichtigkeit der Kapseln. Es sind beispielsweise auch Aldehyd-Amin-Kapselwände bekannt mit einem Molverhältnis von 1:2. Diese Kapseln haben den Vorteil, dass der Anteil des hochvernetzenden Aldehyds, insbesondere Formaldehyd sehr gering ist. Allerdings weisen diese Kapseln eine geringere Dichtigkeit auf als die Kapseln mit einem Verhältnis von 1:1,35. Kapseln mit einem Verhältnis von 2:1 weisen eine erhöhte Dichtigkeit auf, haben jedoch den Nachteil, dass die Aldehyd-Komponente teilweise unreagiert in der Kapselwand und der Slurry vorliegt.

In einer Ausführungsform liegt der Anteil der Aminkomponente(n) (bspw. Melamin und/oder Harnstoff) in der Barriereschicht bezogen auf das Gesamtgewicht der Barriereschicht im Bereich von 20 Gew.-% bis 85 Gew.-%. Beispielsweise kann der Anteil der Aminkomponente bei 20 Gew.-%, 25 Gew.-%, 30 Gew.-%, 35 Gew.-%, 40 Gew.-%, 45 Gew.-%, 50 Gew.-%, 55 Gew.-%, 60 Gew.-%, 65 Gew.-%, 70 Gew.-%, 75 Gew.-%, 80 Gew.-% oder 85 Gew.-% liegen. In einer bevorzugten Ausführungsform liegt der Anteil der Aminkomponente in der Barriereschicht bezogen auf das Gesamtgewicht der Barriereschicht im Bereich von 40 Gew.-% bis 80 Gew.-%. Besonders bevorzugt liegt der Anteil der Aminkomponente im Bereich von 55 bis 70 Gew.-%.

Mit dem aromatischen Alkohol ist es möglich die Wandstärke der aus der Amin-Komponente und der Aldehyd-Komponente aufgebauten Barriereschicht stark zu reduzieren um dennoch eine Schicht zu erhalten, die die notwendige Dichtheit aufweist und zumindest in Kombination mit der Stabilitätsschicht stabil genug ist. Die aromatischen Alkohole verleihen der Wand eine erhöhte Dichtheit, da ihre stark hydrophobe Aromatenstruktur das Hindurchdiffundieren niedermolekularer Substanzen erschwert. Wie in den Beispielen dargestellt eignet sich als aromatischer Alkohol besonders Phloroglucin, Resorcin oder m-Aminophenol. Folglich ist der aromatische Alkohol in einer Ausführungsform ausgewählt aus der Gruppe bestehend aus Phloroglucin, Resorcin und Aminophenol. In Kombination mit der Amin- und der Aldehyd-Komponente wird der aromatische Alkohol in einem Molverhältnis zur Aldehyd-Komponente im Bereich von (Alkohol:Aldehyd) 1:1 bis 1:20, bevorzugt im Bereich von 1:2 bis 1:10 eingesetzt.

In einer Ausführungsform liegt der Anteil des aromatischen Alkohols in der Barriereschicht bezogen auf das Gesamtgewicht der Barriereschicht im Bereich von 1,0 Gew.-% bis 20 Gew.-%. Beispielsweise kann der Anteil des aromatischen Alkohols 1,5 Gew.-%, 2,0 Gew.-%, 2,5 Gew.-%, 3,0 Gew.-%, 4,0 Gew.-%, 5,0 Gew.-%, 6 Gew.-%, 7 Gew.-%, 8 Gew.-%, 9 Gew.-%, 10 Gew.-%, 11 Gew.-%, 12 Gew.-% 13 Gew.-%, 14 Gew.-%, 15 Gew.-%, 16 Gew.-%, 17 Gew.-%, 18 Gew.-%, 19 Gew.-% oder 20 Gew.-% liegen. Aufgrund ihrer aromatischen Struktur geben die aromatischen Alkohole der Kapselwand eine Färbung, die mit dem Anteil des aromatischen Alkohols zunimmt. Eine solche Färbung ist in einer Vielzahl von Anwendungen unerwünscht. Zudem sind die aromatischen Alkohole oxidationsanfällig, was zu einer Veränderung der Färbung im Laufe der Zeit führt. Dadurch kann die unerwünschte Färbung der Mikrokapseln schlecht mit einem Farbstoff ausgeglichen werden. Deshalb sollten die aromatischen Alkohole nicht oberhalb von 20,0 Gew.-% eingesetzt werden. Unterhalb von 1,0 Gew.-% ist kein Effekt bezüglich der Dichtigkeit nachweisbar. In einer bevorzugten Ausführungsform liegt der Anteil des aromatischen Alkohols in der Barriereschicht bezogen auf das Gesamtgewicht der Barriereschicht im Bereich von 5,0 Gew.-% bis 15,0 Gew.-%. Bis zu einem Prozentsatz von 15,0 Gew.-% ist die Färbung in den meisten Anwendungen tolerierbar. In einer besonders bevorzugten Ausführungsform liegt der Anteil des aromatischen Alkohols in der Barriereschicht bezogen auf das Gesamtgewicht der Barriereschicht im Bereich von 6 Gew.-% bis 16,0 Gew.-%. Insbesondere liegt der Anteil des aromatischen Alkohols in der Barriereschicht im Bereich von 10 Gew.-% bis 14,0 Gew.-%.

In einer weiteren Ausführungsform kann die Aldehydkomponente der Barriereschicht zusammen mit einem aromatischen Alkohol wie Resorcin, Phloroglucin oder m-Aminophenol als wandbildende Komponente(n) verwendet werden, d.h. unter Verzicht auf die Aminkomponente(n).

In einer Ausführungsform enthält die Barriereschicht Melamin, Formaldehyd und Resorcin. In einer Ausführungsform enthält die Barriereschicht der Mikrokapseln Melamin, Harnstoff, Formaldehyd und Resorcin. In einer bevorzugten Ausführungsform enthält die Barriereschicht Melamin im Bereich von 25 bis 40 Gew.-%, Formaldehyd im Bereich von 15 bis 20 Gew.-% und Resorcin im Bereich von 10 bis 14 Gew.-% und gegebenenfalls Harnstoff im Bereich von 25 bis 35 Gew.-%. Die Anteile beziehen sich auf die für die Wandbildung der Schicht eingesetzten Mengen und sind bezogen auf das Gesamtgewicht der Barriereschicht ohne Schutzkolloid.

Zur Verkapselung des Kernmaterials mit der Barriereschicht aus einer aldehydischen Komponente, einer Aminkomponente und einem aromatischen Alkohol wird wie oben erwähnt bevorzugt ein Emulsionsstabilisator als Schutzkolloid eingesetzt werden. Der als Schutzkolloid verwendete Emulsionsstabilisator kann ein wie oben als Vermittleragens definiertes Polymer oder Copolymer sein. Beispielsweise ist das Schutzkolloid ein Copolymer AMPS) Dimension®PA 140, Fa. Solenis) oder dessen Salze. In einer Ausführungsform wird als Schutzkolloid und als Vermittleragens dasselbe Copolymer verwendet.

Als Aminkomponente in der Barriereschicht kommen insbesondere Melamin, Melaminderivate und Harnstoff oder Kombinationen davon in Frage. Geeignete Melaminderivate sind veretherte Melaminderivate sowie methylolierte Melaminderivate. Melamin in der methylolierten Form ist dabei bevorzugt. Die Aminkomponenten können beispielsweise in Form von alkylierten Mono- und Polymethylol-Harnstoff-Vorkondensationsprodukten oder partiell methylolierten Mono- und Polymethylol-1,3,5 triamono- 2,4,6 Triazin-Vorkondensationsprodukten wie Dimension SD® (von Solenis) eingesetzt

werden. Gemäß einer Ausführungsform ist die Aminkomponente Melamin. Gemäß einer alternativen Ausführungsform ist die Aminkomponente eine Kombination von Melamin und Harnstoff.

Die Stabilitätsschicht bildet den Hauptbestandteil der Mikrokapselschale und gewährleistet so eine hohe Bioabbaubarkeit nach OECD 301 F von mindestens 40 % innerhalb von 60 Tagen. Als Wandbildner für die Stabilitätsschicht geeignete Biopolymere sind Proteine wie Gelatine, Molkeprotein, Pflanzenspeicherprotein; Polysaccharide wie Alginat, Gummi arabicum modifiziertes Gummi, Chitin, Dextran, Dextrin, Pektin, Cellulose, modifizierte Cellulose, Hemicellulose, Stärke oder modifizierte Stärke; phenolische Makromoleküle wie Lignin; Polyglucosamine wie Chitosan, Polyvinylester, wie Polyvinylalkohole und Polyvinylacetat; Phosphazene und Polyestern wie Polylactid oder Polyhydroxyalkanoat. Diese Aufzählung der konkreten Komponenten in den einzelnen Stoffklassen ist nur beispielhaft und soll nicht als limitierend verstanden werden. Dem Fachmann sind geeignete natürliche Wandbildner bekannt. Ferner sind dem Fachmann die verschiedenen Verfahren zur Wandbildung, beispielsweise Koazervation oder Grenzflächenpolymerisation bekannt.

Die Biopolymere können für die jeweilige Anwendung entsprechend ausgewählt werden, um mit dem Material der Stabilitätsschicht eine stabile Mehrschichtschale auszubilden. Zudem können die Biopolymere ausgewählt werden, um eine Kompatibilität mit den chemischen Gegebenheiten des Anwendungsgebiets zu erreichen. Die Biopolymere können beliebig kombiniert werden, um die Bioabbaubarkeit oder auch beispielsweise Stabilität und chemische Resistenz der Mikrokapsel zu beeinflussen.

In einer Ausführungsform des ersten Aspekts weist die Schale der Mikrokapseln eine Bioabbaubarkeit von 50 % nach OECD 301 F auf. In einer weiteren Ausführungsform weist die Schale der Mikrokapsel eine Bioabbaubarkeit von mindestens 60 % (OECD 301 F) auf. In einer weiteren Ausführungsform beträgt die Bioabbaubarkeit mindestens 70 % (OECD 301 F). Die Bioabbaubarkeit ist jeweils gemessen über einen Zeitraum von 60 Tagen. Im verlängerten Abbauverfahren ("enhanced ready biodegredation") wird die Bioabbaubarkeit über einen Zeitraum von 60 Tagen gemessen (siehe Opinion on an Annex XV dossier proposing restrictions on intentionally-added microplastics of June 11, 2020 ECHA/RAC/RES-O-0000006790-71-01/F). Bevorzugt werden die Mikrokapseln vor der Bestimmung der Bioabbaubarkeit mittels Waschen von Rückständen befreit. Besonders bevorzugt werden Kopien der Mikrokapseln für diesen Test mit einem inerten, nicht biologisch abbaubaren Kernmaterial wie Perfluoroctan (PFO) anstelle des Parfümöls hergestellt. In einer Ausführungsform wird die Kapseldispersion nach Herstellung durch dreimaliges Zentrifugieren und Redispergieren in dest. Wasser gewaschen. Dafür wird die Probe zentrifugiert (z.B. für 10 min bei 12.000 RPM). Nach Absaugen des Klarüberstandes wird mit Wasser aufgefüllt und der Bodensatz durch Schütteln redispergiert. Bei der Messung der Bioabbaubarkeit können verschiedene Referenzproben eingesetzt werden, wie das schnell abbaubare Ethylenglycol oder naturbasiertes Wallnussschalen-Mehl mit dem typischen stufenartigen Abbau eines komplexen Stoffgemisches. Die erfindungsgemäße Mikrokapsel zeigt eine ähnliche, bevorzugt bessere Bioabbaubarkeit über einen Zeitraum von 28 oder 60 Tagen als das Wallnussschalen-Mehl.

Rückstände in den Mikrokapseldispersionen sind Stoffe, die bei der Herstellung der Mikrokapseln verwendet werden und in nicht-kovalenter Wechselwirkung mit der Schale stehen wie Ablagerungshilfsmittel, Konservierungsmittel, Emulgatoren/Schutzkolloide, überschüssige Einsatzstoffe. Diese Rückstände haben einen nachgewiesenen Einfluss auf die biologische Abbaubarkeit von Mikrokapseldispersionen. Aus diesem Grund ist das Waschen vor der Bestimmung der Bioabbaubarkeit notwendig.

Um einen Eindruck über den Anteil an kovalent gebundenen und nicht-kovalenten gebundenen Bestandteilen in der Mikrokapseldispersion zu gewinnen, wurden die Kapseln mittels der in Gasparini et al. 2020 beschriebenen Quantifizierungsmethode auf Basis von Py-GC-MS für polymerverkapselten Duftstoffe untersucht. Diese Methode beinhaltet ein mehrstufiges Reinigungsprotokolls für Polymere aus komplexen Proben wie Mikrokapseldispersionen und ermöglicht die Quantifizierung von flüchtigen Restbestandteilen, von denen vermutet wird, dass sie nicht kovalent in das 3D-Polymernetzwerk eingebunden sind und daher mit anderen Standardmethoden (z. B. SPME-GC-MS oder TGA) nicht quantifizierbar sind. Anhand dieses Verfahrens wurde bestätigt, dass einzelnen Schichten der erfindungsgemäßen Mikrokapsel, insbesondere die Barriere- und die Stabilitätsschicht, untrennbar verbunden und als Monopolymer angesehen werden können. Es ist davon auszugehen, dass durch Zugabe des Emulsionsstabilisators nicht nur die strukturelle Aufnahme der Stabilitätschicht durch die Barriereschicht verbessert sondern zusätzlich die strukturelle (kovalente) Verbindung aller wandbildenden Komponenten erhöht wird.

Ein erfindungsgemäß hoher Wert der Bioabbaubarkeit wird zum einen durch die verwendeten Wandbildner zum anderen aber durch den erfindungsgemäßen Aufbau der Schale erreicht. Denn der Einsatz eines bestimmten Prozentsatzes an Biopolymeren führt nicht automatisch zu einem entsprechenden Wert der Bioabbaubarkeit. Dies ist abhängig davon, wie die Biopolymere in der Schale vorliegen.

Gemäß einer bevorzugten Ausführungsform enthält die Stabilitätsschicht Gelatine als Biopolymer. Gemäß einer weiteren bevorzugten Ausführungsform enthält die Stabilitätsschicht Alginat als Biopolymer. Gemäß einer weiteren bevorzugten Ausführungsform enthält die Stabilitätsschicht Gelatine und Alginat als Bio Polymere. Wie im Ausführungsbeispiel gezeigt, sind sowohl Gelatine als auch Alginat geeignet für die Herstellung erfindungsgemäßer Mikrokapseln mit hoher Bioabbaubarkeit und hoher Stabilität. Insbesondere konnte gezeigt werden, dass bei einer Gelatine und Alginat enthaltenden Stabilitätsschicht die Behandlung der Oberfläche der Barriereschicht mit einem Emulsionsstabilisator,

insbesondere einem AMPS enthaltenden Copolymer, zu einer starken Zunahme der Schichtdicke der Stabilitätsschicht führt (siehe Beispiele 1-4). Weitere geeignete Kombinationen natürlicher Komponenten in der ersten Schicht (Stabilitätsschicht) sind Gelatine und Gummi arabicum.

Die Stabilitätsschicht enthält ein oder mehrere Aushärtungsmittel. Erfindungsgemäße Aushärtungsmittel sind Aldehyde wie beispielsweise Glutaraldehyd, Formaldehyd und Glyoxal sowie Tannine, Enzyme wie Transglutaminase und organische Anhydride wie Maleinsäureanhydrid, Epoxyverbindungen mehrwertige Metallkationen, Amine, Polyphenole, Maleimide, Sulfide, Phenoloxide, Hydrazide, Isocyanate, Isothiocyanate, N-Hydroxysulfosuccinimid-Derivate, Carbodiimid-Derivate, und Polyole. Bevorzugt ist das Aushärtungsmittel Glutaraldehyd auf Grund seiner sehr guten Vernetzereigenschaft. Weiterhin bevorzugt ist das Aushärtungsmittel Glyoxal auf Grund seiner guten Vernetzereigenschaften und, im Vergleich zu Glutaraldehyd, niedrigeren toxikologischen Einstufung. Durch die Verwendung von Aushärtungsmitteln wird eine höhere Dichtigkeit der Stabilitätsschicht erreicht. Allerdings führen Aushärtungsmittel zu einer reduzierten Bioabbaubarkeit der natürlichen Polymere.

Aufgrund der Präsenz der Barriereschicht als Diffusionsbarriere, kann die Menge an Aushärtungsmittel in der Stabilitätsschicht gering gehalten werden, was wiederum zur leichten Bioabbaubarkeit der Schicht beiträgt. Gemäß einer Ausführungsform liegt der Anteil des Aushärtungsmittels an der Stabilitätsschicht unterhalb von 25 Gew.-%. Soweit nicht explizit anders definiert, beziehen sich die Anteile der Bestandteile der Schichten auf das Gesamtgewicht der Schicht, d.h. das Gesamttrockengewicht der zur Herstellung verwendeten Bestandteile, ohne Berücksichtigung der in der Herstellung verwendeten Bestandteile, die nicht bzw. nur geringfügig in die Schicht eingebaut werden, wie Tenside und Schutzkolloide. Oberhalb dieses Wertes können die erfindungsgemäße Bioabbaubarkeit nach OECD 301 F nicht gewährleistet werden. Der Anteil des Aushärtungsmittels an der Stabilitätsschicht kann beispielsweise 1,0 Gew.-%, 2,0 Gew.-%, 3,0 Gew.-%, 4,0 Gew.-%, 5,0 Gew.-%, 6 Gew.-%, 7 Gew.-%, 8 Gew.-%, 9 Gew.-%, 10 Gew.-%, 11 Gew.-%, 12 Gew.-% 13 Gew.-%, 14 Gew.-%, 15 Gew.-%, 16 Gew.-%, 17 Gew.-%, 18 Gew.-%, 19 Gew.-%, 20 Gew.-%, 21 Gew.-%, 22 Gew.-%, 23 Gew.-% oder 24 Gew.-%. Bevorzugt liegt der Anteil des Aushärtungsmittels an der Stabilitätsschicht im Bereich von 1 bis 15 Gew.-%. Dieser Anteil führt zur effektiven Vernetzung der Gelatine und führt in einer quantitativen Reaktion dazu, dass möglichst wenig Restmonomer entsteht. Der Bereich 9 bis 12 Gew.-% ist besonders bevorzugt, er sorgt für den benötigten Vernetzungsgrad und für eine stabile Umhüllung der Barriereschicht, um die ansonsten empfindliche Barriereschicht abzupuffern und hat nur wenig Restaldehyd, der in einer nachgeschalteten alkalischen Einstellung der Slurry über eine Aldolreaktion abgebaut wird.

In einer Ausführungsform enthält die Stabilitätsschicht Gelatine und Glutaraldehyd. Nach einer weiteren Ausführungsform enthält Stabilitätsschicht Gelatine, Alginat und Glutaraldehyd. In einer zusätzlichen Ausführungsform enthält die Stabilitätsschicht Gelatine und Glyoxal. Nach einer weiteren Ausführungsform enthält die Stabilitätsschicht Gelatine, Alginat und Glyoxal. Die genaue chemische Zusammensetzung der Stabilitätsschicht ist nicht entscheidend. Allerdings wird der erfindungsgemäße Effekt bevorzugt mit polaren Biopolymeren erreicht.

Durch die Verwendung des erfindungsgemäßen Emulsionsstabilisators auf der Oberfläche der Barriereschicht wird die mittlere Dicke der Stabilitätsschicht signifikant erhöht. Die mittlere Dicke der Stabilitätsschicht beträgt mindestens 1 $\mu$m. Die mittlere Dicke der Stabilitätsschicht kann 1 $\mu$m, 1,2 $\mu$m, 1,4 $\mu$m, 1,6 $\mu$m, 1,8 $\mu$m 2 $\mu$m, 2,2 $\mu$m, 2,4 $\mu$m, 2,6 $\mu$m, 2,8 $\mu$m, 3 $\mu$m, 3,5 $\mu$m, 4 $\mu$m, 4,5 $\mu$m, 5 $\mu$m, 5,5 $\mu$m, 6 $\mu$m, 6,5 $\mu$m, 7 $\mu$m, 7,5 $\mu$m, 8 $\mu$m, 8,5 $\mu$m, 9 $\mu$m, 9,5 $\mu$m, oder 10 $\mu$m betragen. Die Stabilitätsschicht hat im Querschnitt häufig eine elliptische Form, damit variiert die Dicke der Stabilitätsschicht über die Mikrokapseloberfläche. Deshalb wird eine mittlere Dicke der Mikrokapseln berechnet. Darüber variiert die Abscheidung von Mikrokapsel zu Mikrokapsel. Dem wird dadurch Rechnung getragen, dass die mittleren Dicken mehrerer Mikrokapseln bestimmt wird und davon der Durchschnitt berechnet. Somit ist die hier genannte mittlere Dicke genau genommen eine durchschnittliche mittlere Dicke. Die Bestimmung der Schichtdicke der Stabilitätsschicht kann erfindungsgemäß auf zwei Wegen erfolgen. Zunächst sei hier der lichtmikroskopische Ansatz erwähnt, also das direkte, optische Ausmessen der beobachteten Schichtdicke mittels eines Mikroskops und entsprechender Software. Dabei wird eine Vielzahl an Mikrokapseln einer Dispersion gemessen und aufgrund der Varianz innerhalb der Kapseln mindestens Durchmesser jeder einzelnen Mikrokapsel.

Eine zweite Möglichkeit stellt die Messung der Partikelgrößenverteilung mittels Laserbeugung dar. Hier kann der Modalwert einer Partikelgrößenverteilung des ohne die zu messende Schicht in Vergleich des Modalwerts einer Partikelgrößenverteilung mit der zu messenden Schicht gesetzt werden. Die Vergrößerung dieses Modalwerts gibt die Vergrößerung des hydrodynamischen Durchmessers der Hauptfraktion an vermessenen Mikrokapseln wieder. Die Bildung der Differenz aus den beiden gemessenen Modalwerten ergibt letztlich die zweifache Schichtdicke der Schicht.

Gemäß einer bevorzugten Ausführungsform beträgt die mittlere Dicke der Stabilitätsschicht mindestens 2 $\mu$m. Durch Wahl einer geeigneten Kombination von Emulsionsstabilisator und Wandbildner der Stabilitätsschicht, können Stabilitätsschichten mit einer mittleren Decke von 6 $\mu$m oder mehr gebildet werden. In einer besonders bevorzugten Ausführungsform beträgt die mittlere Dicke der Stabilitätsschicht mindestens 3 $\mu$m.

Im Gegensatz zu anderen bioabbaubaren Mikrokapseln weisen die erfindungsgemäßen Mikrokapseln eine hohe Dichtheit auf. Gemäß einer Ausführungsform weisen die Mikrokapseln eine Dichtheit auf, die einen Austritt von höchstens 50 Gew.-% des eingesetzten Kernmaterials nach Lagerung über einen Zeitraum von 4 Wochen bei einer

Temperatur von 0 bis 40 °C gewährleistet.

Die Dichtigkeit der Kapselwand kann mit der Wahl der Schalenkomponenten beeinflusst werden. Gemäß einer Ausführungsform weisen die Mikrokapseln eine Dichtheit auf, die einen Austritt von höchstens 45 Gew.-%, höchstens 40 Gew.-%, höchstens 35 Gew.-%, höchstens 30 Gew.-%, höchstens 25 Gew.-%, höchstens 20 Gew.-% des eingesetzten Kernmaterials bei Lagerung über einen Zeitraum von 4 Wochen bei einer Temperatur von 0 bis 40 °C gewährleistet. Dabei werden die Mikrokapseln in einer der Zielanwendung entsprechenden Modellformulierung gelagert. Die Mikrokapseln sind darüber hinaus auch in dem Produkt, in dem sie verwendet werden, lagerstabil. Beispielsweise in Waschmitteln, Weichspülern oder Kosmetikprodukten. Dem Fachmann sind die Richtrezepturen dieser Produkte bekannt. Typischerweise liegt der pH Wert in der Umgebung der Mikrokapseln bei der Lagerung im Bereich von 2 bis 12.

Die erfindungsgemäßen Mikrokapselschalen weisen mindestens zwei Schichten auf, d.h. sie können z.B. zweischichtig, dreischichtig, vierschichtig, oder fünfschichtig sein. Bevorzugt sind die Mikrokapseln zwei- oder dreischichtig.

Gemäß einer Ausführungsform weist die Mikrokapsel eine dritte Schicht auf, die an der Außenseite der Stabilitätsschicht angeordnet ist. Diese dritte Schicht kann eingesetzt werden, um die Oberflächeneigenschaften der Mikrokapsel für eine bestimmte Anwendung anzupassen. Zu nennen wären hier die Verbesserung der Haftung der Mikrokapseln auf verschiedensten Oberflächen und eine Reduzierung der Agglomeration. Die dritte Schicht bindet zudem Restaldehydmengen, verringert damit den Gehalt an freien Aldehyden in der Kapseldispersion. Ferner kann sie zusätzliche (mechanische) Stabilität erbringen oder die Dichtigkeit weiter erhöhen. Abhängig von der Anwendung kann die dritte Schicht eine Komponente ausgewählt aus Aminen, organischen Salzen, anorganischen Salzen, Alkoholen, Ethern, Polyphosphazenen und Edelmetallen enthalten.

Edelmetalle erhöhen die Dichtigkeit der Kapseln und können der Mikrokapseloberfläche zusätzliche katalytische Eigenschaften verleihen oder die antibakterielle Wirkung einer Silberschicht. Organische Salze, insbesondere Ammoniumsalze, führen zu einer Kationisierung der Mikrokapseloberfläche, die dazu führt, dass diese besser an z.B. Textilien haftet. Auch Alkohole führen bei Einbindung über freie Hydroxylgruppen zur Bildung von H-Brücken, die ebenfalls bessere Anhaftung an Substrate erlauben. Eine zusätzliche Polyphosphazen-Schicht oder die Beschichtung mit anorganischen Salzen, bspw. Silikaten, führt zu einer zusätzlichen Erhöhung der Dichtigkeit ohne die Bioabbaubarkeit zu beeinflussen. Gemäß einer bevorzugten Ausführungsform enthält die dritte Schicht aktiviertes Melamin. Das Melamin fängt zum einen mögliche freie Aldehydanteile der Stabilitäts- und/oder Barriereschicht auf, erhöht die Dichtheit und Stabilität der Kapsel und kann zudem die Oberflächeneigenschaften der Mikrokapseln und damit das Anhaftungs- und Agglomerationsverhalten beeinflussen.

Aufgrund der geringen Wandstärken beträgt der Anteil der Barriereschicht an der Schale bezogen auf das Gesamtgewicht der Schale höchstens 30 Gew.-%. Der Anteil der Barriereschicht an der Schale bezogen auf das Gesamtgewicht der Schale kann beispielsweise 30 Gew.-%, 28 Gew.-%, 25 Gew.-%, 23 Gew.-%, 20 Gew.-%. 18 Gew.-%, 15 Gew.-%. 13 Gew.-%, 10 Gew.-%, 8 Gew.-%, oder 5 Gew.-% betragen. Für eine hohe Bioabbaubarkeit beträgt der Anteil höchstens 25 Gew.-% bezogen auf das Gesamtgewicht der Schale. Besonders bevorzugt beträgt der Anteil der Barriereschicht höchstens 20 Gew.-%. Der Anteil der Stabilitätsschicht an der Schale bezogen auf das Gesamtgewicht der Schale beträgt mindestens 40 Gew.-%. Der Anteil der Stabilitätsschicht an der Schale bezogen auf das Gesamtgewicht der Schale kann beispielsweise 40 Gew.-%, 43 Gew.-%, 45 Gew.-%, 48 Gew.-%, 50 Gew.-%. 53 Gew.-%, 55 Gew.-%. 58 Gew.-%, 60 Gew.-%, 63 Gew.-%, 65 Gew.-%, 68 Gew.-%, 70 Gew.-% 75 Gew.-%, 80 Gew.-%, 85 Gew.-%, oder 90 Gew.-%, betragen. Für eine hohe Bioabbaubarkeit beträgt der Anteil der Stabilitätsschicht mindestens 50 Gew.-%, besonders bevorzugt mindestens 60 Gew.-%. Der Anteil der dritten Schicht an der Schale bezogen auf das Gesamtgewicht der Schale beträgt höchstens 35 Gew.-%. Der Anteil der dritten Schicht an der Schale bezogen auf das Gesamtgewicht der Schale kann beispielsweise 35 Gew.-%, 33 Gew.-%, 30 Gew.-%, 28 Gew.-%, 25 Gew.-%, 23 Gew.-%, 20 Gew.-%. 18 Gew.-%, 15 Gew.-%. 13 Gew.-%, 10 Gew.-%, 8 Gew.-%, oder 5 Gew.-% betragen. Für eine hohe Bioabbaubarkeit beträgt der Anteil der dritten Schicht bevorzugt höchstens 30 Gew.-%, besonders bevorzugt höchstens 25 Gew.-%.

Die Größe der erfindungsgemäßen Mikrokapseln liegt im für Mikrokapseln üblichen Bereich. Dabei kann der Durchmesser im Bereich von 100 nm bis 1 mm liegen. Der Durchmesser ist abhängig von der genauen Kapselzusammensetzung und dem Herstellungsverfahren. Als Kennwert für die Größe der Kapseln wird regelmäßig das Peak-Maximum der Partikelgrößenverteilung verwendet. Bevorzugt liegt das Peak-Maximum der Partikelgrößenverteilung im Bereich von 1 μm bis 500 μm. Das Peak-Maximum der Partikelgrößenverteilung kann beispielsweise bei 1 μm, 2 μm, 3 μm, 4 μm, 5 μm, 10 μm, 15 μm, 20 μm, 30 μm, 40 μm, 50 μm, 60 μm, 70 μm, 80 μm, 90 μm, 100 μm, 120 μm, 140 μm, 160 μm, 180 μm 200 μm, 250 μm, 300 μm 350 μm, 400 μm, 450 μm oder 500 μm liegen. Gemäß einer besonders bevorzugten Ausführungsform haben die Mikrokapseln ein Peak-Maximum der Partikelgrößenverteilung von 10 μm bis 100 μm. Insbesondere liegt das Peak-Maximum der Partikelgrößenverteilung im Bereich von 10 μm bis 50 μm.

Der Einsatz des Emulsionsstabilisators zur Beschichtung der Barriereschicht stellt eine neue vom üblichen Einsatz des Emulsionsstabilisators, nämlich der Stabilisierung der Kernmaterialtröpfchen, zu unterscheidenden Verwendung dar.

Parfümzusammensetzung

Als Kernmaterial kommt mindestens eine Parfümzusammensetzung zum Einsatz, die insbesondere flüssig ist. Die in den beschriebenen Mikrokapseln verkapselte Parfümzusammensetzung umfasst bezogen auf das Gesamtgewicht aller in der Parfümzusammensetzung enthaltenen Riechstoffe:

a) ≤10 Gew.-%, vorzugsweise ≤8 Gew.-%, an Riechstoffen mit einem CLogP von ≤2,5 und einem Siedepunkt von ≥200°C;
b) ≥15 Gew.-%, vorzugsweise ≥20 Gew.-%, von mindestens einem Riechstoff mit einem CLogP von ≥4,0 und einem Siedepunkt von ≤275°C; und
c) ≥30 Gew.-%, vorzugsweise ≥40 Gew.-%, von mindestens einem Riechstoff mit einem Dampfdruck von ≥5 Pa bei 20°C

Der CLogP Wert ist der Flüssig-Flüssig-Verteilungskoeffizient für das System n-Octanol-Wasser und ein Maß für das Verhältnis zwischen Lipophilie und Hydrophilie einer Substanz. Ein Wert größer als 1 bezeichnet einen eher lipophilen Stoff, ein Wert unter 1 einen Stoff der besser in Wasser als in n-Octanol löslich ist. Der ClogP-Wert kann mit geeigneten Programmen, die kommerziell erhältlich sind, für jede Substanz berechnet werden. Falls nicht anders angegeben werden die hierin genannte Werte mit dem Programm EPI SUITE™ (v4.11) mit dem Modul KOWWIN™ v1.68 bestimmt.
Der Siedepunkt wurde, sofern nicht anders angegeben, mit dem Programm EPI SUITE™ (v4.11) mit dem Modul MPBPWIN v.1.43 (adapted Stein an Brown Method) bestimmt.
Der Dampfdruck bei 20°C wurde, sofern nicht anders angegeben, mit dem Programm EPI SUITE™ (v4.11) mit dem Modul MPBPWIN v.1.43 (modified grain method) bestimmt.
Beispiele für die Duftstoffe der Gruppe a) sind, ohne darauf beschränkt zu sein:

| Riechstoff | CAS-Nummer | CLogP | Siedepunkt [°C] |
|---|---|---|---|
| Dulcinyl | 55418-52-5 | 2,03 | 295.74 |
| Furaneolmethylether | 4077-47-8 | 0,62 | 214.32 |
| Methylcorylone | 13494-06-9 | -0,12 | 219.34 |
| Tonkanyle ii | 874-90-8 | 1,62 | 230.92 |
| 2-Amino-1.3-propanediol serinol | 534-03-2 | -1,55 | 216.16 |
| 2.3-Diethylpyrazine | 15707-24-1 | 2,02 | 209.41 |
| 3-(Methylthio)-1-hexanol | 51755-66-9 | 1,84 | 225.06 |
| Acetanisol | 100-06-1 | 1,75 | 229.45 |
| Acetate pa | 7493-74-5 | 2,46 | 268.49 |
| Aldehyd c 18 sog | 104-61-0 | 2,08 | 265.5 |
| Allylamylglycolat | 67634-00-8 | 2,34 | 217.66 |
| Anisaldehyd | 123-11-5 | 1,79 | 221.63 |
| Anisylacetat | 104-21-2 | 2,16 | 252.81 |
| Benzylacetat | 140-11-4 | 2,08 | 215.57 |
| Benzylaceton | 2550-26-7 | 1,96 | 228.74 |
| Benzylalkohol | 100-51-6 | 1,08 | 205.65 |
| Bicyclononalactone | 4430-31-3 | 1,55 | 271.33 |
| Birolan | 25322-68-3 | -2,3 | 353.51 |
| Buccoxime | 75147-23-8 | 2,2 | 264.34 |
| Calone | 28940-11-6 | 2,43 | 296.5 |
| Corps eglantine | 64988-06-3 | 2,35 | 231.03 |

(fortgesetzt)

| Riechstoff | CAS-Nummer | CLogP | Siedepunkt [°C] |
|---|---|---|---|
| Corylon | 80-71-7 | 1,29 | 241.48 |
| Cumarin | 91-64-5 | 1,51 | 290.74 |
| Dmbc | 100-86-7 | 2,44 | 228.78 |
| Ethylfruitat | 6413-10-1 | 1,3 | 217.74 |
| Ethylmaltol | 4940-11-8 | 0,3 | 283.37 |
| Ethylvanillin | 121-32-4 | 1,55 | 290.04 |
| Florol | 63500-71-0 | 2,16 | 229.55 |
| Frambinonmethylether | 104-20-1 | 2,04 | 264.7 |
| Guaiacol | 90-05-1 | 1,34 | 211.43 |
| Heliotropin | 120-57-0 | 1,77 | 256.96 |
| Homofuronol | 27538-09-6 | 1,31 | 275.21 |
| Hydratropaald.dim.acetal | 90-87-9 | 2,35 | 227.23 |
| Hydratropaaldehyd | 93-53-8 | 1,96 | 209.32 |
| Hydroxycitronellal rein | 107-75-5 | 2,11 | 241.19 |
| Hydrozimtalkohol | 122-97-4 | 2,06 | 243.15 |
| Indocolore | 2206-94-2 | 2,49 | 227.9 |
| Indoflor | 18096-62-3 | 1,84 | 264.36 |
| Indol | 120-72-9 | 2,05 | 250.04 |
| Isobutavan | 20665-85-4 | 2,3 | 314.04 |
| Koumalactone | 92015-65-1 | 1,89 | 276.66 |
| Kresylacetat (para) | 140-39-6 | 1,14 | 215.56 |
| Liffarome | 67633-96-9 | 2,47 | 213 |
| Linalool oxyde | 1365-19-1 | 2,08 | 232.9 |
| Maltol | 118-71-8 | -0,19 | 267.24 |
| Maltyl isobutyrat | 65416-14-0 | 1,7 | 286.06 |
| Menoxaline | 13708-12-8 | 1,66 | 265.62 |
| Methoxymelonal | 62439-41-2 | 2,32 | 205.16 |
| Methyl cinnamic alcohol | 1504-55-8 | 2,39 | 261.14 |
| Methyl diantilis | 5595-79-9 | 1,61 | 282.35 |
| Methyl octalactone | 39212-23-2 | 2 | 260.63 |
| Methylacetophenon para | 122-00-9 | 2,22 | 209.72 |
| Methylanthranilat | 134-20-3 | 2,26 | 263.57 |
| Methylcinnamat | 103-26-4 | 2,36 | 239.9 |
| Methylphenylacetat | 101-41-7 | 2,08 | 215.57 |
| Methylserinol | 115-69-5 | -1,1 | 227.56 |
| Methylzimtaldehyd (alpha) | 101-39-3 | 2,37 | 240.02 |
| Octalacton delta | 698-76-0 | 1,59 | 249.98 |
| Octalactone gamma | 104-50-7 | 1,59 | 248.37 |

(fortgesetzt)

| Riechstoff | CAS-Nummer | CLogP | Siedepunkt [°C] |
|---|---|---|---|
| Orcinyl 3 | 3209-13-0 | 2,14 | 230.36 |
| Oxane 969380 | 59323-76-1 | 2,35 | 209.28 |
| Oxyphenylon | 5471-51-2 | 1,48 | 280.39 |
| Phenoxyethylalkohol | 122-99-6 | 1,1 | 243.84 |
| Phenylacetaldehyd | 122-78-1 | 1,54 | 201.51 |
| Phenylacetaldehyd-glycerinacetal | 29895-73-6 | 0,77 | 312.53 |
| Phenylacetaldehyddimethylacetal | 101-48-4 | 1,93 | 219.76 |
| Phenylessigsaeure | 103-82-2 | 1,43 | 266.58 |
| Phenylethylalkohol | 60-12-8 | 1,57 | 224.85 |
| Phenylethylformiat | 104-62-1 | 2,02 | 217.34 |
| Plicatone | 41724-19-0 | 2,45 | 259.49 |
| Propylfruitat | 6290-17-1 | 1,72 | 231.07 |
| Styrolylacetat | 93-92-5 | 2,5 | 223.12 |
| Sulfurol (4-methvl-5-thiazol ethanol) | 137-00-8 | 1,11 | 259.88 |
| Sulfurol milky | 137-00-8 | 1,11 | 259.88 |
| Toluylaldehyd (para) | 104-87-0 | 2,26 | 201.5 |
| Trifernal | 16251-77-7 | 2,45 | 228.35 |
| Vanillin | 121-33-5 | 1,05 | 274.3 |
| Vetikolacetat | 68083-58-9 | 1,68 | 275.57 |
| Zimtaldehyd | 104-55-2 | 1,82 | 226.69 |
| Zimtalkohol | 104-54-1 | 1,84 | 248.6 |
| Diantheme | 4125-43-3 | 2,48 | 229.65 |
| Hydratropaalkohol | 1123-85-9 | 1,98 | 232.23 |
| Hydroxicitronellal synth. | 107-75-5 | 2,11 | 241.19 |
| Salicylaldehyd | 90-02-8 | 2,01 | 239.42 |
| Trivalon | 71566-51-3 | 1,39 | 241.44 |
| Anisalkohol | 105-13-5 | 1,16 | 243.83 |

Beispiele für Duftstoffe der Gruppe b) sind, ohne darauf beschränkt zu sein:

| Riechstoff | CAS-Nummer | CLogP | Siedepunkt [°C] |
|---|---|---|---|
| aldehyd c 11 | 112-44-7 | 4,25 | 234.81 |
| aldehyd c 11.(en) | 112-45-8 | 4,12 | 233.44 |
| aldehyd c 12 | 112-54-9 | 4,75 | 252.62 |
| aldehyd c 12.mna | 110-41-8 | 4,67 | 241.99 |
| aldehyd supra | 143-14-6 | 4,04 | 240.39 |
| alkohol c 12 | 112-53-8 | 4,77 | 272.96 |
| allylcyclohexylpropionat | 2705-87-5 | 4,47 | 254.19 |

(fortgesetzt)

| Riechstoff | CAS-Nummer | CLogP | Siedepunkt [°C] |
|---|---|---|---|
| azarbre | 68845-36-3 | 4,11 | 259.5 |
| boisiris | 68845-00-1 | 5,44 | 256.67 |
| caryophyllene beta | 87-44-5 | 6,3 | 256.8 |
| cedramber | 19870-74-7 | 5,03 | 265.3 |
| cetonal | 73398-85-3 | 5,2 | 270.68 |
| cis-3-hexenyl-2-methylbutyrat | 53398-85-9 | 4,01 | 224.17 |
| citronellyl butyrate | 141-16-2 | 5,54 | 272.03 |
| citronellyl formate | 105-85-1 | 4,01 | 220.77 |
| citronellyl isobutyrate | 97-89-2 | 5,47 | 262.03 |
| citronellylacetat | 150-84-5 | 4,56 | 237.59 |
| citronellylpropionat | 141-14-0 | 5,05 | 255.26 |
| coniferan pure | 67874-72-0 | 4,91 | 250.47 |
| cyclomyral | 68991-96-8 | 4,38 | 271.8 |
| cymol (para) =cymene | 99-87-6 | 4 | 178.34 |
| damarose alpha | 43052-87-5 | 4,29 | 259.84 |
| damascenon bm | 23696-85-7 | 4,21 | 265.13 |
| damascenone | 23696-85-7 | 4,21 | 265.13 |
| damascone alpha | 43052-87-5 | 4,29 | 259.84 |
| damascone beta | 35044-68-9 | 4,42 | 262.93 |
| decylacetat | 112-17-4 | 4,79 | 247.73 |
| dihydro-beta-jonon | 17283-81-7 | 4,35 | 257.7 |
| dihydrofloriffone td | 57378-68-4 | 4,16 | 255.99 |
| dihydroterpinylacetat=menthanylacetat | 58985-18-5 | 4,42 | 232.55 |
| diphenylether | 101-84-8 | 4,05 | 269.66 |
| dynascone pur | 56973-85-4 | 4,45 | 257.9 |
| ethyl damascenate | 35044-59-8 | 4,25 | 247.88 |
| ethyl-2-4-decadienoate | 3025-30-7 | 4,36 | 258.41 |
| ethyllinalylacetat | 61931-80-4 | 4,88 | 247.05 |
| ethylsafranat | 35044-59-8 | 4,25 | 247.88 |
| fleuramon | 137-03-1 | 4 | 263.53 |
| floral super | 71077-31-1 | 4,38 | 241.28 |
| floramat | 67801-64-3 | 4,77 | 228.23 |
| folenox | 26619-69-2 | 4,38 | 247.81 |
| frutonile | 69300-15-8 | 4,2 | 250.43 |
| galbanolene super | 16356-11-9 | 5,18 | 196.6 |
| galbascone bht captiv | 56973-85-4 | 4,45 | 257.9 |
| geraldehyde | 762-26-5 | 4,43 | 253.84 |
| geranylisobutyrat | 2345-26-8 | 5,38 | 272.6 |

(fortgesetzt)

| Riechstoff | CAS-Nummer | CLogP | Siedepunkt [°C] |
|---|---|---|---|
| geranylpropionat | 105-90-8 | 4,97 | 266.06 |
| givescone | 57934-97-1 | 4,83 | 259.38 |
| gyrane | 24237-00-1 | 4,07 | 214.86 |
| herbanate | 116044-44-1 | 4,13 | 254.37 |
| herbavert | 67583-77-1 | 4,12 | 193.28 |
| hexylhexanoat | 6378-65-0 | 4,79 | 247.73 |
| irone alpha | 79-69-6 | 4,71 | 271.32 |
| isoamylhexanoate | 2198-61-0 | 4,23 | 218.34 |
| isobornylisobutyrat | 85586-67-0 | 4,77 | 251.13 |
| isodamascone | 33673-71-1 | 4,29 | 259.84 |
| isononylacetat (neononylacetat) | 58430-94-7 | 4,12 | 198.85 |
| jonon beta synth. | 14901-07-6 | 4,42 | 262.93 |
| jonon rein 100 | 127-41-3 | 4,29 | 259.48 |
| koavone | 86115-11-9 | 4,19 | 207.93 |
| linalylacetat | 115-95-7 | 4,39 | 228.95 |
| mandarinenaldehyd | 20407-84-5 | 4,53 | 257.92 |
| melusat | 67707-75-9 | 4,12 | 198.85 |
| menthylacetat-rf | 89-48-5 | 4,39 | 234.5 |
| mercapto-8-menthene-1 para | 71159-90-5 | 4,74 | 224.11 |
| methyl ionone gamma coeur #1 | 127-51-5 | 4,84 | 271.6 |
| methyloctylacetaldehvd (moa) | 19009-56-4 | 4,18 | 223.64 |
| myrcenylacetat | 1118-39-4 | 4,47 | 221.78 |
| neobutenone alpha | 56973-85-4 | 4,45 | 257.9 |
| nerylacetat | 141-12-8 | 4,48 | 248.97 |
| nerylpropionat | 105-91-9 | 4,97 | 266.06 |
| nopylacetat | 128-51-8 | 4,3 | 259.16 |
| ocimenylacetat | 72214-23-4 | 4,39 | 228.95 |
| otbca | 88-41-5 | 4,42 | 232.55 |
| ozofleur | 181258-89-9 | 5,1 | 228.54 |
| peranat | 90397-38-9 | 4,65 | 225.84 |
| phellandrene alpha extra | 99-83-2 | 4,62 | 165.01 |
| phenylethylisoamylether | 56011-02-0 | 4,16 | 255.27 |
| pinane | 473-55-2 | 4,35 | 149.9 |
| pinen beta | 127-91-3 | 4,35 | 150.8 |
| pinene alpha | 80-56-8 | 4,27 | 157.25 |
| poirenate | 2511-00-4 | 4,04 | 226.74 |
| poivrol | 68966-86-9 | 4,62 | 259.95 |
| ptbca 25 cis | 32210-23-4 | 4,42 | 232.55 |

(fortgesetzt)

| Riechstoff | CAS-Nummer | CLogP | Siedepunkt [°C] |
|---|---|---|---|
| ptbca 40 cis | 32210-23-4 | 4,42 | 232.55 |
| sandalore | 65113-99-7 | 5,15 | 273.81 |
| tangerinal 10 dipg semi-captive | 21944-98-9 | 4,53 | 257.92 |
| terpinen gamma | 99-85-4 | 4,75 | 169.36 |
| terpinene alpha p&f | 99-86-5 | 4,75 | 169.36 |
| terpinolen | 586-62-9 | 4,88 | 178.17 |
| terpinyl methyl ether 90 | 14576-08-0 | 4,03 | 196.38 |
| tetrameran | 1322-58-3 | 4,44 | 250.01 |
| thesaron | 22471-55-2 | 4,42 | 235.87 |
| trithioacetone | 828-26-2 | 7,6 | 269.84 |
| troenan | 80480-24-6 | 4,35 | 253.14 |
| undecavertol | 81782-77-6 | 4,05 | 240.58 |
| undecylenalkohol alkohol c 11 en | 112-43-6 | 4,14 | 254.95 |
| veloutone | 65443-14-3 | 4,34 | 257.68 |
| violette feuilles non dec. | 06.08.8024 | 4,29 | 259.48 |
| violettyne mip 991805 | 166432-52-6 | 4,68 | 204.87 |

Beispiele für Duftstoffe der Gruppe c) sind, ohne darauf beschränkt zu sein:

| Riechstoff | CAS-Nummer | Dampfdruck[Pa] 20°C |
|---|---|---|
| linalool | 78-70-6 | 6.946 |
| peelessenz | 78-70-6 | 6.946 |
| dihydromyrcenol | 53219-21-9 | 6.986 |
| indocolore semi-captive | 2206-94-2 | 7.586 |
| ethylphenylacetat | 101-97-3 | 7.946 |
| citral ar | 5392-40-5 | 7.946 |
| citral n | 5392-40-5 | 7.946 |
| menthylacetat-rf | 89-48-5 | 7.946 |
| poirenate | 2511-00-4 | 8.066 |
| ethylacetat | 141-78-6 | 10265 |
| livescone | 3720-16-9 | 10.292 |
| decenal-4-trans | 65405-70-1 | 10.385 |
| myrcenylacetat | 1118-39-4 | 10.492 |
| orivone | 16587-71-6 | 10.732 |
| methylheptincarbonat | 111-12-6 | 11.052 |
| citronellyl formate | 105-85-1 | 11.065 |
| ozofleur | 181258-89-9 | 11.479 |
| carvon l | 6485-40-1 | 11.505 |

(fortgesetzt)

| Riechstoff | CAS-Nummer | Dampfdruck[Pa] 20°C |
|---|---|---|
| linalylacetat | 115-95-7 | 11.519 |
| benzylpropionat | 122-63-4 | 11.519 |
| montaverdi | 188570-78-7 | 11.585 |
| phenylacetaldehyddimethylacetal | 101-48-4 | 11.665 |
| firascone | 815580-59-7 | 11.692 |
| delphone | 4819-67-4 | 11.705 |
| cyclohexylethylacetat | 21722-83-8 | 11.985 |
| sclareolate | 319002-92-1 | 12.079 |
| centifolether | 120811-92-9 | 12.132 |
| bergamal | 22418-66-2 | 12.998 |
| allylamylglycolat | 67634-00-8 | 13.025 |
| phenylethylformiat | 104-62-1 | 13.252 |
| mintonat | 67859-96-5 | 13.332 |
| neofolione | 111-79-5 | 13.732 |
| cis-3-hexenyl butyrate | 16491-36-4 | 13.732 |
| methylphenylacetat | 101-41-7 | 13.865 |
| 9-decenal | 39770-05-3 | 15.198 |
| isocyclocitral | 1335-66-6 | 15.465 |
| benzyl acetat | 140-11-4 | 16.665 |
| aphermate | 25225-08-5 | 16.665 |
| liffarome | 67633-96-9 | 16.665 |
| kresvlacetat (para) | 140-39-6 | 17.065 |
| linalylformiat | 115-99-1 | 17.731 |
| dihydro anethol | 104-45-0 | 17.998 |
| freskomenthe | 14765-30-1 | 19.065 |
| octylacetat | 112-14-1 | 19.465 |
| allylheptanoat - allyloenanthat | 142-19-8 | 20.265 |
| amyl vinyl carbinol | 3391-86-4 | 20.398 |
| nonadienal | 557-48-2 | 20.798 |
| ethylcaprylat | 106-32-1 | 21.064 |
| aldehyd c 10 | 112-31-2 | 21.064 |
| hexylbutyrat | 2639-63-6 | 21.598 |
| citronellal | 106-23-0 | 22.664 |
| gyrane | 24237-00-1 | 22.931 |
| claritone | 74338-72-0 | 24.797 |
| methoxymelonal | 62439-41-2 | 24.931 |
| hexenyl-cis-3-isobutyrat | 41519-23-7 | 25.331 |
| toluylaldehyd (para) | 104-87-0 | 25.864 |

(fortgesetzt)

| Riechstoff | CAS-Nummer | Dampfdruck[Pa] 20°C |
|---|---|---|
| hydratropaaldehyd | 93-53-8 | 27.197 |
| acetophenon | 98-86-2 | 29.464 |
| 2-isopropyl-4-methylthiazole | 15679-13-7 | 29.864 |
| dimetol | 13254-34-7 | 31.597 |
| sultanene captive | 15848-49-4 | 31.597 |
| koavone | 86115-11-9 | 32.264 |
| methylbenzoat | 93-58-3 | 34.263 |
| damascia (frutinat) | 35206-51-0 | 46.796 |
| tetrahydrocitral | 5988-91-0 | 48.129 |
| phenylethylmethylether | 3558-60-9 | 50.129 |
| cuminaldehyd | 122-03-2 | 50.529 |
| aldehyd c 09 | 124-19-6 | 51.462 |
| dimethylsulfid | 75-18-3 | 52129 |
| aldehyd c 11 | 112-44-7 | 52.395 |
| amylvalerianat, iso-iso- | 659-70-1 | 53.062 |
| tetrahydrolinalool | 78-69-3 | 53.728 |
| lilessenz | 78-69-3 | 53.728 |
| octalactone gamma | 104-50-7 | 54.662 |
| galbanolene super | 16356-11-9 | 56.128 |
| benzylaceton | 2550-26-7 | 56.128 |
| aldehyd c 11.(en) | 112-45-8 | 56.395 |
| toscanol | 16510-27-3 | 56.395 |
| otbca | 88-41-5 | 56.662 |
| agrunitril | 51566-62-2 | 57.195 |
| methylpamplemousse | 67674-46-8 | 57.861 |
| amarocit | 67674-46-8 | 57.861 |
| geranylformiat | 105-86-2 | 58.795 |
| phenylethylacetat | 103-45-7 | 58.928 |
| methyloctincarbonat | 111-80-8 | 59.061 |
| ptbca 40 cis | 32210-23-4 | 59.195 |
| ptbca 25 cis | 32210-23-4 | 59.195 |
| dihydroterpinylacetat=menthanylacetat | 58985-18-5 | 59.195 |
| fenchylacetat | 13851-11-1 | 59.328 |
| velberry | 13431-57-7 | 59.999 |
| rosenoxid r | 16409-43-1 | 60.795 |
| rosenoxid l | 3033-23-6 | 60.795 |
| propylfruitat | 6290-17-1 | 61.061 |
| ethylheptanoat | 106-30-9 | 63.061 |

(fortgesetzt)

| Riechstoff | CAS-Nummer | Dampfdruck[Pa] 20°C |
|---|---|---|
| corps eglantine | 64988-06-3 | 64.128 |
| isoamyl-2-methylbutyrat | 27625-35-0 | 64.261 |
| 2.3 diethylpyrazine | 15707-24-1 | 64.528 |
| irolene p | 29127-83-1 | 64.661 |
| dimethyloctenon | 2550-11-0 | 65.327 |
| cyclopidene | 40203-73-4 | 65.327 |
| allylcapronat | 123-68-2 | 66.261 |
| methylacetophenon para | 122-00-9 | 67.194 |
| hydrochinondimethylaether | 150-78-7 | 67.194 |
| 2-cyclopentyl cyclopentanone | 4884-24-6 | 68.394 |
| dibutyl sulphide | 544-40-1 | 69.727 |
| ocimenylacetat | 72214-23-4 | 71.727 |
| trifernal | 16251-77-7 | 73.993 |
| 4-methylthio-4-methyl-2-pentanone | 23550-40-5 | 81.326 |
| citrathal | 147060-73-9 | 82.659 |
| citral dimethylacetal | 7549-37-3 | 82.659 |
| alkohol c 08 | 111-87-5 | 83.059 |
| hexenol (beta gamma) | 928-96-1 | 83.459 |
| octanol-3 | 589-98-0 | 83.593 |
| isobornylacetat | 125-12-2 | 85.059 |
| acetessigester | 141-97-9 | 85.992 |
| givescone | 57934-97-1 | 87.326 |
| guaiacol | 90-05-1 | 88.526 |
| isopentyrat | 80118-06-5 | 91.992 |
| terpinolen | 586-62-9 | 93.592 |
| benzaldehyd rein | 100-52-7 | 93.992 |
| methyloctylacetaldehyd | 19009-56-4 | 95.058 |
| vivaldie | 292605-05-1 | 95.458 |
| tetrahydromyrcenol | 18479-57-7 | 95.725 |
| styrolylacetat | 93-92-5 | 97.725 |
| methylnonylketon | 112-12-9 | 98.791 |
| hexenylacetat | 3681-71-8 | 106.12 |
| terpinen gamma | 99-85-4 | 108.12 |
| kresylmethylether (para) | 104-93-8 | 111.85 |
| orrisate | 816-19-3 | 133.32 |
| hexylacetat | 142-92-7 | 135.98 |
| aldehyd c 12.mna | 110-41-8 | 139.98 |
| aldehyd c 08 | 124-13-0 | 139.98 |

(fortgesetzt)

| Riechstoff | CAS-Nummer | Dampfdruck[Pa] 20°C |
|---|---|---|
| myroxide | 69103-20-4 | 143.98 |
| ethylbutyrat | 105-54-4 | 1453.2 |
| 2.6-dimethylpyrazin | 108-50-9 | 147.98 |
| amylpropionat | 624-54-4 | 157.32 |
| butylbutyrate | 109-21-7 | 165.31 |
| methylheptenon | 110-93-0 | 169.31 |
| ethylcapronat | 123-66-0 | 169.31 |
| methylhexylketon | 111-13-7 | 177.31 |
| acetoin | 513-86-0 | 181.31 |
| phellandrene alpha extra | 99-83-2 | 181.31 |
| isobutylacetate | 110-19-0 | 1826.5 |
| limetol | 7392-19-0 | 191.98 |
| cerezoate | 1617-23-8 | 198.65 |
| neoproxen | 31996-78-8 | 198.65 |
| cyclamenaldehyd extra l.g. | 103-95-7 | 2053.1 |
| pinane | 473-55-2 | 209.31 |
| isoamylpropionat | 105-68-0 | 235.98 |
| pinen beta p&f | 127-91-3 | 239.98 |
| ethylisobutyrat | 97-62-1 | 2439.7 |
| hexenyl-3-formiat | 33467-73-1 | 273.31 |
| methylbutyl-2 propionate | 2438-20-2 | 274.64 |
| manzanate | 39255-32-8 | 274.64 |
| phenylacetaldehyd | 122-78-1 | 28.93 |
| ethyl tiglate | 5837-78-5 | 289.3 |
| triplal | 27939-60-2 | 31.73 |
| diethylmalonat | 105-53-3 | 32.53 |
| menthon | 14073-97-3 | 33.73 |
| isomenthone | 491-07-6 | 33.73 |
| ethylamylketon | 541-85-5 | 331.97 |
| aldehyd c 07 | 111-71-7 | 337.3 |
| isononylacetat (neononylacetat) | 58430-94-7 | 34.53 |
| rumacetal | 1670-47-9 | 36.13 |
| 2-isobutylthiazole | 18640-74-9 | 36.13 |
| pinene alpha | 80-56-8 | 390.63 |
| prenylacetate | 1191-16-8 | 401.3 |
| isobutyl isobutyrate | 97-85-8 | 411.96 |
| hexenal-2-trans | 6728-26-3 | 455.96 |
| ethylvalerat | 539-82-2 | 463.96 |

(fortgesetzt)

| Riechstoff | CAS-Nummer | Dampfdruck[Pa] 20°C |
|---|---|---|
| isopropyl methyl-2-butyrate | 66576-71-4 | 517.29 |
| isovaleraldehyd | 590-86-3 | 5306.2 |
| melonal | 106-72-9 | 69.86 |
| hexanol | 111-27-3 | 78.26 |
| ethyl-2-methylbutyrat | 7452-79-1 | 786.6 |
| aldehyd c 06 | 66-25-1 | 941.25 |

Vorzugsweise werden Mischungen von Riechstoffen eingesetzt, zum Beispiel mindestens zwei oder mehr verschiedene Riechstoffe der Gruppen b) und/oder mindestens zwei oder mehr verschiedene Riechstoffe der Gruppe c).

In verschiedenen Ausführungsformen der Erfindung kann der Anteil der Riechstoffe der Gruppe a) auch kleiner als 6, kleiner als 5, kleiner als 4, kleiner als 3, kleiner als 2 oder kleiner als 1 Gew.-% sein. In verschiedenen Ausführungsformen kann die Parfümzusammensetzung keine Riechstoffe der Gruppe a) enthalten. In alternativen Ausführungsformen enthält die Parfümzusammensetzung Riechstoffe der Gruppe a), allerdings in Mengen unter den hier angegebenen Obergrenzen.

In verschiedenen Ausführungsformen können die Riechstoffe der Gruppen b) und c) gemeinsam mindestens 60, vorzugsweise mindestens 65, mindestens 70, mindestens 75, mindestens 80, mindestens 85 oder mindestens 90 Gew.-% der Gesamtriechstoffe der Parfümzusammensetzung ausmachen.

Die hierin angegebenen Mengenangaben beziehen sich auf die Summe aller Riechstoffe in der Parfümzusammensetzung, sofern nicht anders angegeben. Alternativ können sie sich auch auf das Gesamtgewicht der Parfümzusammensetzung beziehen, beispielsweise wenn die Formulierungshilfsmittel enthält.

Zusätzlich zu den oben genannten Duftstoffen der Gruppen a)-c) können weitere Duftstoffe als Bestandteile der Parfümzusammensetzung eingesetzt werden, solange die Merkmale a)-c) erfüllt sind. Diese zusätzlichen Duftstoffen sind keinen besonderen Beschränkungen unterworfen. So können einzelne Duftstoffverbindungen natürlichen oder synthetischen Ursprungs, z.B. vom Typ der Ester, Ether, Aldehyde, Ketone, Alkohole und Kohlenwasserstoffe, verwendet werden. Die Kernmaterialien können ferner auch natürliche Duftstoffgemische enthalten, wie sie aus pflanzlichen Quellen zugänglich sind, z.B. Pine-, Citrus-, Jasmin-, Patchouly-, Rosen- oder Ylang-Ylang-Öl. Ebenfalls geeignet sind Muskateller-Salbeiöl, Kamillenöl, Nelkenöl, Melissenöl, Minzöl, Zimtblätteröl, Lindenblütenöl, Wacholderbeeröl, Vetiveröl, Olibanumöl, Galbanumöl und Labdanumöl sowie Orangenblütenöl, Neroliöl, Orangenschalenöl und Sandelholzöl.

Hierin wurde die Dichtheit der Mikrokapseln für das Duftöl Weiroclean der Fa. Kitzing bestimmt. Weiroclean weist die folgenden Komponenten auf (mit Anteil bezogen auf das Gesamtgewicht):

| | |
|---|---|
| 1-(1,2,3,4,5,6,7,8-Octahydro-2,3,8,8-tetramethyl-2-naphthalenyl)ethanone | 25-50 % |
| Benzoic Acid, 2-hydroxy-, 2-hexyl ester | 10-25 % |
| Phenylmethyl benzoate | 5-10% |
| 3-Methyl-4-(2,6,6-trimethyl-2-cyclohexenyl)-3-buten-2-one | 1-5 % |
| 3,7-Dimethyl-6-octen-1-ol | 1-5 % |
| 3-Methyl-5-phenylpentanol | 1-5 % |
| 2,6-Dimethyloct-7-en-2-ol | 1-5 % |
| 4-(2,6,6-Trimethylcyclohex-1-eneyl)-but-3-ene-2-one | 1-5 % |
| 3a,4,5,6,7,7a-Hexahydro-4,7-methano-1H-inden-6-yl Propanoate | 1-5 % |
| 2-tert-Butylcyclohexyl acetate | 1-5 % |
| 2-Heptylcyclopentanone | 1-5 % |
| Pentadecan-15-olide | 1-5 % |
| 2H-1-Benzopyran-2-one | 0,1-1 % |
| 2,6-Di-tert-butyl-p-cresol | 0,1-1 % |
| 4-Methyl-3-decen-5-ol | 0,1-1 % |
| 2,4-Dimethyl-3-cyclohexen-1-carboxaldehyde | 0,1-1 % |
| [(2E)-3,7-dimethylocta-2,6-dienyl] acetate | 0,1-1 % |
| Allyl hexanoate | 0,1-1 % |
| 2-Methylundecanal | 0,1-1 % |

(fortgesetzt)

| | |
|---|---|
| 10-Undecenal | 0,1-1 % |
| cis-3,7-Dimethyl-2,6-octadienyl ethanoate | 0,1-1 % |
| 3,7,11-Trimethyldodeca-1,6,10-trien-3-ol | 0,1-1 % |
| Undecan-2-one | 0,1-1 % |

Wasch- oder Reinigungsmittel enthaltend Mikrokapseln

Aufgrund der Robustheit bzw. Dichtigkeit dieser bioabbaubaren Kapsel können diese in vorteilhafter Weise in einem Wasch- und Reinigungsmittel oder in kosmetischen Mitteln eingesetzt werden, wobei diese Mittel Weichspüler, Textilpflegemittel, feste Waschmittel, beispielsweise Granulate oder Pulver, Flüssigwaschmittel, Haushaltsreiniger, Bad- und WC-Reiniger, Handgeschirrspülmittel, Maschinengeschirrspülmittel, Handseifen, Shampoos, Duschgele, Cremes und ähnliche umfassen, aber nicht auf diese beschränkt sind.

Die Wasch- oder Reinigungsmittel der Erfindung umfassen vorzugsweise mindestens einen Inhaltsstoff ausgewählt aus der Gruppe der Tenside, Enzyme, Gerüststoffe und aufziehverstärkenden Mittel.

Die Wasch- und Reinigungsmittel können ferner anionische, nichtionische, kationische, amphotere oder zwitterionische Tenside oder Mischungen davon enthalten. Ferner können diese Mittel in fester oder flüssiger Form vorliegen. In verschiedenen Ausführungsformen umfassen die Tenside insbesondere mindestens ein anionisches Tensid und/oder mindestens ein nichtionisches Tensid.

Geeignete nichtionische Tenside sind insbesondere Ethoxylierungs- und/oder Propoxylierungsprodukte von Alkylglykosiden und/oder linearen oder verzweigten Alkoholen mit jeweils 12 bis 18 C-Atomen im Alkylteil und 3 bis 20, vorzugsweise 4 bis 10 Alkylethergruppen. Weiterhin sind entsprechende Ethoxylierungs- und/oder Propoxylierungsprodukte von N-Alkylaminen, vicinalen Diolen, Fettsäureestern und Fettsäureamiden, die hinsichtlich des Alkylteils den genannten langkettigen Alkoholderivaten entsprechen, sowie von Alkylphenolen mit 5 bis 12 C-Atomen im Alkylrest brauchbar.

Geeignete anionische Tenside sind insbesondere Seifen und solche, die Sulfat- oder Sulfonat-Gruppen mit bevorzugt Alkaliionen als Kationen enthalten. Verwendbare Seifen sind bevorzugt die Alkalisalze der gesättigten oder ungesättigten Fettsäuren mit 12 bis 18 C-Atomen. Derartige Fettsäuren können auch in nicht vollständig neutralisierter Form eingesetzt werden. Zu den brauchbaren Tensiden des Sulfat-Typs gehören die Salze der Schwefelsäurehalbester von Fettalkoholen mit 12 bis 18 C-Atomen und die Sulfatierungsprodukte der genannten nichtionischen Tenside mit niedrigem Ethoxylierungsgrad. Zu den verwendbaren Tensiden vom Sulfonat-Typ gehören lineare Alkylbenzolsulfonate mit 9 bis 14 C-Atomen im Alkylteil, Alkansulfonate mit 12 bis 18 C-Atomen, sowie Olefinsulfonate mit 12 bis 18 C-Atomen, die bei der Umsetzung entsprechender Monoolefine mit Schwefeltrioxid entstehen, sowie alpha-Sulfofettsäureester, die bei der Sulfonierung von Fettsäuremethyl- oder -ethylestern entstehen.

Kationische Tenside werden vorzugsweise unter den Esterquats und/oder den quaternären Ammoniumverbindungen (QAV) gemäß der allgemeinen Formel $(R^{I})(R^{II})(R^{III})(R^{IV})N^{+} X^{-}$ ausgewählt, in der $R^{I}$ bis $R^{IV}$ für gleiche oder verschiedene $C_{1-22}$-Alkylreste, $C_{7-28}$-Arylalkylreste oder heterozyklische Reste stehen, wobei zwei oder im Falle einer aromatischen Einbindung wie im Pyridin sogar drei Reste gemeinsam mit dem Stickstoffatom den Heterozyklus, z.B. eine Pyridinium- oder Imidazoliniumverbindung, bilden, und X- für Halogenidionen, Sulfationen, Hydroxidionen oder ähnliche Anionen steht. QAV sind durch Umsetzung tertiärer Amine mit Alkylierungsmitteln, wie z.B. Methylchlorid, Benzylchlorid, Dimethylsulfat, Dodecylbromid, aber auch Ethylenoxid herstellbar. Die Alkylierung von tertiären Aminen mit einem langen Alkyl-Rest und zwei Methyl-Gruppen gelingt besonders leicht, auch die Quaternierung von tertiären Aminen mit zwei langen Resten und einer Methyl-Gruppe kann mit Hilfe von Methylchlorid unter milden Bedingungen durchgeführt werden. Amine, die über drei lange Alkyl-Reste oder Hydroxy-substituierte Alkyl-Reste verfügen, sind wenig reaktiv und werden z.B. mit Dimethylsulfat quaterniert. In Frage kommende QAV sind beispielweise Benzalkoniumchlorid (N-Alkyl-N,N-dimethylbenzylammoniumchlorid), Benzalkon B (m,p-Dichlorbenzyldimethyl-$C_{12}$-alkylammoniumchlorid, Benzoxoniumchlorid (Benzyldodecyl-bis-(2-hydroxyethyl)-ammoniumchlorid), Cetrimoniumbromid (N-Hexadecyl-N,N-trimethyl-ammoniumbromid), Benzetoniumchlorid (N,N Dimethyl-N [2-[2-[p-(1,1,3,3-tetramethylbutyl)phenoxy]-ethoxy] -ethyl]-benzyl-ammoniumchlorid), Dialkyldimethylammoniumchloride wie Di-n-decyl-dimethyl-ammoniumchlorid, Didecyldimethylammoniumbromid, Dioctyl-dimethyl-ammoniumchlorid, 1-Cetylpyridiniumchlorid und Thiazolinjodid sowie deren Mischungen. Bevorzugte QAV sind die Benzalkoniumchloride mit $C_8$-$C_{22}$-Alkylresten, insbesondere $C_{12}$-$C_{14}$-Alkylbenzyl-dimethylammoniumchlorid.

Bevorzugte Esterquats sind Methyl-N-(2-hydroxyethyl)-N,N-di(talgacyl-oxyethyl)ammonium-metho-sulfat, Bis-(palmitoyl)-ethyl-hydroxyethyl-methyl-ammonium-methosulfat oder Methyl-N,N-bis(acyl-oxyethyl)-N-(2-hydroxyethyl)ammonium-methosulfat. Handelsübliche Beispiele sind die von der Firma Stepan unter dem Warenzeichen Stepantex® vertriebenen Methylhydroxyalkyldialkoyloxyalkylammoniummethosulfate oder die unter dem Handelsnamen

Dehyquart® bekannten Produkte der Firma BASF SE beziehungsweise die unter der Bezeichnung Rewoquat® bekannten Produkte des Herstellers Evonik.

Die Mengen der einzelnen Inhaltsstoffe in den Wasch- und Reinigungsmitteln orientieren sich jeweils am Einsatzzweck der betreffenden Zusammensetzung und der Fachmann ist mit den Größenordnungen der einzusetzenden Mengen der Inhaltsstoffe grundsätzlich vertraut oder kann diese der zugehörigen Fachliteratur entnehmen. Je nach Einsatzzweck der Zusammensetzungen wird man beispielsweise den Tensidgehalt höher oder niedriger wählen. Üblicherweise kann z.B. der Tensidgehalt beispielsweise von Waschmitteln von 10 bis 50 Gew.-%, bevorzugt von 12,5 bis 30 Gew.-% und stärker bevorzugt von 15 bis 25 Gew.-% betragen.

Die Wasch- und Reinigungsmittel können beispielsweise mindestens einen wasserlöslichen und/oder wasserunlöslichen, organischen und/oder anorganischen Builder enthalten. Zu den wasserlöslichen organischen Buildersubstanzen gehören Polycarbonsäuren, insbesondere Citronensäure und Zuckersäuren, monomere und polymere Aminopolycarbonsäuren, insbesondere Methylglycindiessigsäure, Nitrilotriessigsäure und Ethylendiamintetraessigsäure sowie Polyasparaginsäure, Polyphosphonsäuren, insbesondere Aminotris(methylenphosphonsäure), Ethylendiamintetrakis(methylenphosphonsäure) und 1-Hydroxyethan-1,1-diphosphonsäure, polymere Hydroxyverbindungen wie Dextrin sowie polymere (Poly-)carbonsäuren, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Die organischen Buildersubstanzen können, insbesondere zur Herstellung flüssiger Wasch- und Reinigungsmittel, in Form wässriger Lösungen, vorzugsweise in Form 30- bis 50-gewichtsprozentiger wässriger Lösungen eingesetzt werden. Alle genannten Säuren werden in der Regel in Form ihrer wasserlöslichen Salze, insbesondere ihre Alkalisalze, eingesetzt.

Organische Buildersubstanzen können, falls gewünscht, in Mengen bis zu 40 Gew.-%, insbesondere bis zu 25 Gew.-% und vorzugsweise von 1 Gew.-% bis 8 Gew.-% enthalten sein. Mengen nahe der genannten Obergrenze werden vorzugsweise in pastenförmigen oder flüssigen, insbesondere wasserhaltigen, erfindungsgemäßen Mitteln eingesetzt. Wäschenachbehandlungsmittel, wie z.B. Weichspüler, können gegebenenfalls auch frei von organischem Builder sein.

Als wasserlösliche anorganische Buildermaterialien kommen insbesondere Alkalisilikate und Polyphosphate, vorzugsweise Natriumtriphosphat, in Betracht. Als wasserunlösliche, wasserdispergierbare anorganische Buildermaterialien können insbesondere kristalline oder amorphe Alkalialumosilikate, falls gewünscht, in Mengen von bis zu 50 Gew.-%, vorzugsweise nicht über 40 Gew.-% und in flüssigen Zusammensetzungen insbesondere von 1 Gew.-% bis 5 Gew.-%, eingesetzt werden. Unter diesen sind die kristallinen Natriumalumosilikate in Waschmittelqualität, insbesondere Zeolith A, P und gegebenenfalls X, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 $\mu$m auf und bestehen vorzugsweise zu wenigstens 80 Gew.-% aus Teilchen mit einer Größe unter 10 $\mu$m.

Geeignete Substitute beziehungsweise Teilsubstitute für das genannte Alumosilikat sind kristalline Alkalisilikate, die allein oder im Gemisch mit amorphen Silikaten vorliegen können. Die in Wasch- oder Reinigungsmitteln als Gerüststoffe brauchbaren Alkalisilikate weisen vorzugsweise ein molares Verhältnis von Alkalioxid zu $SiO_2$ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis $Na_2O$:$SiO_2$ von 1:2 bis 1:2.8. Als kristalline Silikate, die allein oder im Gemisch mit amorphen Silikaten vorliegen können, werden vorzugsweise kristalline Schichtsilikate der allgemeinen Formel $Na_2Si_xO_{2x+1}.yH_2O$ eingesetzt, in der x, das sogenannte Modul, eine Zahl von 1,9 bis 4 und y eine Zahl von 0 bis 20 ist und bevorzugte Werte für x 2, 3 oder 4 sind. Bevorzugte kristalline Schichtsilikate sind solche, bei denen x in der genannten allgemeinen Formel die Werte 2 oder 3 annimmt. Insbesondere sind sowohl beta- als auch delta-Natriumdisilikate ($Na_2Si_2O_5 \cdot {}_yH_2O$) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können eingesetzt werden. In einer weiteren bevorzugten Ausführungsform wird ein kristallines Natriumschichtsilikat mit einem Modul von 2 bis 3 eingesetzt, wie es aus Sand und Soda hergestellt werden kann. Kristalline Natriumsilikate mit einem Modul im Bereich von 1,9 bis 3,5 werden in einer weiteren bevorzugten Ausführungsform der Textilbehandlungs- oder Reinigungsmittel eingesetzt. Falls als zusätzliche Buildersubstanz auch Alkalialumosilikat, insbesondere Zeolith, vorhanden ist, beträgt das Gewichtsverhältnis Alumosilikat zu Silikat, jeweils bezogen auf wasserfreie Aktivsubstanzen, vorzugsweise 1:10 bis 10:1. In Zusammensetzungen, die sowohl amorphe als auch kristalline Alkalisilikate enthalten, beträgt das Gewichtsverhältnis von amorphem Alkalisilikat zu kristallinem Alkalisilikat vorzugsweise 1:2 bis 2:1 und insbesondere 1:1 bis 2:1.

Buildersubstanzen sind, falls gewünscht, bevorzugt in Mengen bis zu 60 Gew.-%, insbesondere von 5 Gew.-% bis 40 Gew.-%, enthalten. Wäschenachbehandlungsmittel, wie z.B. Weichspüler, sind bevorzugt frei von anorganischem Builder.

In verschiedenen Ausführungsformen umfasst ein erfindungsgemäßes Mittel weiterhin mindestens ein Enzym.

Das Enzym kann ein hydrolytisches Enzym oder ein anderes Enzym in einer für die Wirksamkeit des Mittels zweckmäßigen Konzentration sein. Eine Ausführungsform der Erfindung stellen somit Mittel dar, die ein oder mehrere Enzyme umfassen. Als Enzyme bevorzugt einsetzbar sind alle Enzyme, die in dem erfindungsgemäßen Mittel eine katalytische Aktivität entfalten können, insbesondere eine Protease, Amylase, Cellulase, Hemicellulase, Mannanase, Tannase, Xylanase, Xanthanase, Xyloglucanase, β-Glucosidase, Pektinase, Carrageenase, Perhydrolase, Oxidase, Oxidoreduktase oder eine Lipase, sowie deren Gemische. Enzyme sind in dem Mittel vorteilhafterweise jeweils in einer Menge von 1 x $10^{-8}$ bis 5 Gew.-% bezogen auf aktives Protein enthalten. Zunehmend bevorzugt ist jedes Enzym in einer Menge von 1 x $10^{-7}$-3 Gew.-%, von 0,00001-1 Gew.-%, von 0,00005-0,5 Gew.-%, von 0,0001 bis 0,1 Gew.-% und besonders bevorzugt von 0,0001 bis 0,05 Gew.-% in erfindungsgemäßen Mitteln enthalten, bezogen auf aktives Protein. Besonders bevorzugt zeigen die Enzyme synergistische Reinigungsleistungen gegenüber bestimmten Anschmutzungen oder Flecken, d.h. die in der Mittelzusammensetzung enthaltenen Enzyme unterstützen sich in ihrer Reinigungsleistung gegenseitig. Synergistische Effekte können nicht nur zwischen verschiedenen Enzymen, sondern auch zwischen einem oder mehreren Enzymen und weiteren Inhaltsstoffen des erfindungsgemäßen Mittels auftreten.

Bei der/den Amylase(n) handelt es sich vorzugsweise um eine α-Amylase. Bei der Hemicellulase handelt es sich vorzugsweise um eine Pektinase, eine Pullulanase und/oder eine Mannanase. Bei der Cellulase handelt es sich vorzugsweise um ein Cellulase-Gemisch oder eine Einkomponenten-Cellulase, vorzugsweise bzw. überwiegend um eine Endoglucanase und/oder eine Cellobiohydrolase. Bei der Oxidoreduktase handelt es sich vorzugsweise um eine Oxidase, insbesondere eine Cholin-Oxidase, oder um eine Perhydrolase.

Die eingesetzten Proteasen sind vorzugsweise alkalische Serin-Proteasen. Sie wirken als unspezifische Endopeptidasen, das heißt, sie hydrolysieren beliebige Säureamidbindungen, die im Inneren von Peptiden oder Proteinen liegen und bewirken dadurch den Abbau proteinhaltiger Anschmutzungen auf dem Reinigungsgut. Ihr pH-Optimum liegt meist im deutlich alkalischen Bereich. In bevorzugten Ausführungsformen ist das im erfindungsgemäßen Mittel enthaltene Enzym eine Protease.

Die vorliegend eingesetzten Enzyme können natürlicherweise vorkommende Enzyme sein oder Enzyme, die auf Basis natürlich vorkommender Enzyme durch eine oder mehrere Mutationen verändert wurden, um gewünschte Eigenschaften, wie katalytische Aktivität, Stabilität oder desinfizierende Leistung, positiv zu beeinflussen.

In bevorzugten Ausführungsformen der Erfindung ist das Enzym in Form eines Enzymprodukts in einer Menge von 0,01 bis 10 Gew.-%, vorzugsweise 0,01 bis 5 Gew.-% im erfindungsgemäßen Mittel bezogen auf das Gesamtgewicht des Mittels enthalten. Der Aktivproteingehalt liegt vorzugsweise im Bereich von 0,00001 bis 1 Gew.-%, insbesondere 0,0001 bis 0,2 Gew.-% bezogen auf das Gesamtgewicht des Mittels.

Die Proteinkonzentration kann mit Hilfe bekannter Methoden, zum Beispiel dem BCA-Verfahren (Bicinchoninsäure; 2,2'-Bichinolyl-4,4'-dicarbonsäure) oder dem Biuret-Verfahren bestimmt werden. Die Bestimmung der Aktivproteinkonzentration erfolgt diesbezüglich über eine Titration der aktiven Zentren unter Verwendung eines geeigneten irreversiblen Inhibitors (für Proteasen beispielsweise Phenylmethylsulfonylfluorid (PMSF)) und Bestimmung der Restaktivität (vgl. M. Bender et al., J. Am. Chem. Soc. 88, 24 (1966), S. 5890-5913).

In den hierin beschriebenen Mitteln können die einzusetzenden Enzyme ferner zusammen mit Begleitstoffen, etwa aus der Fermentation, konfektioniert sein. In flüssigen Formulierungen werden die Enzyme bevorzugt als Enzymflüssigformulierung(en) eingesetzt.

Die Enzyme werden in der Regel nicht in Form des reinen Proteins, sondern vielmehr in Form stabilisierter, lager- und transportfähiger Zubereitungen bereitgestellt. Zu diesen vorkonfektionierten Zubereitungen zählen beispielsweise die durch Granulation, Extrusion oder Lyophilisierung erhaltenen festen Präparationen oder, insbesondere bei flüssigen oder gelförmigen Mitteln, Lösungen der Enzyme, vorteilhafterweise möglichst konzentriert, wasserarm und/oder mit Stabilisatoren oder weiteren Hilfsmitteln versetzt.

Alternativ können die Enzyme sowohl für die feste als auch für die flüssige Darreichungsform verkapselt werden, beispielsweise durch Sprühtrocknung oder Extrusion der Enzymlösung zusammen mit einem vorzugsweise natürlichen Polymer oder in Form von Kapseln, beispielsweise solchen, bei denen die Enzyme wie in einem erstarrten Gel eingeschlossen sind oder in solchen vom Kern-Schale-Typ, bei dem ein enzymhaltiger Kern mit einer Wasser-, Luft- und/oder Chemikalien-undurchlässigen Schutzschicht überzogen ist. In aufgelagerten Schichten können zusätzlich weitere Wirkstoffe, beispielsweise Stabilisatoren, Emulgatoren, Pigmente, Bleich- oder Farbstoffe aufgebracht werden. Derartige Kapseln werden nach an sich bekannten Methoden, beispielsweise durch Schüttel- oder Rollgranulation oder in Fluidbed-Prozessen aufgebracht. Vorteilhafterweise sind derartige Granulate, beispielsweise durch Aufbringen polymerer Filmbildner, staubarm und aufgrund der Beschichtung lagerstabil.

Weiterhin ist es möglich, zwei oder mehrere Enzyme zusammen zu konfektionieren, so dass ein einzelnes Granulat mehrere Enzymaktivitäten aufweist.

In verschiedenen Ausführungsformen kann das erfindungsgemäße Mittel einen oder mehrere Enzymstabilisatoren aufweisen.

Aufziehverstärkende Mittel sind Mittel, die das Aufziehen der Mikrokapseln auf Oberflächen, insbesondere Textiloberflächen, verbessern. Unter diese Kategorie von Mitteln fallen beispielsweise die bereits oben erwähnten Esterquats. Weitere Beispiele sind sogenannte SRPs (soil repellent polymers), die nichtionisch oder kationisch sein können, wobei hier insbesondere Polyethylenimine (PEI) sowie ethoxylierte Varianten davon und Polyester, insbesondere Ester der Terephthalsäure, vor allem solche von Ethylenglykol und Terephthalsäure oder Polyester/Polyether von Polyethyleneterephthalat und Polyethylenglycol, zu nennen sind. Schließlich fallen auch anionische bzw. nichtionische Silikone unter diese Gruppe. Beispielhafte Verbindungen werden auch in der Patentschrift EP 2 638 139 A1 offenbart.

Ferner können die Wasch- und Reinigungsmittel weitere Inhaltsstoffe enthalten, die die anwendungstechnischen und/oder ästhetischen Eigenschaften der Zusammensetzung abhängig von dem beabsichtigten Verwendungszweck weiter verbessern. Im Rahmen der vorliegenden Erfindung können sie Bleichmittel, Bleichaktivatoren, Bleichkatalysatoren, Esterquats, Silikonöle, Emulgatoren, Verdicker, Elektrolyte, pH-Stellmittel, Fluoreszenzmittel, Farbstoffe, Hydrotope, Schauminhibitoren, Antiredepositionsmittel, Lösungsmittel, optische Aufheller, Vergrauungsinhibitoren, Einlaufverhinderer, Knitterschutzmittel, Farbübertragungsinhibitoren, Farbschutzmittel, Benetzungsverbesserer, antimikrobielle Wirkstoffe, Germizide, Fungizide, Antioxidantien, Korrosionsinhibitoren, Klarspüler, Konservierungsmittel, Antistatika, Bügelhilfsmittel, Phobier- und Imprägniermittel, Perlglanzmittel, Polymere, Quell- und Schiebefestmittel sowie UV-Absorber enthalten, ohne darauf beschränkt zu sein.

Geeignete Inhaltsstoffe und Rahmenzusammensetzungen für Wasch- und Reinigungsmittelzusammensetzungen (beispielsweise für Waschmittel und Weichspüler) sind beispielsweise in der EP 3 110 393 B1 offenbart.

Herstellungsverfahren

Verfahren zur Herstellung von Kern/Schale-Mikrokapseln sind dem Fachmann bekannt. In der Regel wird ein ölbasiertes nicht bzw. wenig wasserlösliches Kernmaterial in einer die Wandbildner enthaltenden wässrigen Phase emulgiert oder dispergiert. In Abhängigkeit von der Viskosität flüssiger Kernmaterialien kommen vom einfachen Rührer bis zum Hochleistungsdispergierer verschiedenste Aggregate zum Einsatz, die das Kernmaterial in feine Öltröpfchen verteilt. Dabei scheiden sich die Wandbildner aus der kontinuierlichen Wasserphase auf der Öltröpfchen-Oberfläche ab und können anschließend vernetzt werden.

Dieser Mechanismus wird genutzt bei der In-situ-Polymerisation von Amino- und Phenoplast-Mikrokapseln und bei der Koazervation wasserlöslicher Hydrokolloide.

Im Gegensatz dazu kommen bei der radikalischen Polymerisation öllösliche Acrylat-Monomere für die Wandbildung zum Einsatz. Darüber hinaus kommen Verfahren zum Einsatz, bei denen wasserlösliche und öllösliche Ausgangsstoffe an der Phasengrenze der Emulsionstropfen zur Reaktion gebracht werden, die die feste Schale bilden.

Beispiele hierfür sind die Reaktion von Isocyanaten und Aminen bzw. Alkoholen zu Polyharnstoff- bzw. Polyurethanwänden (Grenzflächenpolymerisation), aber auch die Hydrolyse von Silikat-Präkursoren mit anschließender Kondensation unter Ausbildung einer anorganischen Kapselwand (Sol-Gel-Verfahren).

In geeigneten Verfahren zur Herstellung von Mikrokapseln, umfassend einen Duftstoff als Kernmaterial und einer Schale, die aus drei Schichten besteht, wird die als Diffusionsbarriere dienende Barriereschicht als Templat vorgelegt. Zum Aufbau dieser Barriereschicht werden sehr geringe Anteile an Wandbildnern der genannten Art benötigt. Bevorzugt sind die empfindlichen Template nach der Tröpfchenbildung bei hohen Rührgeschwindigkeiten durch geeignete Schutzkolloide (z.B. Poly-AMPS) so mit einer elektrisch negativen Ladung ausgerüstet, dass weder Ostwaldreifung noch Koaleszenz auftreten können. Nach Herstellung dieser stabilen Emulsion kann bei nunmehr stark verminderter Rührgeschwindigkeit der Wandbildner, beispielsweise ein geeignetes Vorkondensat auf Aminoplastharzbasis in eine sehr dünne Schale (Schicht) ausbilden. Die Dicke der Schale kann insbesondere durch Zusatz eines aromatischen Alkohols, z.B. m-Aminophenol, noch weiter reduziert werden. Es folgt die Ausbildung einer produktionsfähigen Schalenstruktur, die unerwarteter Weise bei Zugabe von Biopolymeren wie Gelatine oder Alginat eine gute Affinität zu diesen aufzeigt und eine Abscheidung auf den Templaten ohne die erwarteten Probleme wie Gelierung des Ansatzes, Agglomerationsbildung und Unverträglichkeit des Strukturgebers aufzeigt.

Durch den Einsatz des Emulsionsstabilisators konnte wie in den Beispielen gezeigt, die Abscheidung der Biopolymere noch weiter erhöht werden.

Das Verfahren umfasst zumindest die folgenden Schritte:

a) Herstellen einer Öl-in-Wasser-Emulsion durch Emulgierung eines Kernmaterials in einer wässrigen Phase in Anwesenheit der wandbildenden Komponente(n) der inneren Barriereschicht unter Zugabe von Schutzkolloiden;
b) Abscheidung und Aushärtung der wandbildenden Komponente(n) der Barriereschicht, wobei die wandbildende(n) Komponente(n) der Barriereschicht bevorzugt eine aldehydische Komponente, eine Aminkomponente und ein aromatischer Alkohol, besonders bevorzugt Formaldehyd, Melamin, und Resorcin sind;
c) Zugabe eines Emulsionsstabilisators, wobei der Emulsionsstabilisators wie hierin definiert ist;
d) Zugabe der wandbildenden Komponente(n) der Stabilitätsschicht, gefolgt von Abscheidung und Aushärtung, wobei die wandbildende(n) Komponenten der Stabilitätsschicht mindestens ein Biopolymer, bevorzugt ein Protein und/oder ein Polysaccharid, besonders bevorzugt Gelatine und Alginat, sowie ein Aushärtungsmittel, bevorzugt

Glutaraldehyd oder Glyoxal sind; und

e) gegebenenfalls Zugabe der wandbildenden Komponente(n) der äußeren, dritten Schalenschicht, gefolgt von Abscheidung und Aushärtung, wobei die wandbildende(n) Komponente(n) der äußeren, dritten Schalenschicht bevorzugt eine Aminkomponente, insbesondere Melamin ist.

Die Zugabe des Emulsionsstabilisators erfolgt bevorzugt langsam über mindestens zwei Minuten. Gemäß einer Ausführungsform wird die Mikrokapseldispersion gerührt. Zum Rühren kann beispielsweise eine Flügelrührer eingesetzt werden. Die Rührgeschwindigkeit liegt bevorzugt im Bereich von 150 bis 250 U/min. Oberhalb von 250 U/min besteht die Gefahr eines Lufteintrags in die Mikrokapseldispersion. Unterhalb von 150 U/min könnte die Durchmischung nicht ausreichend sein.

Die Temperatur liegt bevorzugt im Bereich von 15 °C bis 35 °C. Die Temperatur kann bei 15 °C, 18 °C, 20 °C, 23 °C, 25 °C, 28 °C, 30 °C, 33 °C, oder 35 °C liegen. Besonders bevorzugt liegt die Temperatur bei 25 °C. Nach Zugabe wird die Mikrokapseldispersion gerührt bis eine homogene Mischung entsteht. In einer Ausführungsform wird die Mikrokapseldispersion nach Zugabe für mindestens 5 min gerührt. In einer bevorzugten Ausführungsform wird die Mikrokapseldispersion nach Zugabe für mindestens 10 min gerührt.

Alternativ können die Schritte a) und b) wie folgt durchgeführt werden:

a) Herstellen einer Öl-in-Wasser-Emulsion durch Emulgierung eines Kernmaterials in einer wässrigen Phase in Anwesenheit der wandbildenden Komponente(n) der inneren Barriereschicht, gegebenenfalls unter Zugabe von Schutzkolloiden;

b) Abscheidung und Aushärtung der wandbildenden Komponente(n) der inneren Barriereschicht, wobei die wandbildende(n) Komponente(n) der inneren Barriereschicht insbesondere eine aldehydische Komponente, eine Aminkomponente und ein aromatischer Alkohol sind.

Dieses Verfahren kann entweder sequentiell oder als sogenanntes Eintopfverfahren durchgeführt werden. Beim sequentiellen Verfahren werden in einem ersten Verfahren nur die Schritte a) und b) bis zum Erhalt von Mikrokapseln mit nur der inneren Barriereschicht als Schale (Intermediatsmikrokapseln) durchgeführt. Im Folgenden wird dann eine Teilmenge oder die Gesamtmenge dieser Intermediatsmikrokapseln in einen weiteren Reaktor überführt. In diesem werden dann die weiteren Reaktionsschritte durchgeführt. Beim Eintopf-Verfahren werden sämtliche Verfahrensschritte in einem Batch-Reaktor durchgeführt. Die Durchführung ohne Reaktorwechsel ist besonders zeitsparend.

Dazu sollte das Gesamtsystem auf das Eintopfverfahren abgestimmt sein. Die richtige Wahl der Feststoffanteile, die richtige Temperaturführung, die abgestimmte Zugabe an Formulierungsbestandteilen und die sequentielle Zugabe der Wandbildner ist auf diese Art möglich.

In einer Ausführungsform des Verfahrens umfasst das Verfahren die Herstellung einer Wasserphase durch Lösung eines Schutzkolloids, insbesondere eines Polymers auf Basis von Acrylamidosulfonat und einem methylierten Prä-Polymer in Wasser. Dabei wird das Prä-Polymer bevorzugt durch Umsetzung eines Aldehyds mit entweder Melamin oder Harnstoff erzeugt. Optional kann dabei Methanol zum Einsatz kommen.

Ferner kann in dem erfindungsgemäßen Verfahren eine Durchmischung der Wasserphase mittels Rühren und Einstellen einer ersten Temperatur erfolgen, wobei die erste Temperatur im Bereich von 30 °C bis 40 °C liegt. Im Anschluss kann ein aromatischer Alkohol, insbesondere Phloroglucin, Resorcin oder Aminophenol zur Wasserphase hinzugefügt und darin gelöst werden.

Alternativ kann in dem erfindungsgemäßen Verfahren die Herstellung einer Ölphase durch Mischung einer Duftstoffzusammensetzung oder eines Phasenwechselmaterials (PCM) mit aromatischen Alkoholen geschehen, insbesondere Phloroglucin, Resorcin oder Aminophenol. Alternativ können auch reaktive Monomere oder Diisocyanatderivate in die Duftstoffzusammensetzung eingebracht werden. Anschließend kann die Einstellung der ersten Temperatur erfolgen.

Ein weiterer Schritt kann die Herstellung eines Zwei-Phasen-Gemischs durch Zugabe der Ölphase zur Wasserphase und anschließender Erhöhung der Drehzahl sein.

Im Anschluss kann die Emulgierung durch Zugabe von Ameisensäure gestartet werden. Dabei bietet sich eine regelmäßige Bestimmung der Teilchengröße an. Ist die gewünschte Teilchengröße erreicht, kann die Zwei-Phasen-Mischung weiter gerührt werden und dabei eine zweite Temperatur zur Aushärtung der Kapselwände eingestellt werden. Die zweite Temperatur kann dabei im Bereich von 55 °C bis 65 °C liegen.

Im Anschluss kann die Zugabe einer Melamin-Dispersion zur Mikrokapsel-Dispersion und Einstellung einer dritten Temperatur erfolgen, wobei die dritte Temperatur bevorzugt im Bereich von 75 °C bis 85 °C liegt.

Ein weiterer geeigneter Schritt ist die Zugabe einer wässrigen Harnstoff-Lösung zur Mikrokapsel-Dispersion. Im Anschluss wird der Emulsionsstabilisator zur Mikrokapseldispersion gegeben bevor diese zur Herstellung der Stabilisationsschicht zu einer Lösung von Gelatine und Alginat gegeben wird.

In diesem Fall würde im Anschluss eine Abkühlung auf 45 °C bis 55 °C erfolgen sowie ein Einstellen des pH

der Mikrokapsel-Dispersion auf einen Wert im Bereich von 3,5 bis 4,1, insbesondere 3,7.

Die Mikrokapsel-Dispersion kann dann auf eine vierte Temperatur abgekühlt werden, wobei die vierte Temperatur im Bereich von 20°C bis 30°C liegt. Es kann im Folgenden auf eine fünfte Temperatur abgekühlt werden, wobei die fünfte Temperatur in einem Bereich von 4 °C bis 17 °C liegt, insbesondere bei 8°C.

Im Anschluss würde der pH der Mikrokapsel-Dispersion auf einen Wert im Bereich 4,3 bis 5,1 eingestellt und Glutaraldehyd oder Glyoxal zugegeben werden. Die Reaktionsbedingungen, insbesondere Temperatur und pH-Wert, können je nach Vernetzer unterschiedlich gewählt werden. Die jeweils geeigneten Bedingungen kann der Fachmann beispielsweise aus der Reaktivität des Vernetzers ableiten. Durch die zugegebene Menge an Glutaraldehyd oder Glyoxal wird die Vernetzungsdichte der ersten Schicht (Stabilitätsschicht) beeinflusst und damit beispielsweise die Dichtigkeit und Abbaubarkeit der Mikrokapselschale. Entsprechend kann der Fachmann die Menge gezielt variieren, um das Eigenschaftsprofil der Mikrokapsel anzupassen. Zur Erzeugung der zusätzlichen dritten Schicht kann eine Melamin-Suspension, bestehend aus Melamin, Ameisensäure und Wasser hergestellt werden. Es folgt die Zugabe der Melamin-Suspension zu der Mikrokapsel-Dispersion. Schließlich würde der pH der Mikrokapsel-Dispersion auf einen Wert im Bereich von 9 bis 12 eingestellt werden, insbesondere 10 bis 11.

Darüber hinaus kann die Mikrokapseldispersion zur Aushärtung im Schritt e) auf eine Temperatur im Bereich von 20 °C bis 80 °C aufgeheizt werden. Wie in Beispiel 8 gezeigt, hat dieser Temperatur einen Einfluss auf die Farbbeständigkeit der Mikrokapseln. Die Temperatur kann bei 20 °C, 25 °C, 30 °C, 35 °C, 40 °C, 45 °C, 50 °C, 55 °C, 60 °C, 65 °C, 70 °C, 75 °C, oder 80 °C liegen. Unterhalb einer Temperatur von 20 °C ist mit keinem Einfluss auf die Farbbeständigkeit zu rechnen. Eine Temperatur von über 80 °C könnte sich negativ auf die Mikrokapsel-Eigenschaften auswirken. Gemäß einer Ausführungsform liegt die Temperatur im Bereich von 30 °C bis 60 °C. Gemäß einer bevorzugten Ausführungsform liegt die Temperatur im Bereich von 35 °C bis 50 °C.

Gemäß einer Ausführungsform, wird die Mikrokapseldispersion bei der Aufheiztemperatur für einen Zeitraum von wenigstens 5 Minuten behalten. Der Zeitraum kann beispielsweise 10 Minuten, 15 Minuten, 20 Minuten, 25 Minuten, 30 Minuten, 35 Minuten, 40 Minuten, 45 Minuten, 50 Minuten, 55 Minuten, 60 Minuten, 70 Minuten, 80 Minuten, 90 Minuten, 100 Minuten, 110 Minuten, 120 Minuten betragen. Gemäß einer Ausführungsform, wird die Mikrokapseldispersion bei der Aufheiztemperatur für einen Zeitraum von wenigstens 30 Minuten gehalten. Gemäß einer Ausführungsform wird die Mikrokapseldispersion bei der Aufheiztemperatur für einen Zeitraum von wenigstens 60 Minuten gehalten.

Mikrokapseldispersion und Farbigkeit

Mikrokapseln liegen in der Regel in Form von Mikrokapseldispersionen vor. Trotz der Verwendung von aromatischem Alkohol in der Barriereschicht der Mikrokapselschale weisen die Mikrokapseldispersionen mit den hierin beschriebenen Mikrokapseln nur eine geringe Färbung auf.

Zur Qualifizierung der Verfärbung wurde für die erfindungsgemäßen Mikrokapseln der Farbort im L*a*b*-Farbraum bestimmt. Das L*a*b*-Farbmodell ist in der EN ISO 11664-4 "Colorimetry -- Part 4: CIE 1976 L*a*b* Colour space" genormt. Der L*a*b*-Farbraum (auch: CIELAB, CIEL*a*b*, Lab-Farben) beschreibt alle wahrnehmbaren Farben. Er nutzt einen dreidimensionalen Farbenraum, bei dem der Helligkeitswert L* senkrecht auf der Farbebene (a*,b*) steht. Die $\alpha$-Koordinate gibt die Farbart und Farbintensität zwischen Grün und Rot an und die b-Koordinate die Farbart und die Farbintensität zwischen Blau und Gelb. Je größer positive a- und b- und je kleiner negative a- und b-Werte, umso intensiver der Farbton. Falls a=0 und b=0, liegt ein unbunter Farbton auf der Helligkeitsachse vor. Zu den Eigenschaften des L*a*b*-Farbmodells zählen die Geräteunabhängigkeit und die Wahrnehmungsbezogenheit, das heißt: Farben werden unabhängig von der Art ihrer Erzeugung oder Wiedergabetechnik so definiert, wie sie von einem Normalbeobachter bei einer Standard-Lichtbedingung wahrgenommen werden.

Wie in den Beispielen gezeigt weisen die erfindungsgemäßen Mikrokapseldispersionen im L*a*b*-Farbraum einen Farbort mit einem L*-Wertvon mindestens 50 auf. Der L*-Wert kann beispielsweise 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, oder 80 betragen. Gemäß einer bevorzugten Ausführungsform weisen die erfindungsgemäßen Mikrokapseldispersionen im L*a*b*-Farbraum einen Farbort mit einem L*-Wert von mindestens 50 auf. Besonders bevorzugt liegt der Farbort bei mindestens 60.

Darüber hinaus sind die mit dem erfindungsgemäßen Herstellungsverfahren hergestellten Mikrokapseldispersionen besonders farbstabil. Wie in den Beispielen gezeigt, weist der Farbort der Mikrokapseldispersion im L*a*b*-Farbraum nach Lagerung einen L*-Wert von mindestens 50 auf. Der L*-Wert nach Lagerung kann beispielsweise 51, 52, 53, 54, 55, 55, 56, 57, 58, 59, 60, 61, 62, 63, 64, 65, 66, 67, 68, 69, 70, 71, 72, 73, 74, 75, 76, 77, 78, 79, 80. Gemäß einer bevorzugten Ausführungsform weisen die erfindungsgemäßen Mikrokapseldispersionen nach Lagerung im L*a*b*-Farbraum einen Farbort mit einem L*-Wert von mindestens 60 auf. Besonders bevorzugt liegt der Farbort bei mindestens 65.

Gemäß einer Ausführungsform beträgt die Lagerungszeit wenigstens vier Wochen, bevorzugt wenigstens sechs Wochen und insbesondere wenigstens acht Wochen.

## Beispiele

Beispiel 1 - Herstellung nicht erfindungsgemäßer Referenz-Mikrokapseln mit Melamin-Formaldehyd Rezeptur

1.1 Materialien

Die eingesetzten Materialien zur Herstellung der Referenz-Mikrokapseln - Melamin-Formaldehyd sind in Tabelle 1 dargestellt.

Tabelle 1: Liste der zur Herstellung von MK2 verwendeten Stoffe

| | | | MK2 |
|---|---|---|---|
| Handelsname* | Stoffbezeichnung | Konzentration / Gew.% | Einwaage / g |
| - | VE-Wasser | 100 | 187,5 |
| Dimension™ SD, Fa. Solenis | 1,3,5-Triazin-2,4,6-triamin, Polymer mit Formaldehyd, methyliert (Gehalt (W/W): >= 60 % - <= 80 %), in Wasser | 67 | 42,5* |
| Dimension™ PA 140, Fa. Solenis | Polymer auf Basis: Acrylamidosulfonat | 20 | 35,0* |
| Weiroclean, Fa. Kurt Kitzing GmbH | Kernmaterial (z.B. Duftöl, PCM, etc.) | 100 | 192,5* |
| - | Ameisensäure | 10 | 8,8 |
| Melafine®, Fa. OCI Nitrogen B.V. | Melamin-Suspension [1)] | 27 | 48,8 |
| - | Harnstoff-Lösung | 28,6 | 70,0 |
| 1) Konzentration bezogen auf die angesäuerte Suspension<br>*Mengen der Komponenten beziehen sich auf die Handelsware und werden eingesetzt wie geliefert. | | | |

1.2 Herstellungsverfahren (basierend auf Patent BASF EP 1 246693 B1)

Dimension SD wurde in VE-Wasser eingerührt und danach Dimension PA140 zugegeben und gerührt bis eine klare Lösung entstand. Die Lösung wurde im Wasserbad auf 30-35 °C erwärmt. Unter Rühren mit einer Dissolverscheibe wurde das Parfümöl bei 1100 U/min zugegeben. Der pH-Wert der Öl-in-Wasser-Emulsion wurde mit einer 10 %-igen Ameisensäure auf 3,3 - 3,8 eingestellt. Danach wurde die Emulsion für 30 min mit 1100 U/min weiter gerührt bis eine Tropfengröße von 20 - 30 $\mu$m erreicht war oder entsprechend verlängert bis die gewünschte Teilchengröße von 20 - 30 $\mu$m (Peak-Max) erreicht ist. Die Teilchengröße wurde mittels eines Beckmann-Coulter Gerätes (Laserbeugung, Fraunhofer Methode) bestimmt. Die Drehzahl wurde in Abhängigkeit der Viskosität so verringert, dass eine gute Durchmischung gewährleistet war. Mit dieser Drehzahl wurde weitere 30 min bei 30 bis 40 °C gerührt. Anschließend wurde die Emulsion auf 60°C erwärmt und weiter gerührt. Die Melamin-Suspension wurde mit Ameisensäure (10%ig) auf einen pH-Wert von 4,5 eingestellt und zur Reaktionsmischung zudosiert. Der Ansatz wurde 60 min bei 60 °C gehalten und anschließend auf 80°C aufgeheizt. Nach 60 min Rühren bei 80°C wurde die Harnstoff-Lösung zugegeben.

Nach dem Abkühlen auf Raumtemperatur wurde die Mikrokapseldispersion über ein 200-$\mu$m-Filtersieb filtriert.

1.3 Ergebnis

Die erhaltene MF Referenz-Mikrokapsel MK2 wurde lichtmikroskopisch untersucht.

Eine typische Aufnahme der MK2 ist in Fig. 1F dargestellt. Zur Evaluierung der erhaltenen Mikrokapseln wurden der pH-Wert, der Feststoffgehalt, die Viskosität, die Teilchengröße, der Gehalt an Kernmaterial in der Slurry sowie der L*-Wert des Farborts bestimmt. Das Ergebnis ist in Tabelle 2 dargestellt.

Tabelle 2: Analyseergebnisse der nicht erfindungsgemäßen Referenz-Mikrokapsel MK2

| | Messmethode | MK 2 |
|---|---|---|
| pH | pH-Elektrode | 5,5-6,5 |
| Feststoffgehalt / % | Mikrowelle | 37-41 |
| Viskosität / mPas | Brookfield- Viskosimeter | < 1000 |
| Teilchengröße Peak max. / µm | Laserbeugung | 20-30 |
| Kernmaterial-Gehalt in Slurry / % | Berechnung aus Rezept | 30 - 35 |
| L*-Wert / - | Spektrophotometer | 65-80 |

Beispiel 2 - Herstellung von erfindungsgemäßen Mikrokapseldispersionen Slurry 2 und Slurry 5 sowie der nicht erfindungsgemäßen Referenzkapsel MK1

2.1 Materialien

Die eingesetzten Materialien zur Herstellung erfindungsgemäßen-Mikrokapseln - Slurry 2 und Slurry 5 sind in Tabelle 3 dargestellt.

Tabelle 3: Liste der zur Herstellung von Slurry 2 und 5 verwendeten Stoffe

| | | | Slurry 2 | Slurry 5 |
|---|---|---|---|---|
| Handelsname | Stoffbezeichnung | Konzentration / Gew. % | Einwaage / g | Einwaage / g |
| | VE-Wasser Zugabe 1 | 100 | 35,2 | 39,6 |
| Dimension™ SD, Fa. Solenis | 1,3,5-Triazin-2,4,6-triamin, Polymer mit Formaldehyd, methyliert (Gehalt (W/W): >= 60 % - <= 80 %), in Wasser | 67 | 2,1* | 1,7* |
| Dimension™ PA 140, Fa. Solenis | Polymer auf Basis: Acrylamidosulfonat Zugabe 1 | 20 | 4,6* | 3,8* |
| Weiroclean, Fa. Kurt Kitzing GmbH | Kernmaterial (z.B. Duftöl, PCM, etc.) | 100 | 52,8* | 52,6* |
| - | Resorcin-Lösung | 3,2 | 12,7 | 11,9 |
| - | Ameisensäure Zugabe 1 | 10 | 0,7 | 0,4 |
| Melafine®, Fa. OCI Nitrogen B.V. | Melamin-Suspension Zugabe 1 [1)] | 27 | 2,6 | 2,0 |
| - | Harnstoff-Lösung | 41 , g | 2,6 | 2,2 |
| Dimension™ PA 140, Fa. Solenis | Polymer auf Basis: Acrylamidosulfonat Zugabe 2 | 20 | 9,5* | 9,6* |
| - | Leitungswasser | 100 | 136,2 | 135,6 |
| - | Natriumsulfat | 100 | 0,6* | 0,6* |
| Scogin® MV, Fa. DuPont Nutrition Ireland | Natriumalginat | 100 | 2,0* | 2,0* |
| Speisegelatinepulver, Fa. Ewald-Gelatine GmbH | Schweinehautgelatine | 100 | 8,4* | 8,4* |
| - | Ameisensäure Zugabe 2 | 20 | 2,5 | 2,5 |
| - | Natronlauge Zugabe 1 | 20 | 2,4 | 2,3 |

(fortgesetzt)

| | | | Slurry 2 | Slurry 5 |
|---|---|---|---|---|
| Handelsname | Stoffbezeichnung | Konzent ration / Gew. % | Einwaage / g | Einwaage / g |
| Glutaraldehyd, 50% aq. soln. Fa. Alfa Aesar | Glutaraldehyd Lösung | 50 | 2,6* | 2,6* |
| Melafine®, Fa. OCI Nitrogen B.V. | Melamin-Suspension Zugabe 2 1) | 27 | 27,5 | 27,4 |
| - | Natronlauge Zugabe 2 | 20 | 4,7 | 4,7 |
| 1) Konzentration bezogen auf die angesäuerte Suspension.<br>2) Bei den gegebenen Mengen für Säuren/Laugen handelt es sich um Richtwerte. Es wird auf den in der Versuchsdurchführung genannten pH-Bereich eingestellt.<br>*Mengen der Komponenten beziehen sich auf die Handelsware und werden eingesetzt wie geliefert. | | | | |

Die eingesetzten Materialien zur Herstellung der Referenz-Mikrokapseln MK1 sind in Tabelle 4 dargestellt.

Tabelle 4: Liste der zur Herstellung von MK1 verwendeten Stoffe

| | | MK1 | |
|---|---|---|---|
| Handelsname | Stoffbezeichnung | Konzentration / Gew.% | Einwaage / g |
| | VE-Wasser Zugabe 1 | 100 | 34,9 |
| Dimension™ SD, Fa. Solenis | 1,3,5-Triazin-2,4,6-triamin, Polymer mit Formaldehyd, methyliert (Gehalt (W/W): >= 60 % - <= 80 %), in Wasser | 67 | 1,6* |
| Dimension™ PA 140, Fa. Solenis | Polymer auf Basis: Acrylamidosulfonat | 20 | 3,4* |
| Weiroclean, Fa. Kurt Kitzing GmbH | Kernmaterial (z.B. Duftöl, PCM, etc.) | 100 | 38,8* |
| - | Resorcin-Lösung | 12,2 | 2,5 |
| - | Ameisensäure Zugabe 1 | 20 | 0,5 |
| Melafine®, Fa. OCI Nitrogen B.V. | Melamin-Suspension Zugabe 1 1) | 27 | 1,9 |
| - | Harnstoff-Lösung | 16,6 | 4,7 |
| - | Leitungswasser | 100 | 100,19 |
| - | Natriumsulfat | 100 | 0,5* |
| Speisegelatinepulver, Fa. Ewald-Gelatine GmbH | Schweinehautgelatine | 100 | 6,2* |
| Scogin® MV, Fa. DuPont Nutrition Ireland | Natriumalginat | 100 | 1,4* |
| - | Ameisensäure Zugabe 2 | 20 | 1,4 |
| - | Natronlauge Zugabe 1 | 20 | 0,8 |
| - | Glutaraldehyd Lösung | 50 | 1,9 |
| Melafine®, Fa. OCI Nitrogen B.V. | Melamin-Suspension Zugabe 2 1) | 27 | 6,7 |

(fortgesetzt)

| | | MK1 | |
|---|---|---|---|
| Handelsname | Stoffbezeichnung | Konzentration / Gew.% | Einwaage / g |
| - | Natronlauge Zugabe 2 | 20 | 2,2 |
| 1) Konzentration bezogen auf die angesäuerte Suspension.<br>2) Bei den gegebenen Mengen für Säuren/Laugen handelt es sich um Richtwerte. Es wird auf den in der Versuchsdurchführung genannten pH-Bereich eingestellt.<br>*Mengen der Komponenten beziehen sich auf die Handelsware und werden eingesetzt wie geliefert. | | | |

2.2 Herstellungsverfahren für die nicht erfindungsgemäße Mikrokapsel MK1

Zur Herstellung der Reaktionsmischung 1 wurden Dimension PA140 und Dimension SD mit VE-Wasser Zugabe 1 in einem Becherglas eingewogen und mit einer 4 cm Dissolverscheibe vorgemischt. Das Becherglas wurde im Wasserbad fixiert, und mit der Dissolverscheibe bei 500 U/min bei 30°C verrührt bis eine klare Lösung entstand.

Sobald die Dimension SD / Dimension PA140 Lösung klar war und 30 - 40 °C erreicht hat, wurde die Parfümölmenge langsam zugegeben und dabei die Drehzahl so eingestellt (1100 U/min), dass damit die gewünschte Teilchengröße erzielt wird. Dann wurde der pH-Wert dieser Mischung durch Zugabe der Ameisensäure-Zugabe 1 angesäuert. Es wurde 20 - 30 min emulgiert oder entsprechend verlängert bis die gewünschte Teilchengröße von 20 - 30 µm (Peak-Max) erreicht ist. Die Teilchengröße wurde mittels eines Beckmann-Coulter Gerätes (Laserbeugung, Fraunhofer Methode) bestimmt. Nach Erreichen der Teilchengröße wurde die Drehzahl so reduziert, dass eine schonende Durchmischung gewährleistet war.

Anschließend wurde die Resorcin-Lösung eingerührt und unter schonendem Rühren für 30 - 40 min präformiert. Nach Ablauf der Präformierungszeit wurde die Emulsionstemperatur innerhalb von 15 min auf 50 °C erhöht. Bei Erreichen dieser Temperatur wurde die Mischung über einen Zeitraum von 15 min auf 60°C erhöht und diese Temperatur für weitere 30 min gehalten. Anschließend wurde mit Hilfe von 20%iger Ameisensäure die Melamin-Suspension Zugabe 1 auf einen pH-Wert von 4,5 eingestellt und über einen Zeitraum von 90 min zu der Reaktionsmischung zudosiert. Danach wurde die Temperatur für 30 min gehalten. Nach Ablauf der 30 min wurde innerhalb von 15 min die Temperatur zunächst auf 70 °C erhöht. Anschließend wurde die Temperatur innerhalb von 15 min auf 80 °C erhöht und für 120 min gehalten. Danach wurde die wässrige Harnstoff-Lösung zugegeben, die Wärmequelle abgeschaltet und die Reaktionsmischung 1 auf Raumtemperatur abgekühlt. In einem separaten Becherglas wurde Natriumsulfat in Leitungswasser unter Rühren mit einem Flügelrührer bei 40-50 °C gelöst. Natriumalginat und Schweinehautgelatine werden langsam in das erhitzte Wasser eingestreut. Nachdem alle Feststoffe gelöst waren, wurde Reaktionsmischung 1 unter Rühren zu der hergestellten Gelatine/Natriumalginat Lösung zugegeben. Bei Erreichen einer homogenen Mischung wurde mit der Ameisensäure-Zugabe 2 der pH-Wert durch langsames Zutropfen auf 3,9 eingestellt, danach wurde die Wärmequelle entfernt. Anschließend wurde der Ansatz auf Raumtemperatur abgekühlt. Nach dem Erreichen der Raumtemperatur wurde die Reaktionsmischung mit Eis gekühlt. Bei Erreichen einer Temperatur von 8 °C wurde das Eisbad entfernt und mit Natronlauge Zugabe 1 der pH-Wert auf 4,7 erhöht. Anschließend wurde Glutaraldehyd zugegeben. Dabei wurde darauf geachtet, dass die Temperatur bis zu der Zugabe des Glutaraldehyds 16-20 °C nicht überschreitet.

Im Anschluss wurde die, mittels 20% Ameisensäure auf einen pH Wert von 4,5 angesäuerte Melamin-Suspension Zugabe 2 langsam zudosiert. Anschließend wurde die Reaktionsmischung auf 60 °C erwärmt und bei Erreichen der Temperatur für 60 min gehalten. Nach dieser Haltezeit wurde die Wärmequelle entfernt und die Mikrokapselsuspension für 14h schonend gerührt. Nach Ablauf der 14h wurde die Mikrokapselsuspension mittels Natronlauge Zugabe 2 auf einen pH-Wert von 10,5 eingestellt.

2.2.1 Ergebnis

Die erhaltene Mikrokapsel MK1 wurde lichtmikroskopisch untersucht. Typische Aufnahmen sind in Fig. 1E dargestellt. Zur Evaluierung der MK1 wurden der pH-Wert, der Feststoffgehalt, die Viskosität, die Teilchengröße, der Gehalt an Kernmaterial in der Slurry sowie der L*-Wert des Farborts bestimmt. Das Ergebnis ist in Tabelle 5 dargestellt.

Tabelle 5: Analyseergebnisse der nicht erfindungsgemäßen Referenz-Mikrokapsel MK1

| | Messmethode | MK 1 |
|---|---|---|
| pH | pH-Elektrode | 8-10 |

(fortgesetzt)

| | Messmethode | MK 1 |
|---|---|---|
| Feststoffgehalt / % | Mikrowelle | 20-30 |
| Viskosität / mPas | Brookfield- Viskosimeter | <1000 |
| Teilchengröße Peak max. / μm | Laserbeugung | 20-30 |
| Kernmaterial-Gehalt in Slurry / % | Berechnung aus Rezept | 15-20 |
| L*-Wert / - | Spektrophotometer | 55-75 |

2.3 Herstellungsverfahren für die erfindungsgemäßen Mikrokapseldispersionen Slurry 2 und Slurry 5

Zur Herstellung der Reaktionsmischung 1 wurden Dimension PA140-Zugabe 1 und Dimension SD mit VE-Wasser Zugabe 1 in einem Becherglas eingewogen und mit einer 4 cm Dissolverscheibe vorgemischt. Das Becherglas wurde im Wasserbad fixiert, und mit der Dissolverscheibe bei 500 U/min bei 30°C verrührt bis eine klare Lösung entstand.

Sobald die Dimension SD/ Dimension PA140 Lösung klar war und 30 - 40 °C erreicht hat, wurde das Kernmaterial langsam zugegeben und dabei die Drehzahl so eingestellt (z.B. 1100 U/min), dass damit die gewünschte Teilchengröße erzielt wird. Anschließend wurde der pH-Wert dieser Mischung durch Zugabe der Ameisensäure-Zugabe 1 angesäuert (pH=3,3-3,5).

Es wurde 20 - 30 min emulgiert oder entsprechend verlängert bis die gewünschte Teilchengröße von 20 - 30 μm (Peak-Max) erreicht ist. Die Teilchengröße wurde mittels eines Beckmann-Coulter Gerätes (Laserbeugung, Fraunhofer Methode) bestimmt. Nach Erreichen der Teilchengröße wurde die Drehzahl so reduziert, dass eine schonende Durchmischung gewährleistet war und die Resorcin-Lösung zugegeben.

Unter schonendem Rühren wurde für 30 - 40 min präformiert. Nach Ablauf der Präformierungszeit wurde die Emulsionstemperatur innerhalb von 15 min auf 50 °C erhöht. Bei Erreichen dieser Temperatur wurde die Mischung über einen Zeitraum von 15 min auf 60°C erhöht und diese Temperatur für weitere 30 min gehalten. Anschließend wurde mit Hilfe von 20%iger Ameisensäure die Melafin-Suspension Zugabe 1 auf einen pH-Wert von 4,5 eingestellt und über einen Zeitraum von 90 min zu der Reaktionsmischung zudosiert.

Danach wurde die Temperatur für 30 min gehalten. Nach Ablauf der 30 min wurde innerhalb von 15 min die Temperatur zunächst auf 70 °C erhöht. Anschließend wurde die Temperatur innerhalb von 15 min auf 80 °C erhöht und für 90 min gehalten.

Danach wurde die wässrige Harnstoff-Lösung zugegeben, die Wärmequelle abgeschaltet und die Reaktionsmischung 1 auf Raumtemperatur abgekühlt. Nachdem Reaktionsmischung 1 Raumtemperatur erreicht hat, wird Dimension PA140-Zugabe 2 hinzugegeben.

In einem separaten Becherglas wurde Natriumsulfat in Leitungswasser unter Rühren mit einem Flügelrührer bei 40-50 °C gelöst. Natriumalginat und Schweinehautgelatine werden langsam in das erhitzte Leitungswasser eingestreut. Nachdem alle Feststoffe gelöst waren, wurde Reaktionsmischung 1 unter Rühren zu der hergestellten Gelatine/Natriumalginat Lösung zugegeben. Bei Erreichen einer homogenen Mischung wurde mit der Ameisensäure-Zugabe 2 der pH-Wert durch langsames Zutropfen auf 3,7 eingestellt, danach wurde die Wärmequelle entfernt und der Ansatz natürlich gegen Raumtemperatur abgekühlt.

Nach dem Erreichen der Raumtemperatur wurde die Reaktionsmischung mit Eis gekühlt. Bei Erreichen einer Temperatur von 8 °C wurde das Eisbad entfernt und mit Natronlauge Zugabe 1 der pH-Wert auf 4,7 erhöht. Anschließend wurde Glutarladehyd 50% zugegeben. Dabei wurde darauf geachtet, dass die Temperatur bis zu der Zugabe des Glutaraldehyd 50% 16-20 °C nicht überschreitet.

Im Anschluss wurde die, mittels 20% Ameisensäure auf einen pH Wert von 4,5 angesäuerte Melamin-Suspension Zugabe 2 in einem Zeitrahmen von ca. 2 min. zudosiert. Die Mikrokapselsuspension wurde anschließend bei Raumtemperatur für 14h schonend gerührt. Nach Ablauf der 14h wurde die Mikrokapselsuspension mittels Natronlauge Zugabe 2 in einem Zeitraum von ca. 15 min. auf einen pH-Wert von 10,5 eingestellt.

2.3.1 Ergebnis

Die erhaltene erfindungsgemäße Mikrokapseln Slurry 2 und Slurry 5 wurde lichtmikroskopisch untersucht. Typische Aufnahmen sind in Fig. 1A und 1C dargestellt. Zur Evaluierung der Slurry 2 und Slurry 5 wurden der pH-Wert, der Feststoffgehalt, die Viskosität, die Teilchengröße, der Gehalt an Kernmaterial in der Slurry sowie der L*-Wert des Farborts bestimmt. Das Ergebnis ist in Tabelle 6 dargestellt.

Tabelle 6: Analyseergebnisse der erfindungsgemäßen Mikrokapseldispersion Slurry 2 und Slurry 5

| | Messmethode | Slurry 2 und Slurry 5 |
|---|---|---|
| pH | pH-Elektrode | 8-10 |
| Feststoffgehalt / % | Mikrowelle | 20-30 |
| Viskosität / mPas | Brookfield- Viskosimeter | <1000 |
| Teilchengröße Peak max. / µm | Laserbeugung | 20-30 |
| Kernmaterial-Gehalt in Slurry / % | Berechnung aus Rezept | 15-20 |
| L*-Wert / - | Spektrophotometer | 61-67 |

Beispiel 3 - Herstellung von erfindungsgemäßen Mikrokapseldispersionen Slurry 3 und Slurry 6 sowie der nicht erfindungsgemäßen Referenz-Mikrokapseldispersion MK4

3.1 Materialien

Die eingesetzten Materialien zur Herstellung erfindungsgemäßen-Mikrokapseln - Slurry 3 und Slurry 6 sind in Tabelle 7 dargestellt.

Tabelle 7: Liste der zur Herstellung von Slurry 3 und 6 verwendeten Stoffe

| Handelsname | Stoffbezeichnung | Konzen-tration / Gew.% | Slurry 3 | Slurry 6 |
|---|---|---|---|---|
| | | | Einwaage / g | Einwaage / g |
| - | VE-Wasser Zugabe 1 | 100 | 35,2 | 39,6 |
| Dimension ™ SD, Fa. Solenis | 1,3,5- Triazin-2,4,6-triamin, Polymer mit Formaldehyd, methyliert, wässrig | 67 | 2,1* | 1,7* |
| Dimension ™ PA 140, Fa. Solenis | Polymer auf Basis: Acrylamidosulfonat Zugabe 1 | 20 | 4,6* | 3,8* |
| Weiroclean, Fa. Kurt Kitzing GmbH | Kernmaterial (z.B. Duftöl, PCM, etc.) | 100 | 52,8* | 52,6* |
| - | Resorcin-Lösung | 3,2 | 12,7 | 11,9 |
| - | Ameisensäure Zugabe 1 | 10 | 0,7 | 0,4 |
| Melafine®, Fa. OCI Nitrogen B.V. | Melamin-Suspension (pH=4,5) Zugabe 1 1) | 27 | 2,6 | 2,0 |
| - | Harnstoff-Lösung | 41,9 | 2,6 | 2,2 |
| Dimension ™ PA 140, Fa. Solenis | Polymer auf Basis: Acrylamidosulfonat Zugabe 2 | 20 | 9,5* | 9,6* |
| - | Leitungswasser | 100 | 136,2 | 135,6 |
| - | Natriumsulfat | 100 | 0,6* | 0,6* |
| Scogin® MV, Fa. DuPont Nutrition Ireland | Natriumalginat | 100 | 2,0* | 2,0* |
| Speisegelatine pulver, Fa. Ewald-Gelatine GmbH | Schweinehautgelati ne | 100 | 8,4* | 8,4* |
| - | Ameisensäure Zugabe 2 | 20 | 2,5 | 2,5 |
| - | Natronlauge Zugabe 1 | 20 | 2,4 | 2,3 |
| Glyoxal 40% solution in water for synthesis, Fa. Merck KGaA | Glyoxal | 40 | 1,9* | 1,9* |

(fortgesetzt)

| Handelsname | Stoffbezeichnung | Konzen-tration / Gew.% | Slurry 3 | Slurry 6 |
|---|---|---|---|---|
| | | | Einwaage / g | Einwaage / g |
| Melafine®, Fa. OCI Nitrogen B.V. | Melamin-Suspension (pH=4,5) Zugabe 2 1) | 27 | 27,5 | 27,4 |
| - | Natronlauge Zugabe 2 2) | 20 | 4,7 | 4,7 |
| 1) Konzentration bezogen auf die angesäuerte Suspension<br>2) Bei den gegebenen Mengen für Säuren/Laugen handelt es sich um Richtwerte. Es wird auf den in der Versuchsdurchführung genannten pH-Bereich eingestellt.<br>*Mengen der Komponenten beziehen sich auf die Handelsware und werden eingesetzt wie geliefert. | | | | |

Die eingesetzten Materialien zur Herstellung der Referenz-Mikrokapseln MK4 sind in Tabelle 8 dargestellt.

Tabelle 8: Liste der zur Herstellung der MK4 verwendeten Stoffe

| Handelsname | Stoffbezeichnung | Konzen-tration / Gew.% | Einwaage / g |
|---|---|---|---|
| - | Wasser Zugabe 1 | 100 | 34,9 |
| Dimension™ SD, Fa. Solenis | 1,3,5-Triazin-2,4,6-triamin, Polymer mit Formaldehyd, methyliert, wässrig | 67 | 1,6* |
| Dimension™ PA 140, Fa. Solenis | Polymer auf Basis: Acrylamidosulfonat Zugabe 1 | 20 | 3,4* |
| Weiroclean, Fa. Kurt Kitzing GmbH | Kernmaterial (z.B. Duftöl, PCM, etc.) | 100 | 38,8* |
| - | Resorcin-Lösung | 12,2 | 2,5 |
| - | Ameisensäure Zugabe 1 | 20 | 0,5 |
| Melafine®, Fa. OCI Nitrogen B.V. | Melamin-Suspen-sion (pH=4,5) Zugabe 1 1) | 27 | 1,9 |
| - | Harnstoff-Lösung | 16,6 | 4,7 |
| - | Leitungswasser | 100 | 100,2 |
| - | Natriumsulfat | 100 | 0,5* |
| Scogin® MV, Fa. DuPont Nutrition Ireland | Natriumalginat | 100 | 1,4* |
| Speisegelatinepulver, Fa. Ewald-Gelatine GmbH | Schweinehautgelatine | 100 | 6,2* |
| - | Ameisensäure Zugabe 2 2) | 20 | 1,4 |
| - | Natronlauge Zugabe 1 2) | 20 | 0,8 |
| - | Glyoxal | 40 | 1,4 |
| Melafine®, Fa. OCI Nitrogen B.V. | Melamin-Suspen-sion (pH=4,5) Zugabe 2 1) | 27 | 6,7 |
| - | Natronlauge Zugabe 2 2) | 20 | 2,2 |
| 1) Konzentration bezogen auf die angesäuerte Suspension<br>2) Bei den gegebenen Mengen für Säuren/Laugen handelt es sich um Richtwerte. Es wird auf den in der Versuchsdurchführung genannten pH-Bereich eingestellt.<br>*Mengen der Komponenten beziehen sich auf die Handelsware und werden eingesetzt wie geliefert | | | |

3.2. Herstellungsverfahren für nicht erfindungsgemäße Mikrokapsel MK4

Zur Herstellung der Reaktionsmischung 1 wurden Dimension PA140 und Dimension SD mit Wasser Zugabe 1 in einem Becherglas eingewogen und mit einer 4 cm Dissolverscheibe vorgemischt. Das Becherglas wurde im Wasserbad fixiert, und mit der Dissolverscheibe bei 500 U/min bei 30°C verrührt bis eine klare Lösung entstand.

Sobald die Dimension SD / Dimension PA140 Lösung klar war und 30 - 40 °C erreicht hat, wurde das Kernmaterial langsam zugegeben und dabei die Drehzahl so eingestellt (z.B. 1100 U/min), dass damit die gewünschte Teilchengröße erzielt wird. Dann wurde der pH-Wert dieser Mischung durch Zugabe der Ameisensäure-Zugabe 1 angesäuert. Es wurde 20 - 30 min emulgiert oder entsprechend verlängert bis die gewünschte Teilchengröße von 20 - 30 μm (Peak-Max) erreicht ist. Die Teilchengröße wurde mittels eines Beckmann-Coulter Gerätes (Laserbeugung, Fraunhofer Methode) bestimmt. Nach Erreichen der Teilchengröße wurde die Drehzahl so reduziert, dass eine schonende Durchmischung gewährleistet war.

Anschließend wurde die Resorcin-Lösung eingerührt und unter schonendem Rühren für 30 - 40 min präformiert. Nach Ablauf der Präformierungszeit wurde die Emulsionstemperatur innerhalb von 15 min auf 50 °C erhöht. Bei Erreichen dieser Temperatur wurde die Mischung über einen Zeitraum von 15 min auf 60°C erhöht und diese Temperatur für weitere 30 min gehalten. Anschließend wurde mit Hilfe von 20%iger Ameisensäure die Melamin-Suspension Zugabe 1 auf einen pH-Wert von 4,5 eingestellt und über einen Zeitraum von 90 min zu der Reaktionsmischung zudosiert. Danach wurde die Temperatur für 30 min gehalten. Nach Ablauf der 30 min wurde innerhalb von 15 min die Temperatur zunächst auf 70 °C erhöht. Anschließend wurde die Temperatur innerhalb von 15 min auf 80 °C erhöht und für 120 min gehalten. Danach wurde die wässrige Harnstoff-Lösung zugegeben, die Wärmequelle abgeschaltet und die Reaktionsmischung 1 auf Raumtemperatur abgekühlt. In einem separaten Becherglas wurde Natriumsulfat in Leitungswasser unter Rühren mit einem Flügelrührer bei 40-50 °C gelöst. Natriumalginat und Schweinehautgelatine werden langsam in das erhitzte Wasser eingestreut. Nachdem alle Feststoffe gelöst waren, wurde Reaktionsmischung 1 unter Rühren zu der hergestellten Gelatine/Natriumalginat Lösung zugegeben. Bei Erreichen einer homogenen Mischung wurde mit der Ameisensäure-Zugabe 2 der pH-Wert durch langsames Zutropfen auf 3,9 eingestellt, danach wurde die Wärmequelle entfernt. Anschließend wurde der Ansatz auf Raumtemperatur abgekühlt. Nach dem Erreichen der Raumtemperatur wurde die Reaktionsmischung mit Eis gekühlt. Bei Erreichen einer Temperatur von 8 °C wurde das Eisbad entfernt und mit Natronlauge Zugabe 1 der pH-Wert auf 4,7 erhöht. Anschließend wurde die Glyoxal-Lösung zugegeben. Dabei wurde darauf geachtet, dass die Temperatur bis zu der Zugabe der Glyoxal-Lösung 16-20 °C nicht überschreitet. Im Anschluss wurde die, mittels 20% Ameisensäure auf einen pH Wert von 4,5 angesäuerte Melamin-Suspension Zugabe 2 langsam zudosiert. Anschließend wurde die Reaktionsmischung auf 60 °C erwärmt und bei Erreichen der Temperatur für 60 min gehalten. Nach dieser Haltezeit wurde die Wärmequelle entfernt und die Mikrokapselsuspension für 14h schonend gerührt. Nach Ablauf der 14h wurde die Mikrokapselsuspension mittels Natronlauge Zugabe 2 auf einen pH-Wert von 10,5 eingestellt.

3.2.1 Ergebnis

Die erhaltene Mikrokapsel MK4 wurde lichtmikroskopisch untersucht. Typische Aufnahmen sind in Fig. 1G dargestellt. Zur Evaluierung der MK1 wurden der pH-Wert, der Feststoffgehalt, die Viskosität, die Teilchengröße, der Gehalt an Kernmaterial in der Slurry sowie der L*-Wert des Farborts bestimmt. Das Ergebnis ist in Tabelle 9 dargestellt.

Tabelle 9: Analyseergebnisse der nicht erfindungsgemäßen Referenz-Mikrokapsel MK4

| | Messmethode | MK4 |
|---|---|---|
| pH | pH-Elektrode | 8-10 |
| Feststoffgehalt / % | Mikrowelle | 20-30 |
| Viskosität / mPas | Brookfield-Viskosimeter | <1000 |
| Teilchengröße Peak max. / μm | Laserbeugung | 20-30 |
| Kernmaterial-Gehalt in Slurry / % | Berechnung aus Rezept | 15-20 |
| L*-Wert / - | Spektrophotometer | 51-54 |

3.3. Herstellungsverfahren für die erfindungsgemäßen Mikrokapseldispersionen Slurry 3 und Slurry 6

Zur Herstellung der Reaktionsmischung 1 wurden Dimension PA140-Zugabe 1 und Dimension SD mit VE-Wasser Zugabe 1 in einem Becherglas eingewogen und mit einer 4 cm Dissolverscheibe vorgemischt. Das Becherglas

wurde im Wasserbad fixiert, und mit der Dissolverscheibe bei 500 U/min bei 30°C verrührt bis eine klare Lösung entstand.

Sobald die Dimension SD/ Dimension PA140 Lösung klar war und 30 - 40 °C erreicht hat, wurde das Kernmaterial langsam zugegeben und dabei die Drehzahl so eingestellt (z.B. 1100 U/min), dass damit die gewünschte Teilchengröße erzielt wird. Anschließend wurde der pH-Wert dieser Mischung durch Zugabe der Ameisensäure-Zugabe 1 angesäuert (pH=3,3-3,5).

Es wurde 20 - 30 min emulgiert oder entsprechend verlängert bis die gewünschte Teilchengröße von 20 - 30 μm (Peak-Max) erreicht ist. Die Teilchengröße wurde mittels eines Beckmann-Coulter Gerätes (Laserbeugung, Fraunhofer Methode) bestimmt. Nach Erreichen der Teilchengröße wurde die Drehzahl so reduziert, dass eine schonende Durchmischung gewährleistet war und anschließend die Resorcin-Lösung zugegeben.

Unter schonendem Rühren wurde für 30 - 40 min präformiert. Nach Ablauf der Präformierungszeit wurde die Emulsionstemperatur innerhalb von 15 min auf 50 °C erhöht. Bei Erreichen dieser Temperatur wurde die Mischung über einen Zeitraum von 15 min auf 60°C erhöht und diese Temperatur für weitere 30 min gehalten. Anschließend wurde mit Hilfe von 20%iger Ameisensäure die Melamin-Suspension Zugabe 1 auf einen pH-Wert von 4,5 eingestellt und über einen Zeitraum von 90 min zu der Reaktionsmischung zudosiert.

Danach wurde die Temperatur für 30 min gehalten. Nach Ablauf der 30 min wurde innerhalb von 15 min die Temperatur zunächst auf 70 °C erhöht. Anschließend wurde die Temperatur innerhalb von 15 min auf 80 °C erhöht und für 90 min gehalten.

Danach wurde die wässrige Harnstoff-Lösung zugegeben, die Wärmequelle abgeschaltet und die Reaktionsmischung 1 auf Raumtemperatur abgekühlt. Nachdem Reaktionsmischung 1 Raumtemperatur erreicht hat, wird Dimension PA140-Zugabe 2 hinzugegeben.

In einem separaten Becherglas wurde Natriumsulfat in Leitungswasser unter Rühren mit einem Flügelrührer bei 40-50 °C gelöst. Natriumalginat und Schweinehautgelatine werden langsam in das erhitzte Leitungswasser eingestreut. Nachdem alle Feststoffe gelöst waren, wurde Reaktionsmischung 1 unter Rühren zu der hergestellten Gelatine/Natriumalginat Lösung zugegeben. Bei Erreichen einer homogenen Mischung wurde mit der Ameisensäure-Zugabe 2 der pH-Wert durch langsames Zutropfen auf 3,7 eingestellt, danach wurde die Wärmequelle entfernt und der Ansatz natürlich gegen Raumtemperatur abgekühlt.

Nach dem Erreichen der Raumtemperatur wurde die Reaktionsmischung mit Eis auf eine Temperatur von 8 °C abgekühlt und die Temperatur bei 8 °C gehalten. Mittels Natronlauge Zugabe 1 wird der pH-Wert auf 4,7 erhöht. Anschließend wurde bei einer Temperatur von 8 °C Glyoxal 40% zugegeben und nachfolgend innerhalb einer Zeitspanne von ca. 2 min die mittels 20% Ameisensäure auf einen pH Wert von 4,5 angesäuerte Melamin-Suspension Zugabe 2 zudosiert. Mittels Natronlauge Zugabe 2 wurde innerhalb einer Zeitspanne von ca. 15 min. der pH-Wert auf einen Wert von pH=10,5 eingestellt. Das Eisbad wird entfernt und die Reaktionsmischung auf 40 °C aufgeheizt und für 1h bei dieser Temperatur gehalten.

Nach dieser Haltezeit wurde die Mikrokapselsuspension für 14h bei Raumtemperatur schonend gerührt.

3.3.1 Ergebnis

Die erhaltene erfindungsgemäße Mikrokapseln Slurry 3 und Slurry 6 wurde lichtmikroskopisch untersucht. Typische Aufnahmen sind in Fig. 1B und 1D dargestellt. Zur Evaluierung der Slurry 3 und Slurry 6 wurden der pH-Wert, der Feststoffgehalt, die Viskosität, die Teilchengröße, der Gehalt an Kernmaterial in der Slurry sowie der L*-Wert des Farborts bestimmt. Das Ergebnis ist in Tabelle 10 dargestellt.

Tabelle 10: Analyseergebnisse der erfindungsgemäßen Mikrokapseldispersion Slurry 3 und Slurry 6

| | Messmethode | Slurry 3 und Slurry 6 |
|---|---|---|
| pH | pH-Elektrode | 6-10 |
| Feststoffgehalt / % | Mikrowelle | 20-30 |
| Viskosität / mPas | Brookfield-Viskosimeter | <1000 |
| Teilchengröße Peak max. / μm | Laserbeugung | 20-30 |
| Kernmaterial-Gehalt in Slurry / % | Berechnung aus Rezept | 15-20 |
| L*-Wert / - | Spektrophotometer | 55-59 |

Beispiel 4 - Mikroskopische Bestimmung der Dicke der Stabilitätsschicht

4.1 Vorbemerkungen

Die Bestimmung der Schichtdicke der Stabilitätsschicht kann prinzipiell auf zwei Wegen erfolgen. Zunächst sei hier der lichtmikroskopische Ansatz erwähnt, also das direkte, optische Ausmessen der beobachteten Schichtdicke mittels eines Mikroskops und entsprechender Software.

Eine zweite Möglichkeit stellt die Messung der Partikelgrößenverteilung mittels Laserbeugung dar. Hier kann der Modalwert einer Partikelgrößenverteilung des reinen Barrieretemplats (vgl. Beispiel 1) in Vergleich des Modalwerts einer Partikelgrößenverteilung für eine erfindungsgemäße Mikrokapsel gesetzt werden. Die Vergrößerung dieses Messwerts sollte die Vergrößerung des hydrodynamischen Durchmessers (aufgrund der Aufbringung der Stabilitätsschicht) der Hauptfraktion an vermessenen Mikrokapseln wiedergeben. Die Bildung der Differenz aus den beiden gemessenen Modalwerten ergibt letztlich die zweifache Schichtdicke der Stabilitätsschicht.

Beide Messmethoden lieferten in Vorversuchen übereinstimmende Messergebnisse, weshalb im Folgenden nur die Durchführung und das Ergebnis der lichtmikroskopischen Untersuchung wiedergegeben wurde.

4.2 Versuchsdurchführung

Die Bestimmung der Schichtdicke der Stabilitätsschicht wurde lichtmikroskopisch an einem Olympus BX50 Mikroskop durchgeführt. Für die Vermessung wurde die Software OLYMPUS Stream Essentials 2.4.2 (Build 20105) genutzt.

Zunächst wurde mit Leitungswasser eine stark verdünnte Probe des erfindungsgemäßen Kapselslurries hergestellt. Ein Tropfen dieser Dispersion wurde auf einen Objektträger aufgetragen und mit einem Abdeckglas versehen.

Zur Bestimmung der Schichtdicke wurde am Mikroskop eine Vergrößerung von 500x ausgewählt und die entsprechenden erfindungsgemäßen Mikrokapseln in der aufgetragenen Probendispersion fokussiert.

In der o.g. Software wurde anschließend mit der Funktion "3-Punkt-Kreis" der Durchmesser des sichtbaren Barrieretemplats erfasst. Mittels der Lineal-Funktion konnte letztlich die Schichtdicke der Stabilitätsschicht an drei charakteristischen Stellen vermessen werden.

Aufgrund der elliptischen Form der Stabilitätsschicht wurden mehrere Schichtdickenmesswerte je fokussierter Mikrokapsel aufgenommen um die Varianz in der Schichtdicke wiederzugeben. Die erfindungsgemäßen Mikrokapseln weisen eine größere Schichtdicke an zwei gegenüberliegenden Scheitelpunkten und eine kleinere Schichtdicke an den übrigen zwei gegenüberliegenden Scheitelpunkten auf. Zur Reduktion dieses Messfehlers bei der Angabe einer Schichtdicke für die Stabilitätsschicht wurde ein Mittelwert über 10 einzelne Mikrokapseln angefertigt.

4.3 Ergebnisse

Tabelle 11: Ergebnisse der Schichtdickenmessung der Stabilisationsschicht am Beispiel von Slurry 3

| Nr. Betrachtete Kapsel / - | Durchmesser Barrieretemplat / µm | Schichtdicke / µm | | |
|---|---|---|---|---|
| | | M1 | M2 | M3 |
| 1 | 30,48 | 3,02 | 7,86 | 4,02 |
| 2 | 26,12 | 4,74 | 3,37 | 4,36 |
| 3 | 25,78 | 4,76 | 4,25 | 3,21 |
| 4 | 25,81 | 5,74 | 4,53 | 2,23 |
| 5 | 24,28 | 8,12 | 2,38 | 7,17 |
| 6 | 16,08 | 2,28 | 3,72 | 1,73 |
| 7 | 30,86 | 3,75 | 3,21 | 5,56 |
| 8 | 20,37 | 2,03 | 3,18 | 4,01 |
| 9 | 36,83 | 3,23 | 4,68 | 3,21 |
| 10 | 20,74 | 3,86 | 2,04 | 3,54 |
| | Mittelwert | 3,99 | | |

(fortgesetzt)

| Nr. Betrachtete Kapsel / - | Durchmesser Barrieretemplat / µm | Schichtdicke / µm | | |
|---|---|---|---|---|
| | | M1 | M2 | M3 |
| | SD | 1,59 | | |

Exemplarisch sind die Lichtmikroskopbilder der angefertigten Schichtdickenmessung für Slurry 3 und ein Vergleich der Mikrokapsel MK1 in Fig. 2 abgebildet. Das Ergebnis der Ausmessung von 10 Kapseln der Slurry 3 ist in Tabelle 11 dargestellt.

Dieses Ergebnis wurde für die Slurry 3 mittels Laserbeugung und über die Differenz des Modalwert der Partikelgrößenverteilung zu einer Mikrokapsel ohne die Stabilitätsschicht bestätigt.

Beispiel 5 - Stabilitätsmessung der Mikrokapseln

5.1 Vorbemerkung

Zur Bestimmung der Stabilität von Mikrokapseln wurden diese über einen Zeitraum von bis zu 4 Wochen in einer modellhaften Weichspülerformulierung bei 40°C gelagert und die Konzentration der aus dem Kapselinneren in die umgebende Formulierung diffundierten Riechstoffe mittels HS - GC/MS bestimmt. Basierend auf den Messwerten wurde der Restanteil des noch in der Kapsel befindlichen Parfümöls berechnet.

Modellhafte Weichspülerformulierung auf Basis Rewoquat WE 18 E US von Evonik in Anlehnung an die Rezeptur aus dem zugehörigen Produktdatenblatt:
Für die Herstellung der Weichspülerbase wurden 94 g Wasser auf 50 °C erwärmt und 5,65 g Rewoquat WE 18 E US unter Rühren in das erwärmte Wasser gegeben. Die Mischung wurde auf Raumtemperatur abgekühlt, dann erfolgte die Zugabe der Mikrokapseldispersion.

5.2 Versuchsdurchführung

Hierzu wurde die Mikrokapseldispersionen Slurry 2, Slurry 3, Slurry 5, Slurry 6 sowie MK1, MK2 und MK4 sorgfältig homogenisiert und mit einer Konzentration von 1 Gew.-% in der Modellformulierung bei 40°C, luftdicht verschlossen, im Wärmeschrank gelagert. Als Vergleich dient der nicht verkapselte Riechstoff mit analoger Riechstoffkonzentration in der Modellformulierung.

Nach vorgegebener Lagerdauer wurden die Muster aus dem Wärmeschrank entnommen und ein Aliquot in ein 20 ml Headspace-Vial eingewogen. Das Vial wurde anschließend sofort verschlossen.

Diese Muster wurden per Headspace-SPME *(Solid-Phase-Micro-Extraction)* mit Hilfe der Kapillargaschromatographie untersucht und, nach erfolgter Detektion mit einem massenselektiven Detektor (MSD), ausgewertet.

5.3 Ergebnis

Der Stabiltätsverlauf der erfindungsgemäßen Mikrokapseldispersionen Slurry 2 und 3, sowie der Referenz-Mikrokapseldispersion MK2 über 4 Wochen ist in Tabelle 12 und Fig. 4A dargestellt.

Tabelle 12: Messwerte der Stabilitätsuntersuchung 1: Slurry 2, Slurry 3 und MK2

| | MK2 | Slurry 2 | Slurry 3 |
|---|---|---|---|
| Laufzeit / Wochen | Stabilität / % | Stabilität / % | Stabilität / % |
| 0 | 100 | 98 | 91 |
| 1 | 100 | 93 | 84 |
| 4 | 87 | 73 | 61 |

Der Stabiltätsverlauf der erfindungsgemäßen Mikrokapseldispersionen Slurry 5 und 6 sowie der Referenz-Mikrokapseldispersion MK2 über 4 Wochen ist in Tabelle 13 und Fig. 4D dargestellt.

Tabelle 13: Messwerte der Stabilitätsuntersuchung 1: Slurry 5, Slurry 6 und MK2

| | MK2 | Slurry 5 | Slurry 6 |
|---|---|---|---|
| Laufzeit / Wochen | Stabilität / % | Stabilität / % | Stabilität / % |
| 0 | 100 | 96 | 97 |
| 1 | 100 | 86 | 87 |
| 4 | 87 | 57 | 58 |

Wie den Tabellen 12 und 13 zu entnehmen ist, zeigen die erfindungsgemäßen Mikrokapseln Slurry 2, Slurry 3, Slurry 5, und Slurry 6 nach 4 Wochen Lagerung in einer Modellformulierung eine zur MF-Referenz MK2 vergleichbare Stabilität. Weiterhin zeigt sich, dass die erfindungsgemäßen Mikrokapseln mit gesteigerter Schichtdicke der Stabilitätsschicht Slurry 2 und 3 eine, im Vergleich mit den Referenzkapseln MK1 und MK4, verbesserte Stabilität über eine Lagerdauer von 4 Wochen aufweisen (vgl. Fig. 4B und 4C).

Für die Berechnung der Kapselstabilität wurde eine Konzentrationsveränderung von 16 Einzelinhaltsstoffen des verkapselten Riechstoffs betrachtet. Eine Stabilitätsverringerung hat einen Austritt des verkapselten Riechstoffs zufolge, welcher anschließend mittels Headspace-SPME gaschromatographisch detektiert werden kann. Da alle Kapseldispersionen auf einen definierten Ölgehalt von 15 Gew.-% eingestellt wurden, ist ein direkter Vergleich der untersuchten Kapselproben möglich. Einzelinhaltsstoffe (bzw. deren gaschromatographisch erfassten Einzelsignale), welche aufgrund von messtechnisch bedingten Schwankungen höhere Konzentrationen anzeigen, als diese theoretisch im Vergleich mit dem Referenzstandard möglich waren, wurden nur bis zur theoretischen Maximalkonzentration in der Auswertung berücksichtigt.

Beispiel 6 - Bioabbaubarkeitsmessung der Mikrokapseln (gemäß OECD 301 F)

6.1 Allgemein

Dieser Versuch dient der Beurteilung der raschen biologischen Abbaubarkeit der Mikrokapseln.

Die Testkonzentration der zu untersuchenden Proben beträgt standardmäßig 1000 mg/l $O_2$. Die Messköpfe und der Controller messen den Sauerstoffverbrauch in einem geschlossenen System. Durch den Verbrauch von Sauerstoff und das gleichzeitige Binden von entstehendem Kohlendioxid an Natronlaugeplätzchen entsteht ein Unterdruck im System. Die Messköpfe registrieren und speichern diesen Druck über den eingestellten Messzeitraum. Die gespeicherten Werte werden mittels Infrarotübertragung in den Controller eingelesen. Sie können mittels des Programmes Achat OC auf einen PC übertragen und ausgewertet werden.

Um den Einfluss des Kernmaterials zum Abbau zu eliminieren wurde Perfluoroctan verkapselt (Abbaurate = <1 %).

6.2 Geräte und Chemikalien

| | |
|---|---|
| Geräte: | OxiTop-Control-Messsystem, Fa. WTW inkl. Controller OxiTop OC 110 mit Schnittstellenkabel für PC, 6 Messköpfen OxiTop C, 6 Glasfläschchen mit jeweils 510 ml Gesamtvolumen, 6 Magnetrührer, 6 Gummiköcher, 1 Magnetrührsystem, sowie Auslesesoftware Achat OC |
| | Trockenschrank ORI-BSB, auf 20 °C eingestellt |
| | Ausströmersteine Oxygenius, 30 x 15 x 15 mm3 |
| | Aquarienbelüftungspumpe Thomas -ASF Nr. 1230053 |
| | Filternutsche D=90 mm |
| | Saugflasche 2 l |
| | Weißbandfilter MN 640 d, D=90mm, Fa. Macherey + Nagel |
| | Handbuch "System Oxi Top Controll", Fa. WTW |
| Chemikalien: | Belebtschlamm aus der werkseigenen oder einer kommunalen Abwasserreinigungsanlage |
| | Ethylenglycol z.A., Fa. Merck |
| | Referenzprobe mit CSB 1000 mg/l O2 |
| | Wallnussschalen-Mehl, Fa. Senger Naturrohstoffe |
| | Nährsalzlösung aus der werkseigenen oder einer kommunalen Abwasserreinigungsanlage |

(fortgesetzt)

Natronlaugeplätzchen z.A. > 99%, Fa. Merck
Küvettentest CSB LCK 514, Fa. Dr. Lange

6.3 Durchführung

6.3.1 Herstellung der Mikrokapsel-Slurries

Die Mikrokapseldispersionen Slurry 2 und Slurry 3 wurden entsprechend der Beschreibungen der Beispiele 2 bis 3 hergestellt, mit dem Unterschied, dass anstelle des Parfümöls das vollständig persistente Perfluoroctan (Abbaurate <1%) als Kernmaterial verwendet wurde. Dadurch wird ein etwaiger Einfluss des Kernmaterials auf das Versuchsergebnis eliminiert.

6.3.2 Probenvorbereitung

Im Falle der verlängerten Abbautests über 60 Tage wurden die Mikrokapsel-Slurries nach Herstellung durch dreimaliges Zentrifugieren und Redispergieren in Wasser gewaschen, um gelöste Rückstände abzutrennen. Dafür wird eine Probe von 20-30 mL jeweils 10 Minuten bei 12.000 Umdrehungen pro Minute zentrifugiert. Nach Absaugen des Klarberstandes wird mit 20-30 mL Wasser aufgefüllt und der Bodensatz durch Schütteln redispergiert.

6.3.3 Herstellung der Referenzprobe

Es wurden 711,6 mg Ethylenglycol in einem 1 l-Messkolben gelöst und bis zur Marke aufgefüllt. Das entspricht einem CSB von 1000 mg/l $O_2$. Ethylenglycol gilt als gut bioabbaubar und dient hier als Referenz.

Auf Grund des raschen Abbaus von Ethylenglykol wurde für den verlängerten 60-Tage-Test Wallnussschalen-Mehl als weitere Referenz hinzugenommen. Wallnussschalen-Mehl besteht aus einer Mischung von Biopolymeren, insbesondere Cellulose und Lignin, und dient als biobasierte Referenz auf Feststoffbasis. Auf Grund des langsamen Abbaus von Wallnussschalen-Mehl kann der Testverlauf über den kompletten Zeitraum von 60 Tagen verfolgt werden. Hierfür wurden 117,36 g Walnussschalen-Mehl unter Rühren homogen in 1l Wasser dispergiert. Aliquote Teile dieser Mischung wurden unter Rühren zur CSB-Bestimmung entnommen. Anhand des CSB-Mittelwertes von 1290±33 mg/l $O_2$ wurde die benötigte Einsatzmenge berechnet und unter Rühren in die OxiTop-Flaschen überführt.

6.3.4 Vorbereitung des Bioschlamms

Aus dem Auslauf des Belebtschlammbeckens einer werkseigenen oder einer kommunalen Abwasserreinigungsanlage wurde mit einem 20 l-Eimer Belebtschlamm entnommen. Nach 30-minütigem Absetzen wurde das Überstandswasser verworfen.

Anschließend wurde der aufkonzentrierte Bioschlamm im Eimer mit Hilfe der Aquarienpumpe und eines Ausströmersteins 3 Tage permanent belüftet.

6.3.5 Trockengehaltsbestimmung des Bioschlamms

Nach 3 Tagen wurden 100 ml des aufkonzentrierten Bioschlamms mittels einer Filternutsche über einen Weißbandfilter abfiltriert. Der Filterkuchen wird 24 h bei 105°C im Trockenschrank getrocknet.

$$TG=\frac{A}{E}$$

| | |
|---|---|
| TG | = Trockengehalt des Bioschlamms in % |
| E | = Einwaage des Filterkuchens in g |
| A | = Auswaage des Filterkuchens in g |
| c | = TG x 10 |
| c | = Konzentration des Bioschlamms in g/l |

6.3.6 Einstellung der Proben auf einen CSB von 1000 mg/l $O_2$

Der CSB-Wert der zu untersuchenden Proben wurde mit dem Küvettentest CSB LCK 514 bestimmt. Die Probe wird solange mit Wasser verdünnt bis der CSB-Wert von 1000 mg/l $O_2$ erreicht wird.

6.3.7 Vorbereitung der Ansätze

Für eine Probe wurden 6 OxiTop-Flaschen verwendet, da jeweils Doppelbestimmungen durchgeführt werden.

In jeweils 2 Flaschen (Doppelbestimmung) fanden folgende Messungen statt:

- Biologische Abbaubarkeit der Probe
- Biologische Abbaubarkeit der Ethylenglycol-Lösung (= Referenzlösung)
- Blindprobe (= Bestimmung des Restabbaus des Schlamms selbst)

Für jede Flasche sind erforderlich:

- 25 ml Probe mit einem CSB von 1000 mg/l $O_2$ (bei Blindprobe 25 ml destilliertes Wasser)
- 3,5 ml Nährlösung
- 44,5 mg otro (ofentrockener) Schlamm
- destilliertes Wasser zum Auffüllen auf ein Gesamtvolumen von 250 ml

In jeden Gummiköcher wurden mit einem Spatel 3 Natronlaugeplätzchen gegeben.
Nachdem die Flaschen mit Probe, Nährlösung, Bioschlamm und destilliertem Wasser versetzt wurden, wurde in jede Flasche ein Magnetrührstäbchen gegeben. Dann wurden die Gummiköcher auf die jeweiligen Flaschenhälse aufgesetzt und die Messköpfe fest auf die Flaschen aufgeschraubt.

6.4 Messung und Auswertung

Die Programmierung der OxiTop-C-Messköpfe und die Auswertung der Daten ist ausführlich beschrieben im Handbuch "System OxiTop Control", Fa. WTW.

6.5 Ergebnis

Die zu den verschiedenen Zeiten gemessenen Abbauwerte der Mikrokapseln sind in Tabelle 14 dargestellt.

Tabelle 14: Darstellung der Abbauwerte nach OECD 301 (60 Tage)

| | Slurry 2 Abbau [%] | | Slurry 3 Abbau [%] | | Ethylenglykol Abbau [%] | | Walnuss schalenm ehl Abbau [%] |
|---|---|---|---|---|---|---|---|
| Tag | Mittel-wert | Standardabw. | Mittelwert | Standard-abw. | Mittel-wert | Standardabw. | |
| 0 | 0 | 0 | 0 | 0 | 0 | 0 | 0 |
| 3 | 13 | 2 | 22 | 3 | 36 | 5 | 1 |
| 5 | 32 | 6 | | | 68 | 6 | |
| 7 | 50 | 5 | 53 | 5 | 76 | 10 | 25 |
| 10 | 54 | 5 | | | 90 | 12 | |
| 14 | 53 | 9 | 75 | 8 | 95 | 7 | 38 |
| 19 | 56 | 8 | | | 99 | 2 | |
| 21 | | | 84 | 11 | | | 55 |
| 26 | 62 | 1 | | | 98 | 3 | |
| 28 | | | 86 | 10 | | | 62 |
| 32 | 76 | 1 | | | 97 | 5 | |

(fortgesetzt)

| | Slurry 2 Abbau [%] | | Slurry 3 Abbau [%] | | Ethylenglykol Abbau [%] | | Walnuss schalenm ehl Abbau [%] |
|---|---|---|---|---|---|---|---|
| Tag | Mittel-wert | Standardabw. | Mittelwert | Standard-abw. | Mittel-wert | Standardabw. | |
| 35 | 81 | 1 | 91 | 13 | 96 | 4 | 65 |
| 40 | 84 | 1 | | | 94 | 4 | |
| 42 | | | 92 | 12 | | | 66 |
| 46 | 85 | 1 | | | 88 | 3 | |
| 48 | 84 | 1 | | | 87 | 3 | |
| 49 | | | 90 | 14 | | | 66 |
| 56 | | | 91 | 13 | | | 68 |
| 60 | 74 | 3 | 91 | 13 | 81 | 2 | 69 |

Die Mikrokapseldispersionen Slurry 2 und Slurry 3 zeigen eine sehr gute biologische Abbaubarkeit im OECD301F Test. Nach 14 Tagen (Slurry 3), bzw. 26 Tagen (Slurry 2) werden die Anforderungen der OECD/ECHA erfüllt, da hier ein Abbaugrad von >60% vorliegt.

Der Abbauverlauf der Referenzprobe Ethylenglykol weist auf ein gesundes Inokulum hin und zeigt außerdem die instrumentelle Funktionalität über die gesamte Laufzeit des Versuchs auf.

Das Walnusschalenmehl ist gekennzeichnet durch den typischen, stufenförmigen Abbauverlauf, welcher für eine komplexe Mischung an Biopolymeren erwartet wurde. Durch den kontinuierlichen Anstieg der biol. Abbaubarkeit über die gesamte Versuchslaufzeit von 60 Tagen kann auch hier auf ein gesundes Inokulum geschlossen werden.

## Beispiel 7 - Bestimmung der Farbigkeit der Mikrokapseldispersionen

### 7.1 Versuchsbeschreibung

Die Farbigkeit der Mikrokapseldispersionen Slurry 2 und 3 als Farbort im L*a*b* Farbraum wurde mittels des folgenden Versuchsprotokolls bestimmt.

Zur Bestimmung der Farbigkeit von Mikrokapseldispersionen wurde das portable Spektrophotometer "spectro-color d/8°C" der Fa. Dr. Lange in Verbindung mit Glas-Messküvetten für Flüssigkeiten genutzt. Weiterhin fand die Messung in dem zugehörigen Messaufbau statt, welcher die Verdunklung der Probe während der Messung (und somit den Einfluss von Streulicht minimiert) statt. Vor dem Beginn der Messungen wurde eine Kalibration gegen einen Schwarz- und Weiß-Standard (LZM268 Standardsatz) durchgeführt.

Die entsprechende Kapseldispersion wird unverdünnt in eine runde Glasküvette gefüllt (ca. 5-6 mL). Mittels des zugehörigen PTFE-Stempels wird einerseits der Messbereich auf eine definierte Schichtdicke eingestellt sowie etwaige Lufteinschlüsse in der Dispersion entfernt.

Die Farbmessung wurde im Rahmen einer Dreifachbestimmung durchgeführt, wobei nach jeder Einzelmessung die Küvette um ca. 30° rotiert wurde. Anschließend wird der Mittelwert sowie Standardabweichung berechnet.

### 7.2 Ergebnis

Tabelle 15: Bestimmung des Farborts von Slurry 2 und 3 im L*a*b* Farbraum nach Herstellung und nach Lagerung

| Bez. | Reifezeit / Tage | Rohdaten | | | | Mittelwert | SD |
|---|---|---|---|---|---|---|---|
| Slurry 3 | 0 | L | 51,76 | 52,13 | 52,17 | 52 | 0 |
| | | a | 10,94 | 10,79 | 10,65 | 11 | 0 |
| | | b | 11,67 | 10,62 | 10,68 | 11 | 0 |
| | 48 | L | 51,09 | 51,25 | 51,17 | 51 | 0 |
| | | a | 13,05 | 13,02 | 13,03 | 13 | 0 |
| | | b | 14,04 | 13,39 | 13,49 | 14 | 0 |
| | | | | | | | |
| Slurry 2 | 0 | L | 64,82 | 64,78 | 64,79 | 65 | 0 |
| | | a | 3,86 | 3,74 | 3,61 | 4 | 0 |
| | | b | 12,62 | 12,99 | 13,16 | 13 | 0 |
| | 48 | L | 63,82 | 63,83 | 63,76 | 64 | 0 |
| | | a | 4,35 | 4,4 | 4,38 | 4 | 0 |
| | | b | 14,27 | 13,88 | 14,23 | 14 | 0 |

Beispiel 8 - Einfluss der Wärmebehandlung auf die Farbstabilität

Um den Einfluss der Wärmebehandlung im letzten Aushärtungsschritt auf die Farbstabilität zu ermitteln wurde das Herstellungsverfahren von Slurry 3 abgewandelt. Dabei wurde auf das Aufheizen der Reaktionsmischung auf 40 °C für 1 h vor dem Rühren für 14 h bei Raumtemperatur verzichtet. Die so entstandenen Mikrokapseldispersion wird als Slurry 3A bezeichnet.

Slurries 3 und 3A wurden parallel hergestellt und direkt im Anschluss der Farbort von Proben beider Mikrokapseldispersionen gemäß dem in Beispiel 7 beschriebenen Protokoll bestimmt. In den Folgetagen 1, 2, 3, 4, und 8 wurden jeweils Proben der Slurries 3 und 3A entnommen und wiederum der Farbort dieser Proben bestimmt. Es wurden jeweils drei Proben pro Mikrokapseldispersion und Tag gemessen und der Mittelwert für die drei L*a*b*-Koordinaten.

In **Fig. 5** ist die zeitliche Entwicklung der L*a*b*-Koordinaten der beiden Mikrokapseldispersionen Slurry 3 und 3A dargestellt. In den Diagrammen ist deutlich zu sehen, dass die wärmebehandelte Mikrokapseldispersion Slurry 3 direkt eine konstante Farbigkeit aufweist. Im Gegensatz dazu kommt es insbesondere zu Beginn der Lagerungszeit bei der nicht wärmebehandelten Mikrokapseldispersion zu einer stärkeren Veränderung der Farbe mit einem Wert für ΔL* von ungefähr 10, für Δa* von ungefähr 5 und für Δb* von ungefähr 8.

Beispiel 9 - Duftintensität und Boost-Wirkung

Die Duftintensität und Boost-Effekt der hierin beschriebenen Kapseln beim Einsatz in handelsüblichen Weichspüler- und Pulverwaschmittelformulierungen wurde untersucht. Als Vergleich wurden marktübliche Melamin-Formaldehyd-Kapseln (MF-Kapseln) sowie die Kapseln gemäß PCT/EP2020/085804 eingesetzt, die keinen Emulsionsstabilisator zwischen innerer und äußerer Schale aufweisen. Dazu wurden Baumwoll- und Polyestertextilien mit einer Weichspüler- bzw. Vollwaschmittelformulierung ohne Parfümierung mit Zusatz der verschiedenen Parfümmikrokapseln (0,3 Gew.-% einer Kapselslurry mit gleichen Kapselmengen) gewaschen, getrocknet und von einem geschulten Panel an Experten abgerochen, wobei die Duftintensität auf einer Skala von 1 = kein Duft bis 10 = sehr intensiver Duft und die Booster-Wirkung auf einer Skala von 1 = kein Duft bis 5 = sehr intensiver Duft bewertet wurde. Das eingesetzte Parfüm entsprach der erfindungsgemäßen Definition.

Waschmaschine: Miele Softtronic W1734 WPS
Wäscheposten: 2,5kg BW-Frottiertücher (30x30cm)

Waschprogramm: Waschmittel: Hauptwaschgang bei 40°C (ohne Weichspüler);
Weichspüler: Hauptwaschgang bei 40°C mit unparfümiertem Waschmittel + Weichspüler
Schleuderzahl: 1200rpm
Wasserhärte: 12°dH
Trocknungsart: Leine
Trocknungsbedingungen: 50-60% rel. Luftfeuchtigkeit in einem sauberen und geruchsneutralen Raum

Dabei wurden folgende Ergebnisse erhalten:

| **Produkt** | **Duftintensität** | | **Boosterwirkung** | |
|---|---|---|---|---|
| | **Baumwolle** | **Polyester** | **Baumwolle** | **Polyester** |
| **Weichspüler** | | | | |
| MF Kapseln (Vergleich) | 5 | 4 | 2 | 1,5 |
| Kapseln gem. PCT/EP2020/085804 | 7,5 | 7 | 4 | 3,5 |
| Kapseln gemäß der Erfindung | 7,5 | 7 | 4 | 4 |
| **Pulverwaschmittel** | | | | |
| MF Kapseln (Vergleich) | 5 | 4 | 2 | 1,5 |
| Kapseln gem. PCT /EP2020/085804 | 7,5 | 7 | 4 | 3,5 |
| Kapseln gemäß der Erfindung | 7,5 | 7 | 4 | 4 |

Hinsichtlich weiterer vorteilhafter Ausgestaltungen der erfindungsgemäßen Mittel und Verwendungen wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Mittel und Verwendungen lediglich zur Erörterung der beanspruchten Lehre dienen, diese jedoch nicht auf die Ausführungsbeispiele einschränken.

**Patentansprüche**

1. Mittel enthaltend bioabbaubare Mikrokapseln umfassend ein Kernmaterial und eine Schale, wobei die Schale aus mindestens einer Barriereschicht und einer Stabilitätsschicht besteht, wobei die Barriereschicht das Kernmaterial umgibt, wobei die Stabilitätsschicht mindestens ein Biopolymer umfasst, und auf der äußeren Oberfläche der Barriereschicht angeordnet ist, und wobei am Übergang von Barriereschicht zu Stabilitätsschicht ein Emulsionsstabilisator angeordnet ist, wobei das Mittel ein Wasch- oder Reinigungsmittel oder kosmetisches Mittel ist und wobei das Kernmaterial mindestens eine Parfümzusammensetzung umfasst, wobei die Parfümzusammensetzung bezogen auf das Gesamtgewicht aller in der Parfümzusammensetzung enthaltenen Riechstoffe umfasst:

    a) ≤10 Gew.-% an Riechstoffen mit einem CLogP von ≤2,5 und einem Siedepunkt von ≥200°C;
    b) ≥15 Gew.-% von mindestens einem Riechstoff mit einem CLogP von ≥4,0 und einem Siedepunkt von ≤275°C; und
    c) ≥30 Gew.-% von mindestens einem Riechstoff mit einem Dampfdruck von ≥5 Pa bei 20°C.

2. Mittel nach Anspruch 1, wobei bei der Herstellung der Mikrokapseln, die Oberfläche der Barriereschicht vor Ausbildung der Stabilitätsschicht mit dem Emulsionsstabilisator in Kontakt gebracht wird, wodurch die Kapazität der Oberfläche zur strukturellen Anbindung der Stabilitätsschicht erhöht ist.

3. Mittel nach einem der vorherigen Ansprüche, wobei der Emulsionsstabilisator ein Polymer oder Copolymer ist, bestehend aus einem oder mehreren Monomeren ausgewählt aus:

    (1) Acrylsäure-Derivaten der allgemeinen Formel (I)

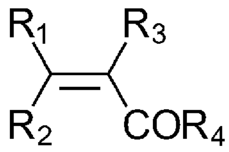

wobei

$R_1$, $R_2$ und $R_3$ ausgewählt sind aus: Wasserstoff und einer Alkylgruppe mit 1 bis 4 Kohlenstoffatomen, wobei $R_1$ und $R_2$ insbesondere Wasserstoff und $R_3$ insbesondere Wasserstoff oder Methyl ist; und $R_4$ für -OX oder -$NR_5R_6$ steht, wobei X für Wasserstoff, $C_1$-$C_{10}$ Alkyl, ein Alkalimetall oder eine Ammonium-Gruppe steht, insbesondere für Methyl, n-Butyl, oder Ethylhexyl, insbesondere 2-Ethylhexyl, und $R_5$ und $R_6$ unabhängig voneinander für Wasserstoff oder substituiertes oder unsubstituiertes $C_1$-$C_{10}$ Alkyl stehen, wobei der Substituent ausgewählt wird aus -$SO_3M$, wobei M für Wasserstoff, ein Alkalimetall oder Ammonium steht, wobei mindestens eines von $R_5$ und $R_6$ nicht Wasserstoff ist, wobei vorzugsweise $R_5$ H ist und $R_6$ 2-Methyl-propan-2-yl-1-sulfonsäure;

(2) N-Vinylpyrrolidon; und
(3) Styrol;

wobei der Emulsionsstabilisator bevorzugt ein Copolymer enthaltend 2-Acrylamido-2-methyl-propansulfonsäure (AMPS) ist.

**4.** Mittel nach einem der vorherigen Ansprüche, wobei der Anteil des Emulsionsstabilisator bezogen auf das Gesamtgewicht der Kapsel im Bereich von 0,5 bis 15,0 Gew.-%, bevorzugt im Bereich von 1 bis 11 Gew.-%, besonders bevorzugt im Bereich von 2 bis 7 Gew.-% liegt.

**5.** Mittel nach einem der vorherigen Ansprüche, wobei die Barriereschicht aus einer oder mehreren Komponenten, ausgewählt aus der Gruppe bestehend aus einer aldehydischen Komponente, einem aromatischen Alkohol, einer Aminkomponente, einer Acrylat-Komponente und einer IsocyanatKomponente, aufgebaut ist.

**6.** Mittel nach Anspruch 5, wobei die Barriereschicht eine aldehydische Komponente, ausgewählt aus der Gruppe bestehend aus Formaldehyd, Glutaraldehyd, Succinaldehyd, Furfural, und Glyoxal, enthält, und bevorzugt der Anteil der aldehydischen Komponente für die Polykondensation bezogen auf das Gesamtgewicht der zweiten Schale im Bereich von 5 bis 50 Gew.-% bevorzugt im Bereich von 10 bis 30 Gew.-%, besonders bevorzugt im Bereich von 15 bis 20 Gew.-% liegt.

**7.** Mittel nach Anspruch 5 oder 6, wobei die Barriereschicht einen aromatischen Alkohol, ausgewählt aus der Gruppe bestehend aus Resorcin, Phloroglucin und Aminophenol, enthält, und bevorzugt der Anteil des aromatischen Alkohols bezogen auf das Gesamtgewicht der Barriereschicht im Bereich von 1,0 bis 20 Gew.-%, bevorzugt im Bereich von 6 bis 16 Gew.-%, besonders bevorzugt im Bereich von 10 bis 14 Gew.-% liegt.

**8.** Mittel nach einem der Ansprüche 7 bis 9, wobei die Barriereschicht eine Aminkomponente, ausgewählt aus der Gruppe bestehend aus Melamin, Melaminderivaten und Harnstoff und Kombinationen davon, enthält, und bevorzugt der Anteil der Aminkomponente bezogen auf das Gesamtgewicht der Barriereschicht im Bereich von 20 Gew.-% bis 85 Gew.-%, bevorzugt im Bereich von 40 Gew.-% bis 80 Gew.-%, besonders bevorzugt im Bereich von 55 Gew.-% bis 70 Gew.-% liegt.

**9.** Mittel nach einem der vorherigen Ansprüche, wobei

(1) die Biopolymere der Stabilitätsschicht ausgewählt sind aus der Gruppe bestehend aus Proteinen wie Gelatine, Molkeprotein, Pflanzenspeicherprotein; Polysacchariden wie Alginat, Gummi arabicum modifiziertes Gummi, Chitin, , Dextran, Dextrin, Pektin, Cellulose, modifizierte Cellulose, Hemicellulose, Stärke oder modifizierte Stärke; phenolischen Makromolekülen wie Lignin; Polyglucosaminen wie Chitosan, Polyvinylestern, wie Polyvinylalkohole und Polyvinylacetat; Phosphazenen und Polyestern wie Polylactid oder Polyhydroxyalkanoat, wobei die Biopolymere insbesondere Gelatine und/oder Alginat sind; und/oder
(2) das Biopolymer in der Stabilitätsschicht mit einem Aushärtungsmittel vernetzt ist und das Aushärtungsmittel der Stabilitätsschicht ausgewählt ist aus der Gruppe bestehend aus einem Aldehyd, wie Glutaraldehyd, Formaldehyd oder Glyoxal, einem Tannin, einem Enzym wie Transglutaminase und einem organischen Anhydrid wie Maleinsäureanhydrid, einer Epoxyverbindung einem mehrwertigen Metallkation, einem Amin, einem Polyphenol, einem Maleimid, einem Sulfid, einem Phenoloxid, einem Hydrazid, einem Isocyanat, einem Isothiocyanat, einem N-Hydroxysulfosuccinimid-Derivat, einem Carbodiimid-Derivat, und einem Polyol, wobei das Aushärtungsmittel besonders bevorzugt Glutaraldehyd oder Glyoxal ist.

**10.** Mittel nach einem der vorherigen Ansprüche, wobei der Anteil der Barriereschicht an der Schale bezogen auf das Gesamtgewicht der Schale höchstens 30 Gew.-% beträgt, bevorzugt höchstens 25 Gew.-% und besonders bevorzugt höchstens 20 Gew.-% beträgt.

**11.** Mittel nach einem der vorherigen Ansprüche, wobei

(1) die Stabilitätsschicht eine mittlere Dicke von mindestens 3 μm, bevorzugt mindestens 5 μm, und besonders bevorzugt mindestens 6 μm aufweist; und/oder
(2) die Mikrokapsel eine dritte Schicht aufweist, die an der Außenseite der Stabilitätsschicht angeordnet ist und die eine Komponente ausgewählt aus Aminen, organischen Salzen, anorganischen Salzen, Alkoholen, Ethern, Polyphosphazenen, und Edelmetallen enthält, wobei der Anteil der dritten Schicht an der Schale bezogen auf das Gesamtgewicht der Schale höchstens 35 % beträgt, bevorzugt höchstens 25 Gew.-%, und besonders bevorzugt höchstens 15 Gew.-% beträgt.

**12.** Mittel nach einem der vorherigen Ansprüche, wobei die Parfümzusammensetzung bezogen auf das Gesamtgewicht aller in der Parfümzusammensetzung enthaltenen Riechstoffe umfasst:

a) ≤8 Gew.-% an Riechstoffen mit einem CLogP von ≤2,5 und einem Siedepunkt von ≥200°C;
b) ≥20 Gew.-% von mindestens einem Riechstoff mit einem CLogP von ≥4,0 und einem Siedepunkt von ≤275°C; und/oder
c) ≥40 Gew.-% von mindestens einem Riechstoff mit einem Dampfdruck von ≥5 Pa bei 20°C.

**13.** Mittel nach einem der vorherigen Ansprüche, wobei die bioabbaubaren Mikrokapseln wenigstens eins, bevorzugt sämtliche folgenden Merkmale aufweisen:

• eine Bioabbaubarkeit der Schale gemessen nach OECD 301 F von mindestens 40 % bevorzugt mindestens 50 %, besonders bevorzugt mindestens 60 % und insbesondere von 70 % aufweist;
• eine Dichtheit, die einen Austritt von höchstens 80 Gew. % des eingesetzten Kernmaterials nach Lagerung über einen Zeitraum 12 Wochen bei einer Temperatur von 0 bis 40 °C gewährleistet, bevorzugt höchstens 75 Gew.-% und besonders bevorzugt höchstens 70 Gew.-%;
• einen Anteil an kovalent gebundenen Feststoffen bezogen auf die Gesamtmasse der Kapselwand im Bereich von mindestens 60 Gew.-%, bevorzugt von mindestens 70 Gew.-% und besonders bevorzugt von mindestens 80 Gew.-%.

**14.** Verwendung eines Mittels nach einem der Ansprüche 1 bis 13 als Wasch- oder Reinigungsmittel oder als kosmetisches Mittel.

**15.** Verwendung nach Anspruch 14, wobei das Mittel ein Wasch- oder Reinigungsmittel ist und zum Waschen von Textilien oder Reinigen von harten Oberflächen eingesetzt wird.

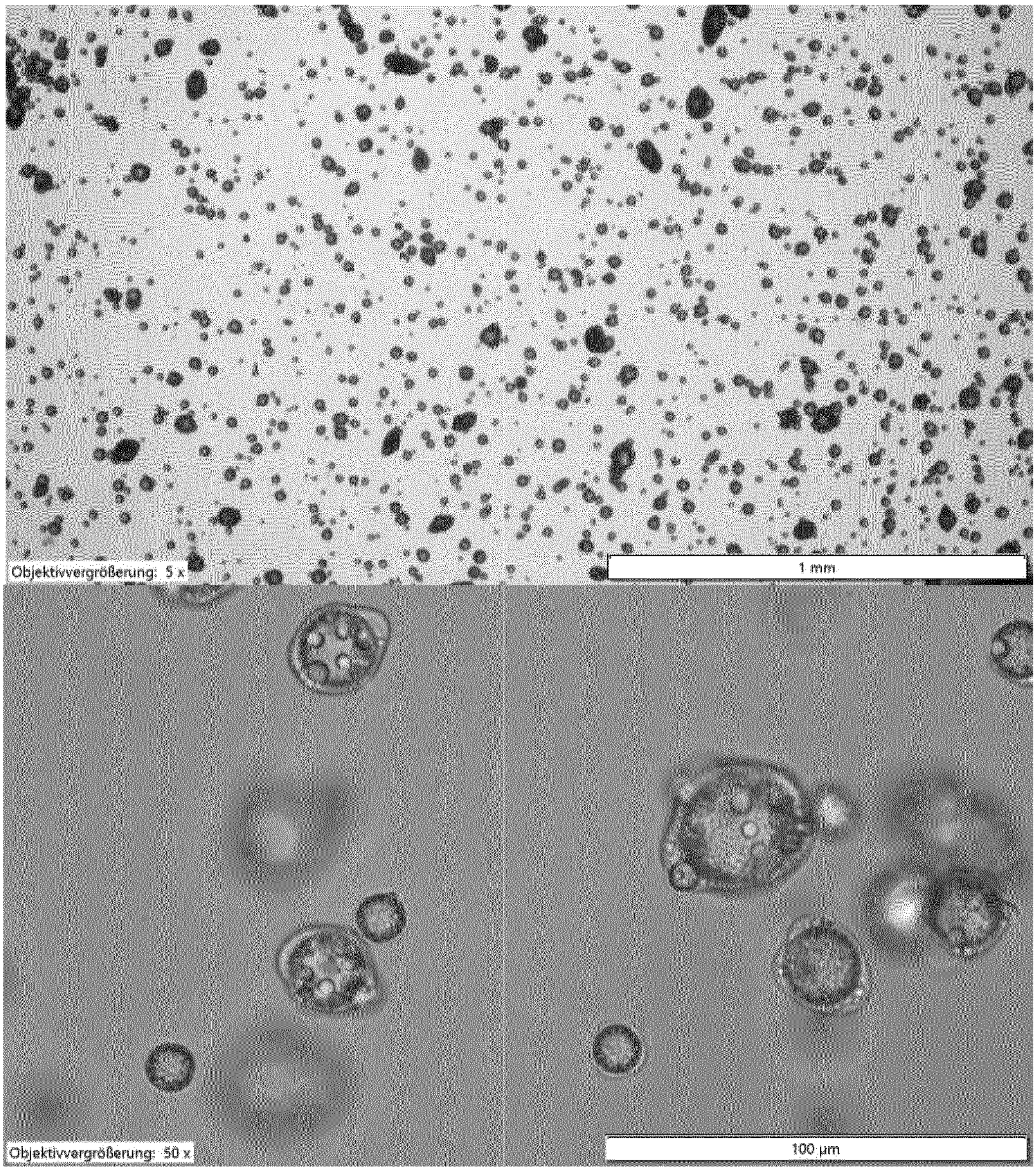
Objektivvergrößerung: 5 x
1 mm
Objektivvergrößerung: 50 x
100 µm

Fig 1A

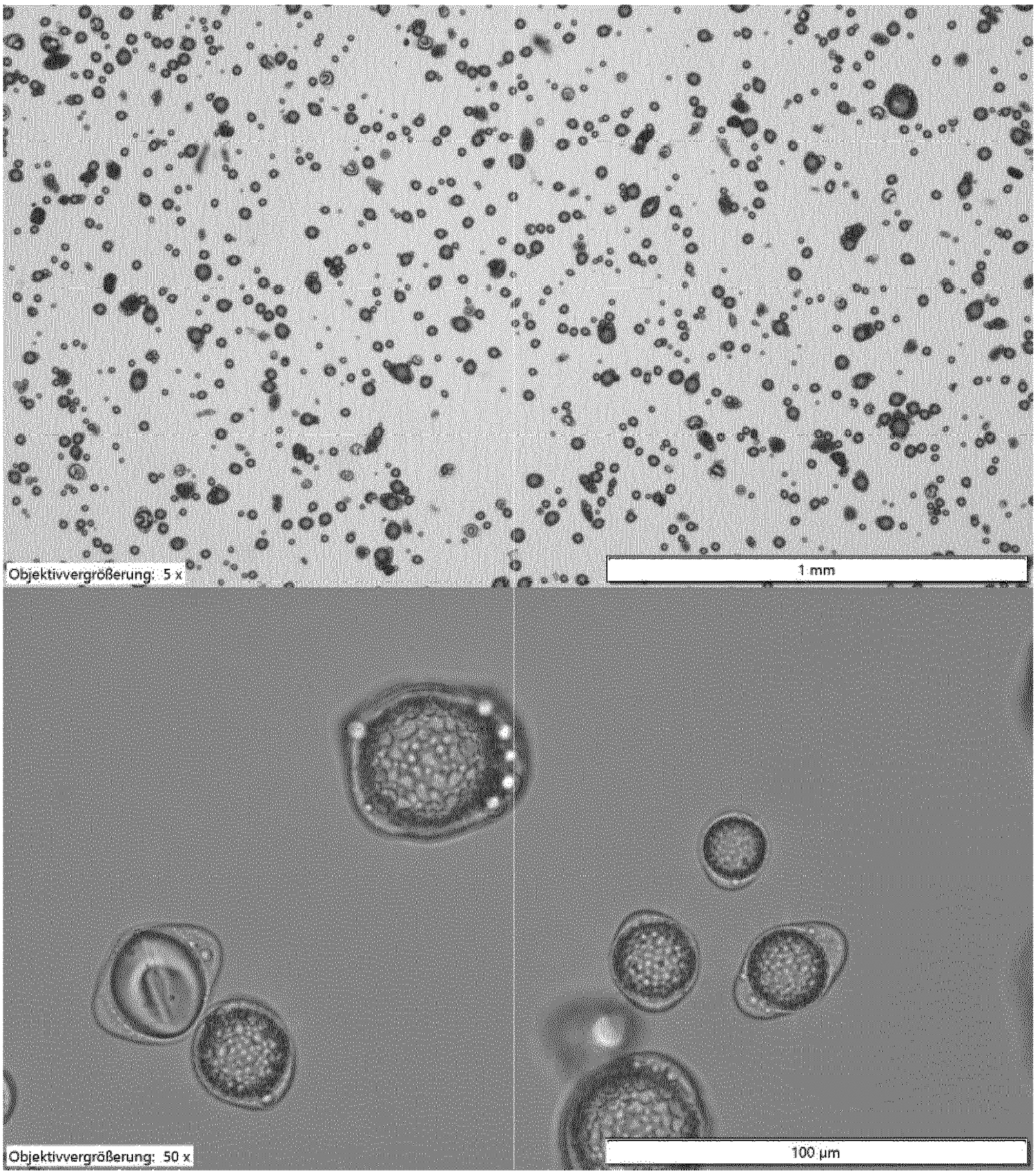
Objektivvergrößerung: 5 x
1 mm
Objektivvergrößerung: 50 x
100 µm

Fig 1B

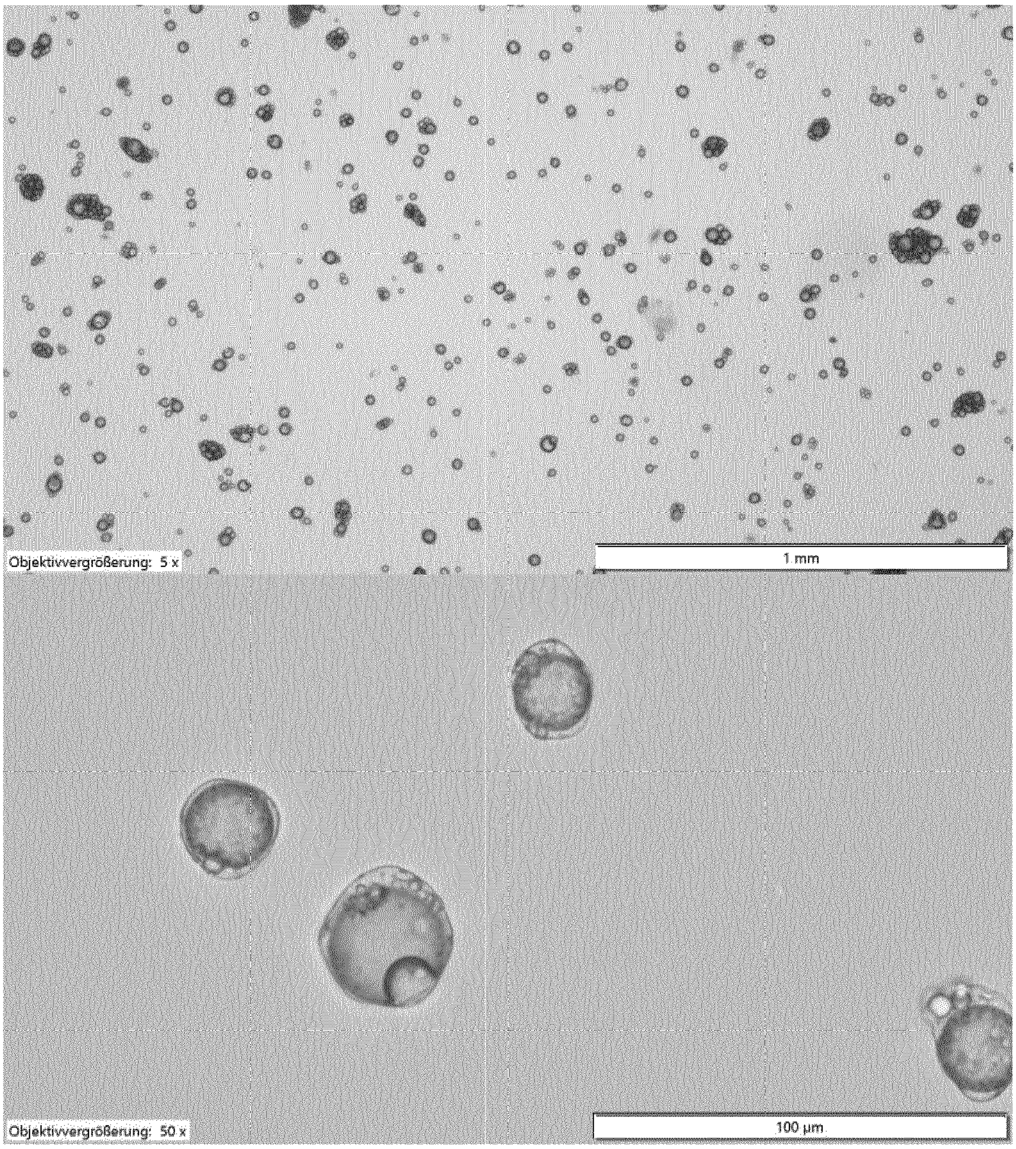
Objektivvergrößerung: 5 x
1 mm
Objektivvergrößerung: 50 x
100 µm

Fig 1C

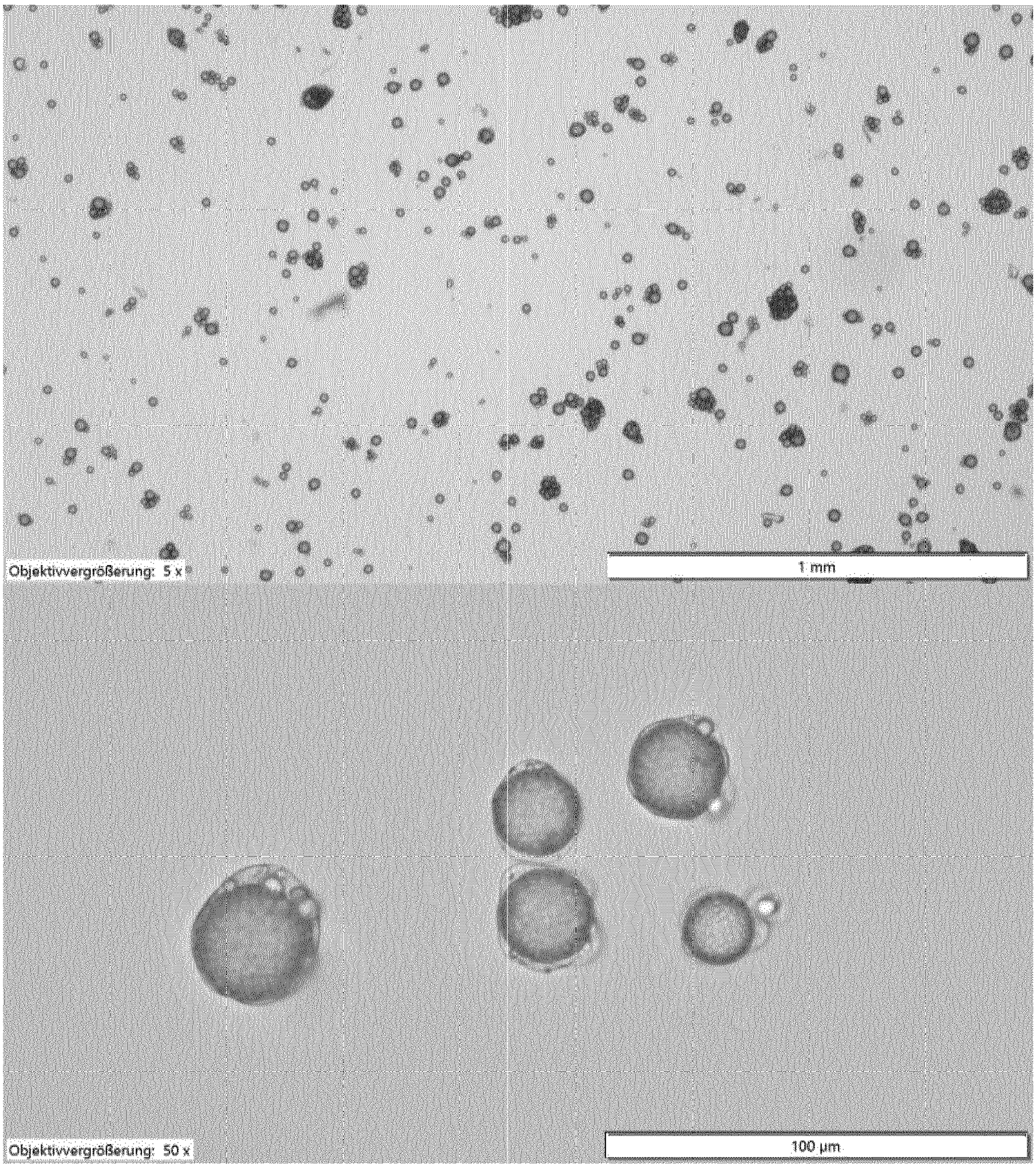
Objektivvergrößerung: 5 x
1 mm
Objektivvergrößerung: 50 x
100 µm

Fig 1D

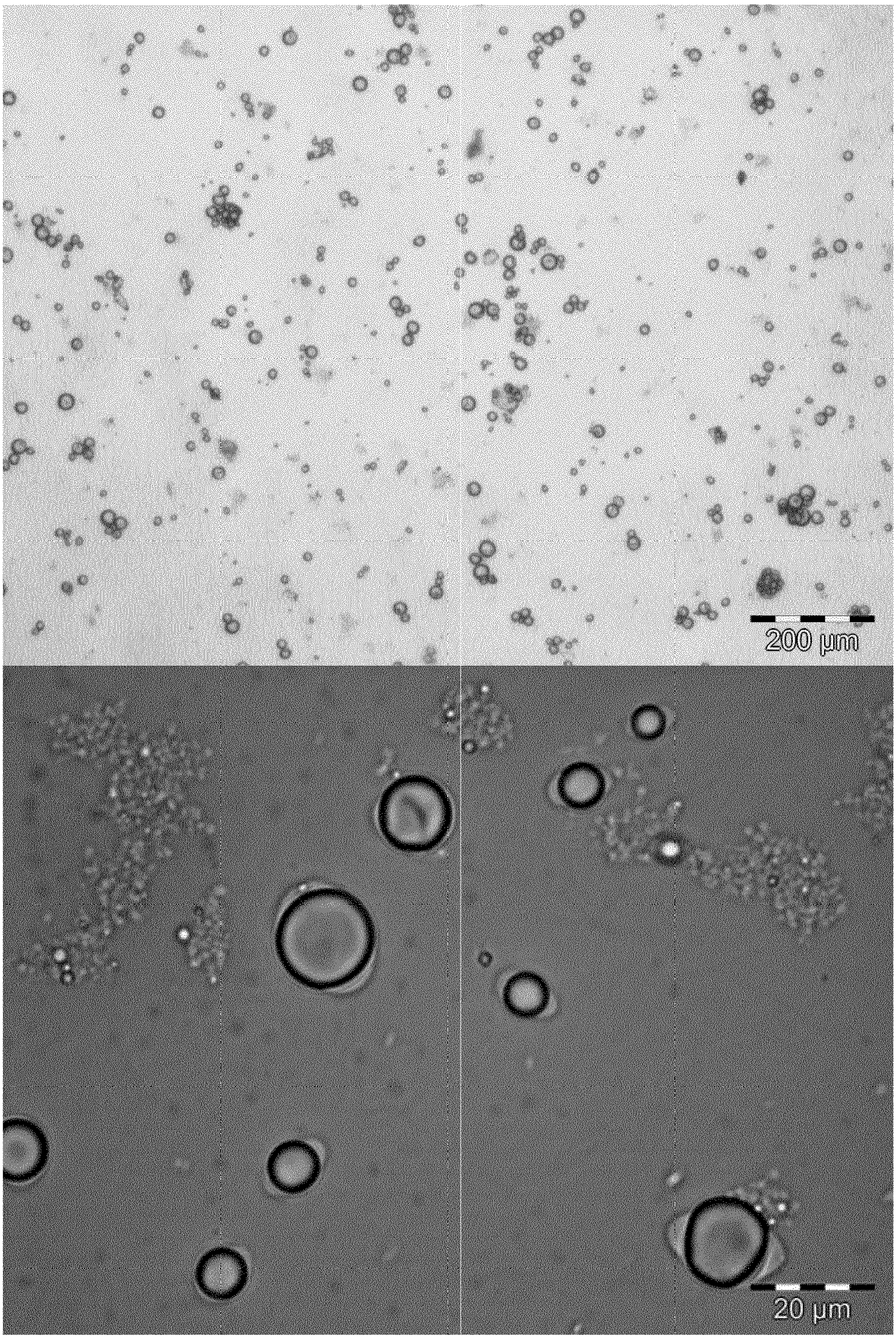


Fig 1E

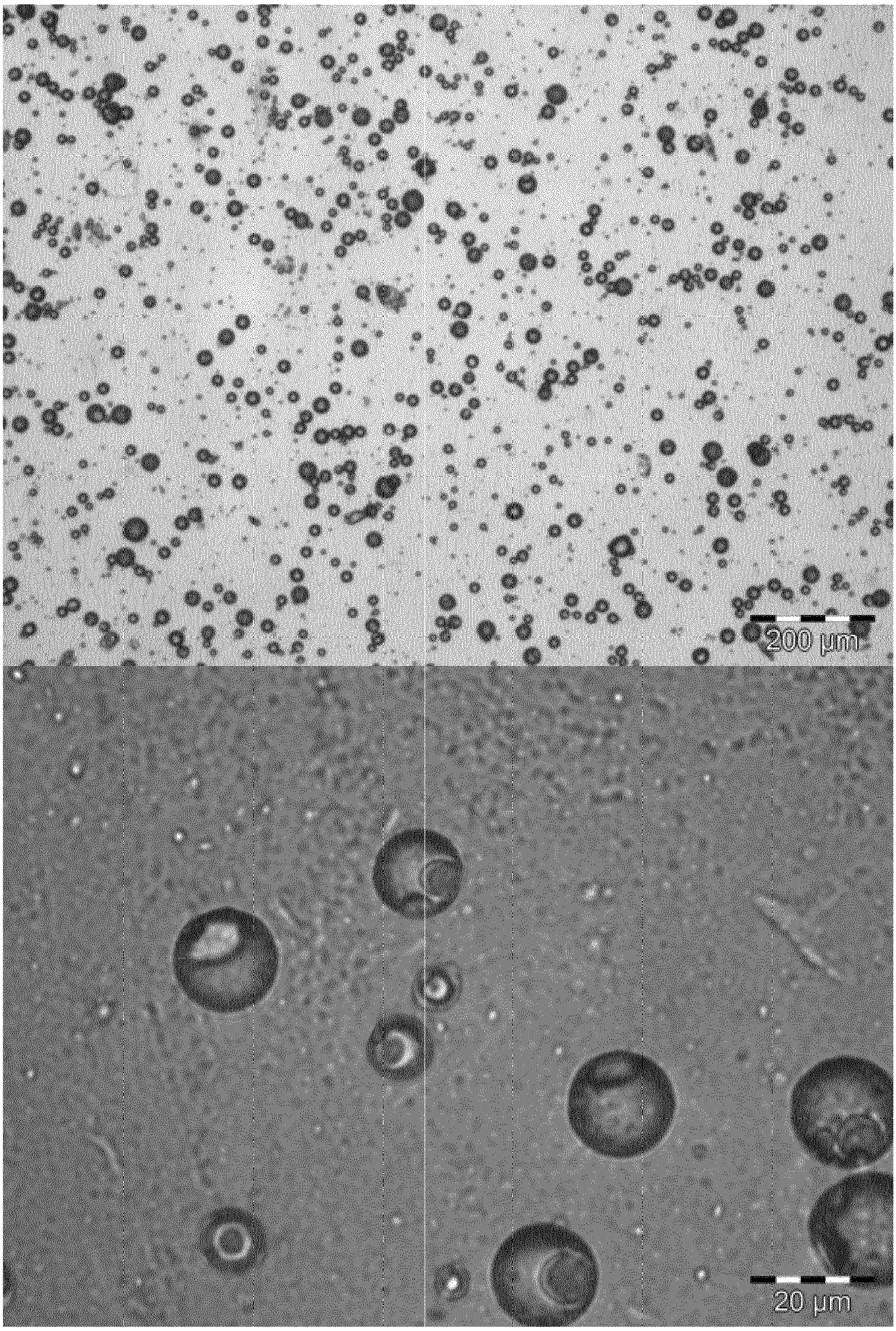


Fig 1F

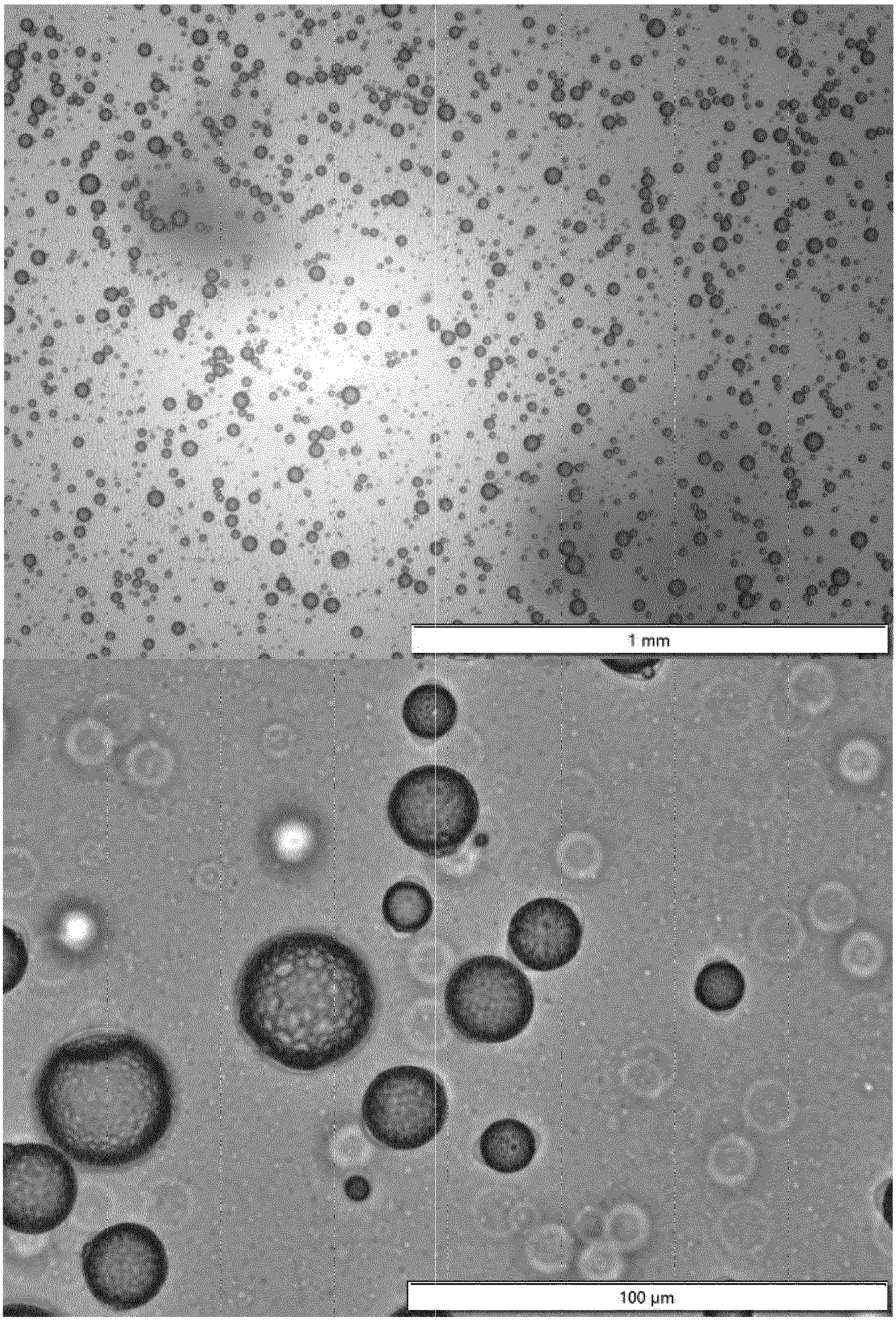


Fig 1G

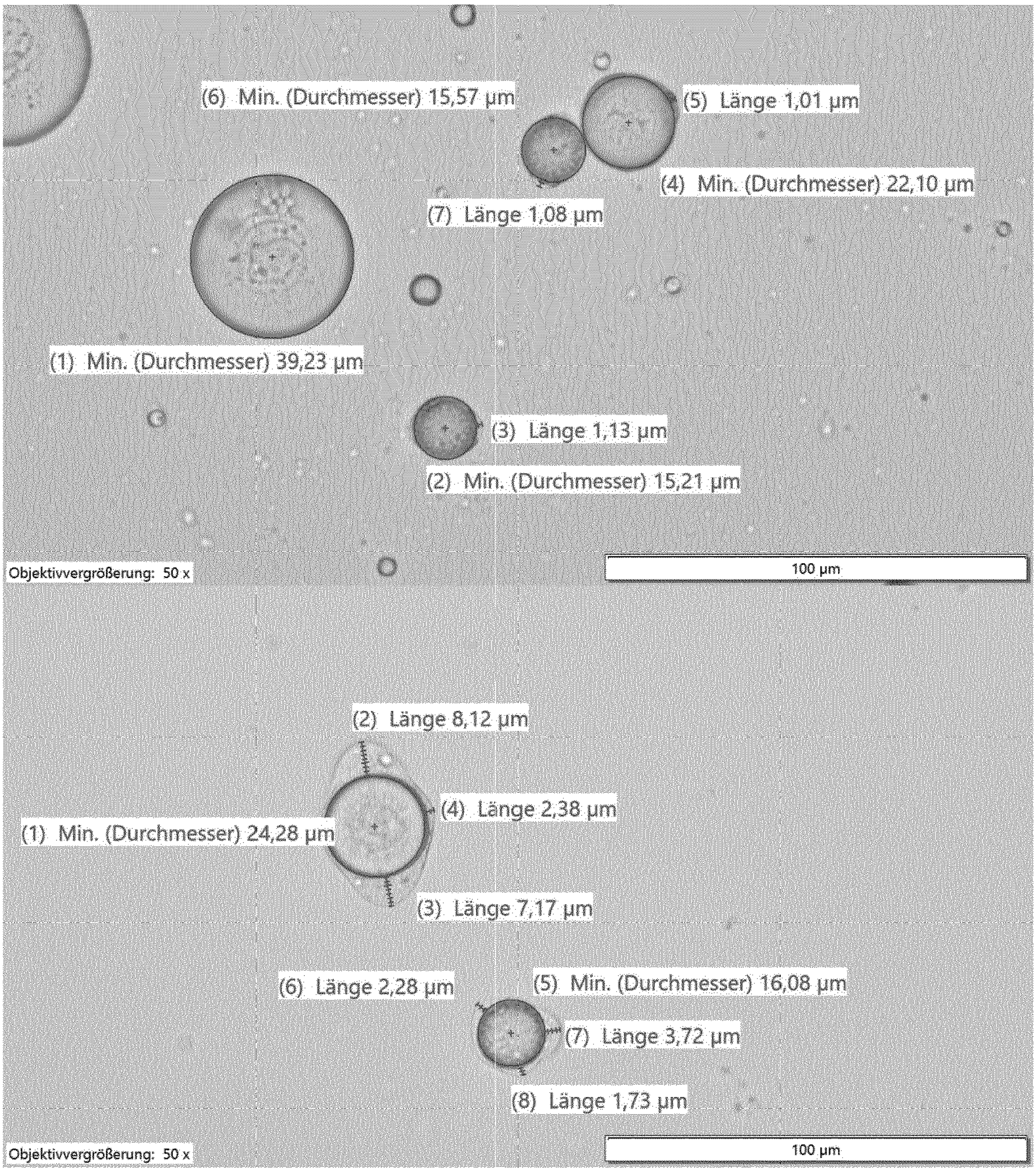
(6) Min. (Durchmesser) 15,57 µm
(5) Länge 1,01 µm
(4) Min. (Durchmesser) 22,10 µm
(7) Länge 1,08 µm
(1) Min. (Durchmesser) 39,23 µm
(3) Länge 1,13 µm
(2) Min. (Durchmesser) 15,21 µm
Objektivvergrößerung: 50 x
100 µm
(2) Länge 8,12 µm
(4) Länge 2,38 µm
(1) Min. (Durchmesser) 24,28 µm
(3) Länge 7,17 µm
(6) Länge 2,28 µm
(5) Min. (Durchmesser) 16,08 µm
(7) Länge 3,72 µm
(8) Länge 1,73 µm
Objektivvergrößerung: 50 x
100 µm

Fig 2

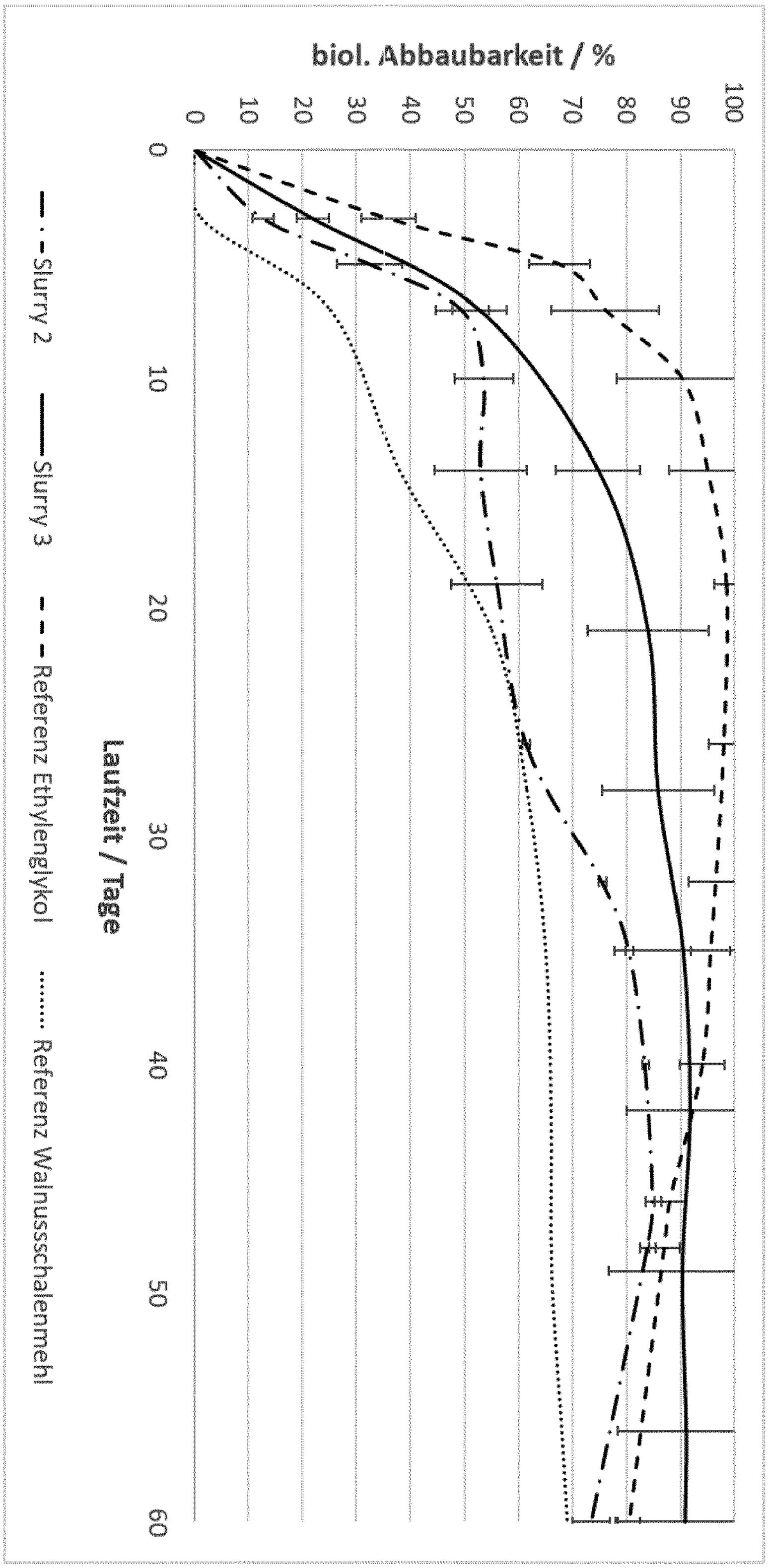
biol. Abbaubarkeit / %
0
10
20
30
40
50
60
70
80
90
100
0
10
20
30
40
50
60
Laufzeit / Tage
Slurry 2
Slurry 3
Referenz Ethylenglykol
Referenz Walnussschalenmehl

Fig 3A

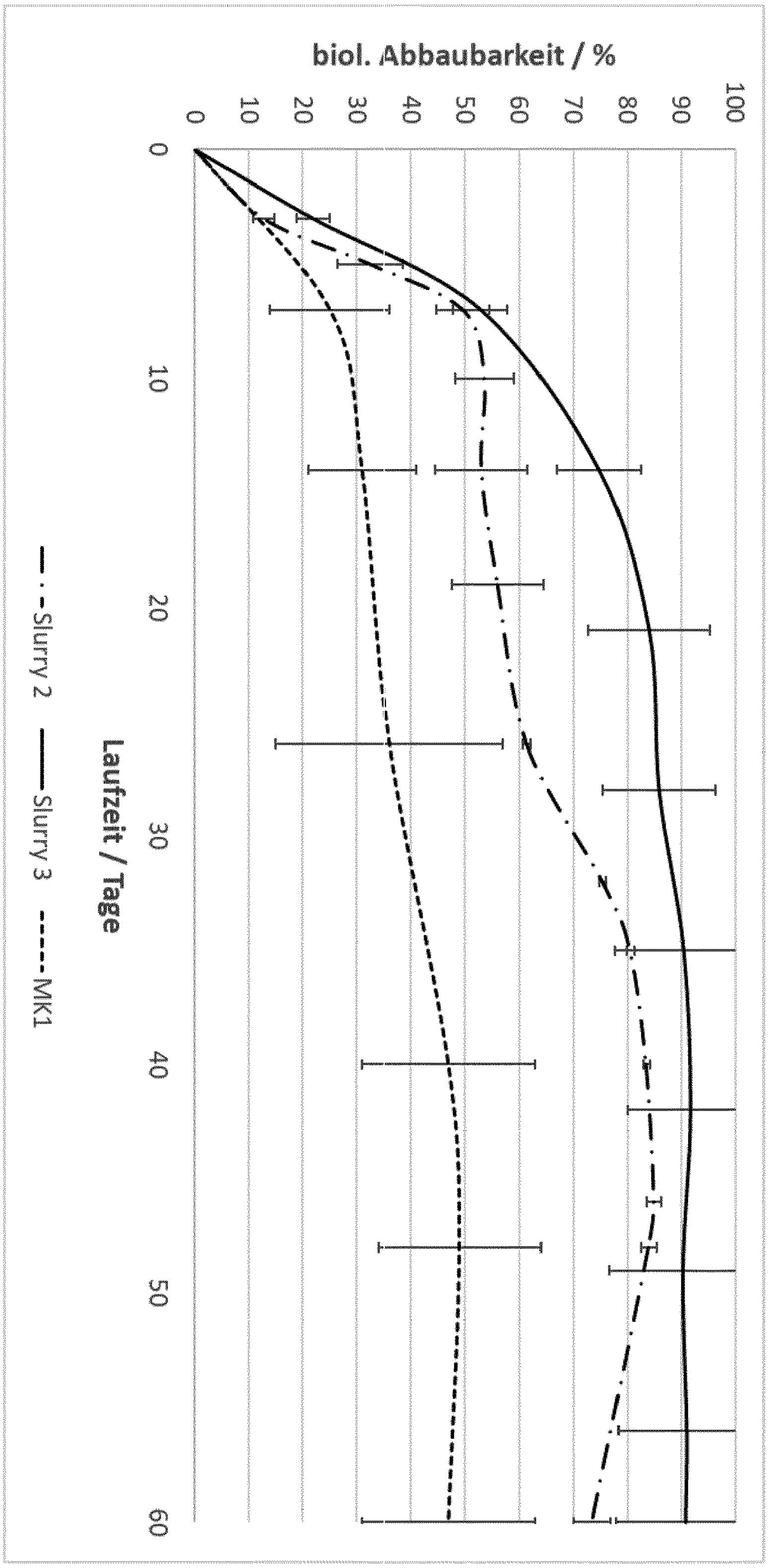


Fig 3B

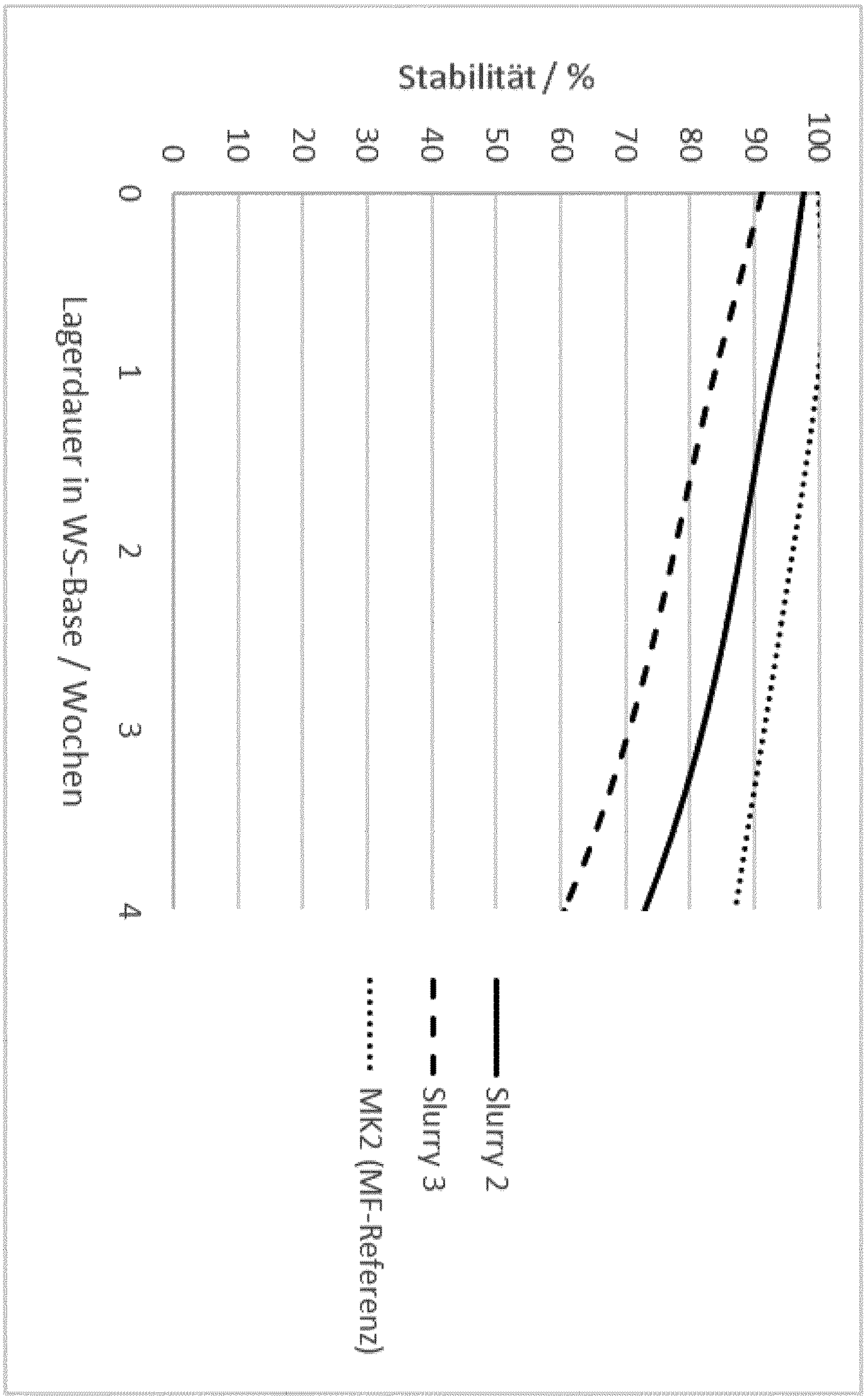
Stabilität / %
100
90
80
70
60
50
40
30
20
10
0
0
1
2
3
4
Lagerdauer in WS-Base / Wochen
Slurry 2
Slurry 3
MK2 (MF-Referenz)

Fig 4A

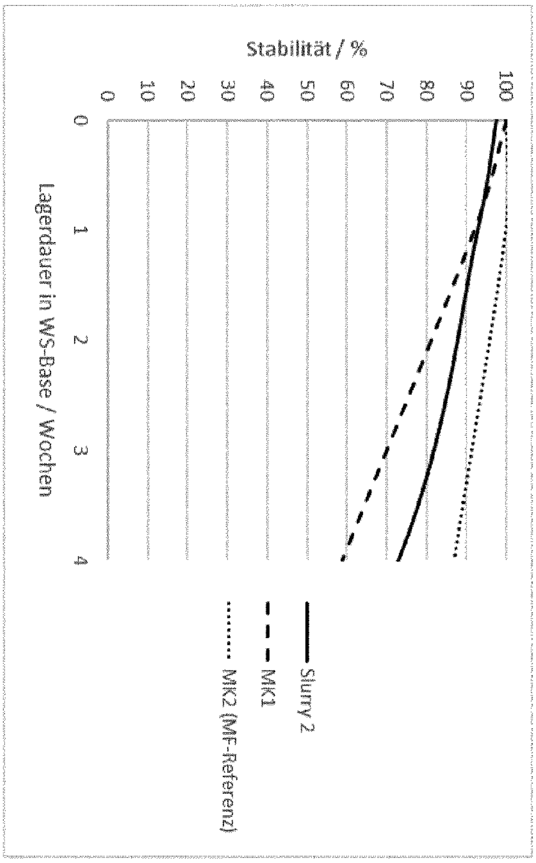

Stabilität / %
0
10
20
30
40
50
60
70
80
90
100
0
1
2
3
4
Lagerdauer in WS-Base / Wochen
Slurry 2
MK1
MK2 (MF-Referenz)


Fig 4B

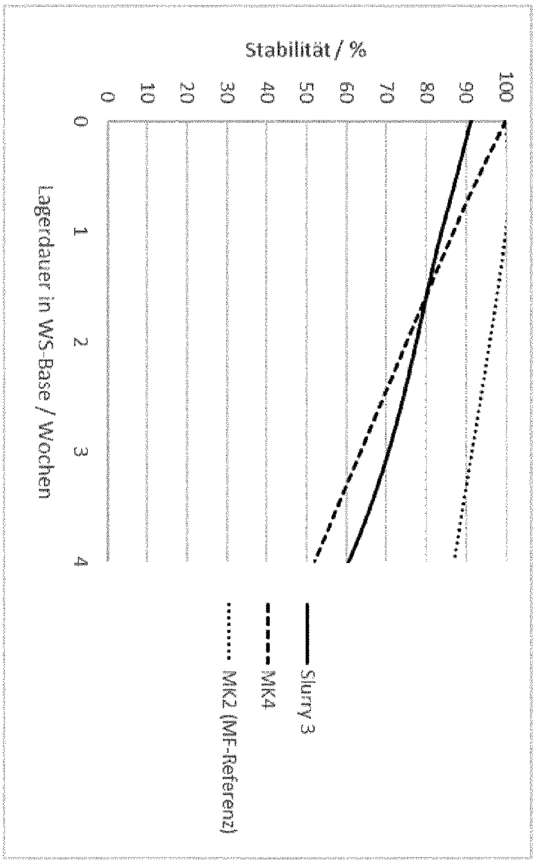

Stabilität / %
0
10
20
30
40
50
60
70
80
90
100
0
1
2
3
4
Lagerdauer in WS-Base / Wochen
Slurry 3
MK4
MK2 (MF-Referenz)


Fig 4C

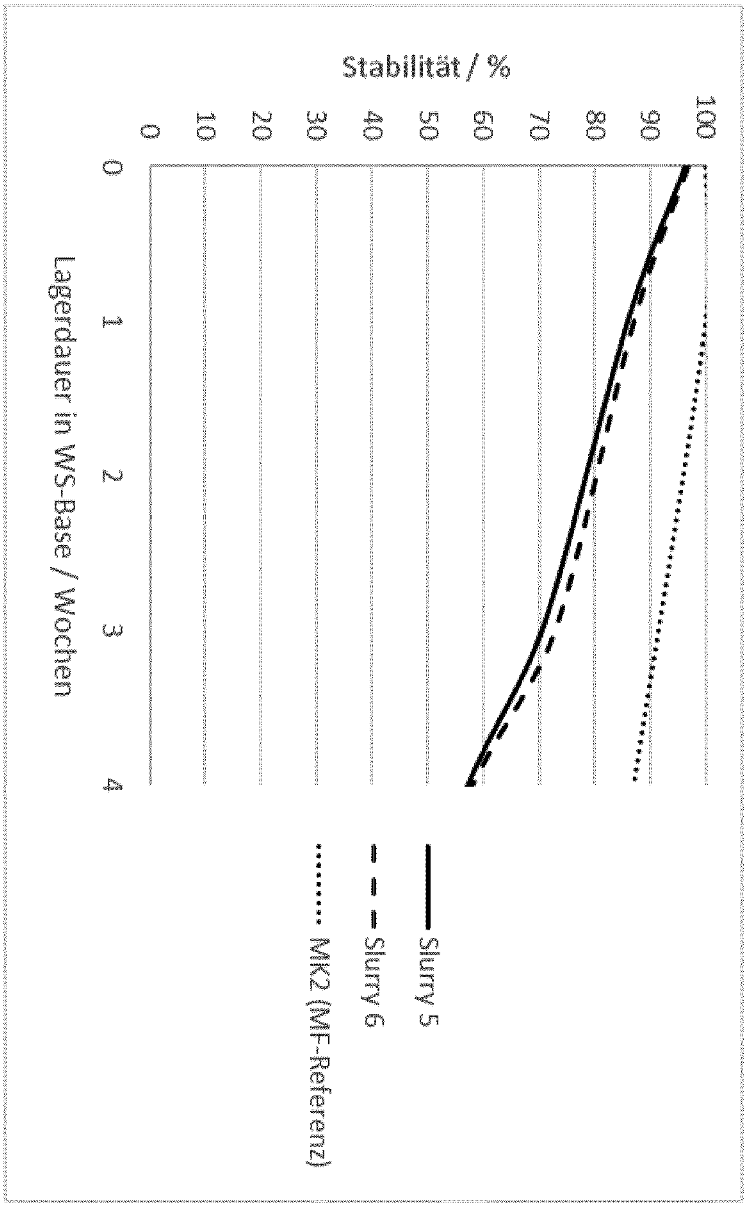
Stabilität / %
100
90
80
70
60
50
40
30
20
10
0
0
1
2
3
4
Lagerdauer in WS-Base / Wochen
Slurry 5
Slurry 6
MK2 (MF-Referenz)

Fig 4D

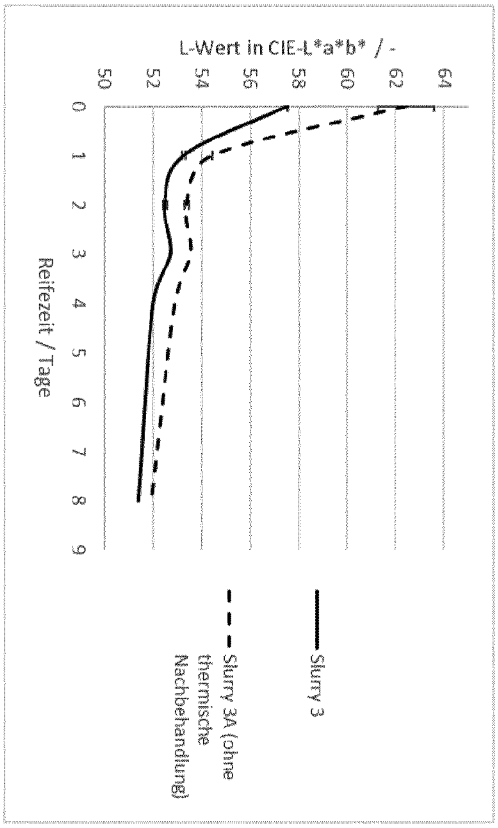


Fig 5A

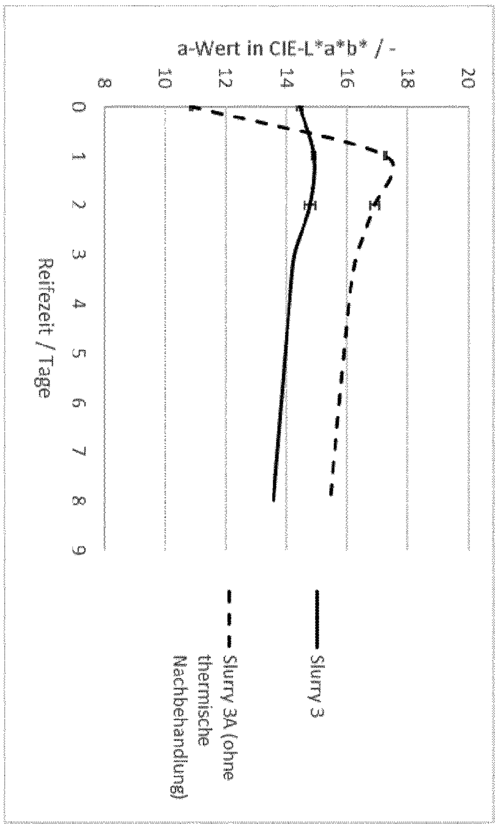


Fig 5B

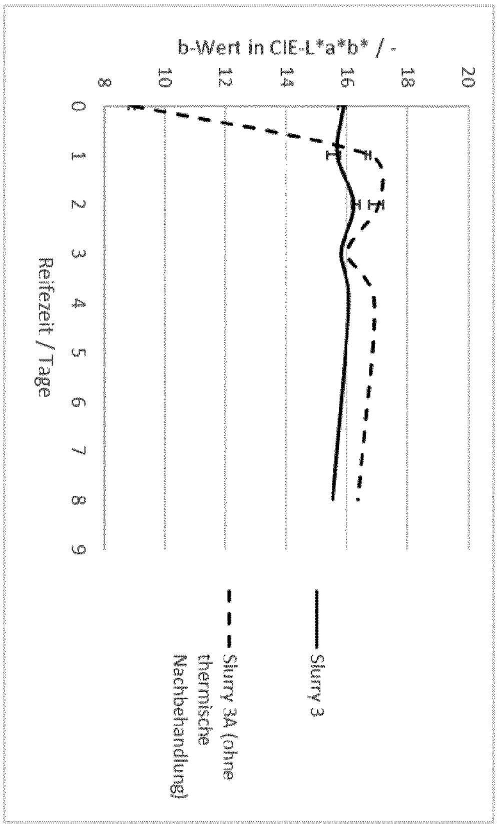


Fig 5C

Europäisches Patentamt
European Patent Office
Office européen des brevets

# EUROPÄISCHER RECHERCHENBERICHT

Nummer der Anmeldung
EP 21 17 9043

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2015/031418 A1 (PROCTER & GAMBLE [US]) 5. März 2015 (2015-03-05)<br>* Ansprüche 1-2, 6, 14-15 *<br>* Seite 27, Zeile 15 - Zeile 27 *<br>* Seite 40, Zeile 16 - Zeile 20 *<br>----- | 1-15 | INV.<br>B01J13/14<br>B01J13/22<br>C11D3/50 |
| A | US 2020/360889 A1 (ORTAIS YVES [FR] ET AL) 19. November 2020 (2020-11-19)<br>* das ganze Dokument *<br>----- | 1-15 | |
| A | WO 2020/131879 A2 (INT FLAVORS & FRAGRANCES INC [US]) 25. Juni 2020 (2020-06-25)<br>* das ganze Dokument *<br>----- | 1-15 | |
| A | WO 02/060573 A2 (HENKEL KGAA [DE]; DREJA MICHAEL [DE] ET AL.) 8. August 2002 (2002-08-08)<br>* das ganze Dokument *<br>----- | 1-15 | |
| | | | RECHERCHIERTE SACHGEBIETE (IPC) |
| | | | B01J<br>C11D |

Der vorliegende Recherchenbericht wurde für alle Patentansprüche erstellt

2

| Recherchenort | Abschlußdatum der Recherche | Prüfer |
|---|---|---|
| Den Haag | 21. November 2021 | Tarallo, Anthony |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 17 9043

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2021

| Im Recherchenbericht angeführtes Patentdokument | Datum der Veröffentlichung | Mitglied(er) der Patentfamilie | Datum der Veröffentlichung |
|---|---|---|---|
| WO 2015031418 A1 | 05-03-2015 | CA 2918844 A1 | 05-03-2015 |
| | | CN 105492588 A | 13-04-2016 |
| | | EP 3039114 A1 | 06-07-2016 |
| | | WO 2015031418 A1 | 05-03-2015 |
| US 2020360889 A1 | 19-11-2020 | US 2020360889 A1 | 19-11-2020 |
| | | WO 2020229744 A1 | 19-11-2020 |
| WO 2020131879 A2 | 25-06-2020 | CN 113438939 A | 24-09-2021 |
| | | CN 113453656 A | 28-09-2021 |
| | | EP 3897523 A2 | 27-10-2021 |
| | | EP 3897524 A2 | 27-10-2021 |
| | | WO 2020131875 A2 | 25-06-2020 |
| | | WO 2020131879 A2 | 25-06-2020 |
| WO 02060573 A2 | 08-08-2002 | AU 2002250858 A1 | 12-08-2002 |
| | | DE 10104841 A1 | 12-09-2002 |
| | | WO 02060573 A2 | 08-08-2002 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2800457 A
- WO 2009126742 A1
- WO 2015014628 A1
- EP 2689835 A1
- WO 2018114056 A1
- WO 2014016395 A1
- WO 2011075425 A1
- WO 2011120772 A1
- WO 2014032920 A1
- WO 201079466 A2
- WO 2014036082 A2
- WO 2017143174 A1
- WO 2014044840 A1
- WO 2010003762 A1
- EP 2020085804 W
- EP 0562344 B1
- WO 2013037575 A1
- EP 2638139 A1
- EP 3110393 B1


### In der Beschreibung aufgeführte Nicht-Patentliteratur


- **M. BENDER et al.** *J. Am. Chem. Soc.,* 1966, vol. 88 (24), 5890-5913